(19) Europäisches Patentamt
European Patent Office
Office européen des brevets

(11) EP 2 096 781 A1

(12) EUROPEAN PATENT APPLICATION
published in accordance with Art. 153(4) EPC

(43) Date of publication:
02.09.2009 Bulletin 2009/36

(51) Int Cl.:
H04J 15/00 (0000.00)     H04B 7/04 (2006.01)
H04B 7/10 (2006.01)      H04B 7/26 (2006.01)
H04L 12/28 (2006.01)

(21) Application number: 07849913.4

(22) Date of filing: 21.11.2007

(86) International application number:
PCT/JP2007/072998

(87) International publication number:
WO 2008/062902 (29.05.2008 Gazette 2008/22)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 21.11.2006  JP 2006314893
20.11.2007  JP 2007325251

(71) Applicants:
• Yokogawa Electric Corporation
Musashino-shi
Tokyo 180-89750 (JP)
• Tokyo Institute of Technology
Tokyo 152-8550 (JP)

(72) Inventors:
• SAKAGUCHI, Kei
Tokyo 152-8550 (JP)
• ONO, Fumie
Tokyo 152-0035 (JP)
• SHIMADA, Shusaku
Musashino-Shi
Tokyo 180-8750 (JP)

(74) Representative: Hooiveld, Arjen Jan Winfried et al
Arnold & Siedsma
Sweelinckplein 1
2517 GK Den Haag (NL)

(54) MIMO MESH NETWORK

(57) The present invention provides MIMO mesh networks which construct wireless networks with fast transmission rate and high reliability by applying MIMO technology to relay nodes.

A MIMO mesh network having multiple relay nodes in which each relay node has multiple antennas and a wireless network is constructed by setting up wireless links between the relay nodes, the MIMO mesh network **characterized in that** the MIMO multiple access and the MIMO broadcast are alternately linked, the receiving-interference avoidance and the transmitting interference avoidance are performed, and at the same time the spectrum efficiency of the whole network is improved by multiplex transmitting a second wireless link as well as a first wireless link in each relay node.

**Description**

TECHNICAL FIELD

The present invention relates to MIMO mesh networks using MIMO (Multiple Input Multiple Output) technology.

BACKGROUND TECHNIQUE

It is possible to easily construct a wide area wireless network by arranging wireless nodes with the relay function (relay nodes) in the shape of mesh and setting up wireless links between relay nodes in a mesh network (see Non-Patent Document 1) .

However, since there are multiple relay nodes in the same network, interferences between wireless links occur and there is a problem such as degradation of transmission quality (see Non-Patent Document 2).

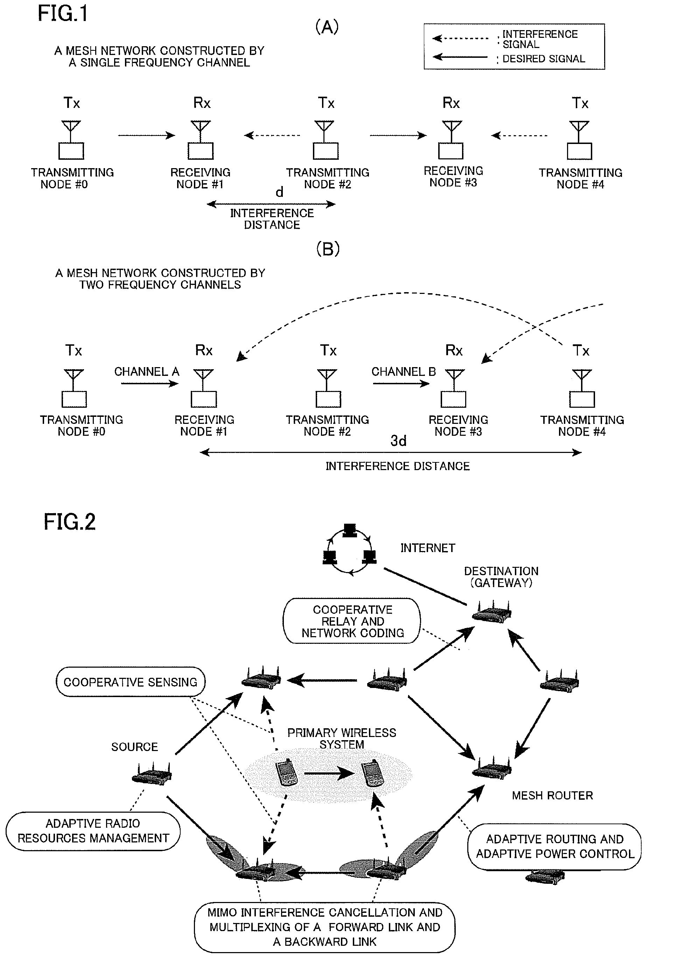

Here, we explain problems of conventional mesh networks by using one-dimensional mesh networks (multi-hop networks) shown in FIG.1 as specific examples.

FIG.1(A) is a specific example which constructs a mesh network by a single frequency channel. In this case, the backward link of adjacent transmitting node generates an interference and we call this interference distance as "d".

Meanwhile, FIG.1(B) is a specific example which constructs a mesh network by two frequency channels (i.e. channel A and channel B). In this case, since adjacent transmitting nodes use different channels, it is possible to widen the interference distance to "3d", at the same time the spectral efficiency is reduced to 1/2.

Therefore, interference avoidance and improvement of spectral efficiency are important research themes in mesh networks (multi-hop networks).

That is to say, it is the actual state that fast wireless networks without the degradation of transmission quality (i.e. with high reliability) are not realized.

DISCLOSURE OF THE INVENTION

That is to say, the present invention has been developed in view of the above described circumstances, and an object of the present invention is to provide MIMO mesh networks which construct wireless networks with fast transmission rate and high reliability by applying MIMO technology to relay nodes.

The present invention relates to a MIMO mesh network having multiple relay nodes in which said each relay node has multiple antennas and a wireless network is constructed by setting up wireless links between said relay nodes. The above object of the present invention is effectively achieved by the construction that the MIMO multiple access and the MIMO broadcast are alternately linked, the receiving-interference avoidance and the transmitting interference avoidance are performed, and at the same time the spectrum efficiency of the whole network is improved by multiplex transmitting a second wireless link as well as a first wireless link in said each relay node.

Further, the above object of the present invention is also effectively achieved by the construction that said MIMO mesh network uses the linear ZF algorithm, among said relay nodes, with respect to a receiving node, a first transmitting node and a second transmitting node that are adjacent to said receiving node via said first wireless link and said second wireless link are regarded as a MIMO multiple access system with multiple antennas, the purpose of the MIMO algorithm in said receiving node is to receive the signal from said second transmitting node while avoiding the receiving-interference from said first transmitting node, and receive the signal from said first transmitting node while avoiding the receiving-interference from said second transmitting node, when transmitting weights of said first transmitting node and said second transmitting node are given in $\mathbf{w}_{10}^{t} \in \mathrm{C}^{M}$, $\mathbf{w}_{12}^{t} \in \mathrm{C}^{M}$ respectively, a receiving signal vector $\mathbf{y}_1 \in \mathrm{C}^M$ of said receiving node can be represented by the following Expression,

$$\mathbf{y}_1 = \mathbf{H}_{10}\mathbf{w}_{10}^{t}s_{10} + \mathbf{H}_{12}\mathbf{w}_{12}^{t}s_{12} + \mathbf{n}_1 = \left[\begin{array}{cc} \mathbf{h}_{10}^{t} & \mathbf{h}_{12}^{t} \end{array}\right]\mathbf{s}_1 + \mathbf{n}_1$$

where, M is the number of antennas of said each relay node, $s_{10}$ and $s_{12}$ are the transmitting signals of said first transmitting node and said second transmitting node, $\mathbf{s}_1 = [s_{10}\ s_{12}]^{T} \in \mathrm{C}^2$ represents a vector notation, $\mathbf{H}_{ij} \in \mathrm{C}^{M \times M}$ is a channel matrix from a node #j to a node #i, $\mathbf{h}_{ij}^{t} = \mathbf{H}_{ij}\mathbf{w}_{ij}^{t} \in \mathrm{C}^{M}$ represents a channel vector, it is possible to receive the signal from said first transmitting node while avoiding the receiving-interference from said second transmitting node by using $\mathbf{w}_{10}^{r} = \left(\mathbf{h}_{12}^{t}\right)^{\perp} \in C^{M}$ that is orthogonal to a channel vector $\mathbf{h}_{12}^{t}$ as the receiving weight of said receiving node, at the same time, it is possible to realize a FB multiplexing of said first wireless link and said second wireless link by using $\mathbf{w}_{12}^{r} = \left(\mathbf{h}_{10}^{t}\right)^{\perp} \in C^{M}$ that is orthogonal to a channel vector $\mathbf{h}_{10}^{t}$ as the receiving weight of said receiving node.

Further, the above object of the present invention is also effectively achieved by the construction that said MIMO mesh network uses the linear ZF algorithm, among said relay nodes, with respect to a transmitting node, a first receiving node and a second receiving node that are adjacent to said transmitting node via said first wireless link and said second wireless link are regarded as a MIMO broadcast system with multiple antennas, the purpose of the MIMO algorithm in said transmitting node is to transmit the signal to said second receiving node while avoiding the transmitting-interference to said first receiving node, and transmit the signal to said first receiving node while avoiding the transmitting-interference to said second receiving node, when receiving weights of said first receiving node and said second receiving node are given in $\mathbf{w}_{12}^{r} \in C^{M}, \mathbf{w}_{32}^{r} \in C^{M}$ respectively, a receiving signal of said first receiving node can be represented by the following Expression,

$$y_1 = \mathbf{w}_{12}^{r}{}^{H}\mathbf{H}_{12}\mathbf{x}_2 + \mathbf{n}_1$$

a receiving signal of said second receiving node can be represented by the following Expression,

$$y_3 = \mathbf{w}_{32}^{r}{}^{H}\mathbf{H}_{32}\mathbf{x}_2 + \mathbf{n}_3$$

where, $\mathbf{x}_2 \in C^M$ is a transmitting signal vector of said transmitting node, when the vector notation is adopted by using $\mathbf{y}_2 = [y_1\ y_3]^T \in C^2$, the following Expression holds,

$$\mathbf{y}_2 = \left[\begin{matrix} \mathbf{h}_{12}^{r} & \mathbf{h}_{32}^{r} \end{matrix}\right]^{T}\mathbf{x}_2 + \mathbf{n}_2$$

where, $\mathbf{h}_{ij}^{r}{}^{T} = \mathbf{w}_{ij}^{r}{}^{H}\mathbf{H}_{ij} \in C^{1 \times M}$ represents a vector notation, it is possible to transmit the signal to said second receiving node while avoiding the transmitting-interference to said first receiving node by using $\mathbf{w}_{32}^{t} = \left(\mathbf{h}_{12}^{r}{}^{*}\right)^{\perp} \in C^{M}$ that is orthogonal to a channel vector $\mathbf{h}_{12}^{r}{}^{*}$ as the transmitting weight of said transmitting node, at the same time, it is possible to realize a FB multiplexing of said first wireless link and said second wireless link by using $\mathbf{w}_{12}^{t} = \left(\mathbf{h}_{32}^{r}{}^{*}\right)^{\perp} \in C^{M}$ that is orthogonal to a channel vector $\mathbf{h}_{32}^{r}{}^{*}$ as the transmitting weight of said transmitting node.

Further, the above object of the present invention is also effectively achieved by the construction that said MIMO mesh network uses the nonlinear SIC/DPC algorithm, among said relay nodes, with respect to a receiving node, a first transmitting node and a second transmitting node that are adjacent to said receiving node via said first wireless link and said second wireless link are regarded as a MIMO multiple access system with multiple antennas, the purpose of the MIMO algorithm in said receiving node is to multiplex and receive the signals from said first transmitting node and said second transmitting node while avoiding the receiving-interference by using the SIC algorithm that is a nonlinear receiving scheme, in the SIC algorithm, in a receiving signal of said receiving node, firstly, a signal $s_{12}$ from said second transmitting node is detected, and then a signal $s_{10}$ from said first transmitting node is received while avoiding the receiving-interference by subtracting said detected signal $s_{12}$ from said receiving signal, here, when the receiving weight for said signal $s_{12}$ from said second transmitting node is represented by $\mathbf{w}_{12}^{r} = \left( \mathbf{h}_{10}^{t} \right)^{\perp}$, and the receiving weight for said signal $s_{10}$ from said first transmitting node is represented by $\mathbf{w}_{10}^{r} = \left( \mathbf{h}_{10}^{t} \right)^{\parallel}$, an output signal vector $\tilde{\mathbf{y}}_1$ of this time can be represented by the following Expression,

$$\tilde{\mathbf{y}}_1 = \begin{bmatrix} \mathbf{w}_{10}^{r} & \mathbf{w}_{12}^{r} \end{bmatrix}^{H} \mathbf{y}_1 = \begin{bmatrix} h_{10}^{e} & h_{12}^{i} \\ 0 & h_{12}^{e} \end{bmatrix} \mathbf{s}_1 + \tilde{\mathbf{n}}_1$$

where $h_{12}^{i}$ represents the interference from said second transmitting node, therefore, firstly $\hat{s}_{12}$ represented by the following Expression is detected,

$$\hat{s}_{12} = \frac{1}{h_{12}^{e}} [\tilde{\mathbf{y}}_1]_2$$

and then it is possible to detect $\hat{s}_{10}$ by performing the receiving-interference avoidance basing on the following Expression,

$$\hat{s}_{10} = \frac{1}{h_{10}^{e}} \left( [\tilde{\mathbf{y}}_1]_1 - h_{12}^{i} \hat{s}_{12} \right)$$

this can realize the receiving-interference avoidance and a FB multiplexing of said first wireless link and said second wireless link.

Further, the above object of the present invention is also effectively achieved by the construction that said MIMO mesh network uses the nonlinear SIC/DPC algorithm, among said relay nodes, with respect to a transmitting node, a first receiving node and a second receiving node that are adjacent to said transmitting node via said first wireless link and said second wireless link are regarded as a MIMO broadcast system with multiple antennas, the purpose of the MIMO algorithm in said transmitting node is to multiplex and transmit the signals to said first receiving node and said second receiving node while avoiding the transmitting-interference by using the DPC algorithmthat is a nonlinear transmitting scheme, when receiving weights of said first receiving node and said second receiving node are given in $\mathbf{w}_{12}^{r} \in \mathbf{C}^{M}, \mathbf{w}_{32}^{r} \in \mathbf{C}^{M}$ respectively, a receiving signal of said first receiving node can be represented by the following Expression,

$$y_1 = \mathbf{w}_{12}^{r}{}^{H} \mathbf{H}_{12} \mathbf{x}_2 + n_1$$

a receiving signal of said second receiving node can be represented by the following Expression,



$$y_3 = \mathbf{w}_{32}^{r\,H} \mathbf{H}_{32}\mathbf{x}_2 + \mathbf{n}_3$$

where, $\mathbf{x}_2 \in C^M$ is a transmitting signal vector of said transmitting node, when the vector notation is adopted by using $\mathbf{y}_2 = [y_1 \; y_3]^T \in C^2$, the following Expression holds,

$$\mathbf{y}_2 = \begin{bmatrix} \mathbf{h}_{12}^r & \mathbf{h}_{32}^r \end{bmatrix}^T \mathbf{x}_2 + \mathbf{n}_2$$

where, $\mathbf{h}_{ij}^{r\,T} = \mathbf{w}_{ij}^{r\,H} \mathbf{H}_{ij} \in C^{1\times M}$ is a channel vector, in the DPC algorithm, a transmitting weight

$\mathbf{w}_{32}^t = \left(\mathbf{h}_{12}^{r\,*}\right)^{\perp}$ that is orthogonal to a channel vector $\mathbf{h}_{12}^{r\,*}$ is used for $y_3$ i.e. $s_{32}$, and a transmitting weight

$\mathbf{w}_{12}^t = \left(\mathbf{h}_{12}^{r\,*}\right)^{\parallel}$ that is parallel to said channel vector $\mathbf{h}_{12}^{r\,*}$ is used for $y_1$ i.e. $s_{12}$, an output signal vector $\tilde{\mathbf{y}}_2$ of

this time can be represented by the following Expression,

$$\tilde{\mathbf{y}}_2 = \begin{bmatrix} \mathbf{h}_{12}^r & \mathbf{h}_{32}^r \end{bmatrix}^T \begin{bmatrix} \mathbf{w}_{12}^t & \mathbf{w}_{32}^t \end{bmatrix} \mathbf{s}_2 + \mathbf{n}_2 = \begin{bmatrix} h_{12}^e & 0 \\ h_{12}^i & h_{32}^e \end{bmatrix} \mathbf{s}_2 + \mathbf{n}_2$$

where, $\mathbf{s}_2 = [s_{12} \; s_{32}]^T \in C^2$ is a vector notation, $h_{12}^i$ represents the interference for $y_3$ of $s_{12}$, based on the following Expression, it is possible to avoid the transmitting-interference by subtracting this interference component from the transmitting signal of $s'_{32}$,

$$s_{32} = s'_{32} - \frac{h_{12}^i}{h_{32}^e} s_{12}$$

this can realize the transmitting-interference avoidance and a FB multiplexing of said first wireless link and said second wireless link.

Moreover, the present invention relates to a MIMO mesh network having multiple nodes with the relay function in which said each node has M MIMO antennas and a wireless network is constructed by setting up wireless links between said nodes. The above object of the present invention is effectively achieved by the construction that the interference avoidance is performed by a combination of a transmitting weight and a receiving weight, and at the same time the capacity of the entire network is improved by multiplexing and transmitting stream signals of a forward link and a backward link in said each node.

Further, the above object of the present invention is also effectively achieved by the construction that a signal model of said MIMO mesh network is formulated as follows,

$$y_i^F = y_{i(i-1)}^F + y_{i(i+1)}^F + n_i^F$$

$$y_i^{\mathrm{B}} = y_{i(i-1)}^{\mathrm{B}} + y_{i(i+1)}^{\mathrm{B}} + n_i^{\mathrm{B}}$$

where $y_i^{\mathrm{F}}, y_i^{\mathrm{B}}$ are receiving signals of the forward link and the backward link of the i-th node,

$$y_{i(i-1)}^{\mathrm{F}} = \left(\mathbf{w}_i^{\mathrm{rF}}\right)^H \mathbf{H}_{i(i-1)} \mathbf{w}_{(i-1)}^{\mathrm{tF}} s_{(i-1)}^{\mathrm{F}} + \left(\mathbf{w}_i^{\mathrm{rF}}\right)^H \mathbf{H}_{i(i-1)} \mathbf{w}_{(i-1)}^{\mathrm{tB}} s_{(i-1)}^{\mathrm{B}}$$

$$y_{i(i+1)}^{\mathrm{F}} = \left(\mathbf{w}_i^{\mathrm{rF}}\right)^H \mathbf{H}_{i(i+1)} \mathbf{w}_{(i+1)}^{\mathrm{tF}} s_{(i+1)}^{\mathrm{F}} + \left(\mathbf{w}_i^{\mathrm{rF}}\right)^H \mathbf{H}_{i(i+1)} \mathbf{w}_{(i+1)}^{\mathrm{tB}} s_{(i+1)}^{\mathrm{B}}$$

$$y_{i(i-1)}^{\mathrm{B}} = \left(\mathbf{w}_i^{\mathrm{rB}}\right)^H \mathbf{H}_{i(i-1)} \mathbf{w}_{(i-1)}^{\mathrm{tF}} s_{(i-1)}^{\mathrm{F}} + \left(\mathbf{w}_i^{\mathrm{rB}}\right)^H \mathbf{H}_{i(i-1)} \mathbf{w}_{(i-1)}^{\mathrm{tB}} s_{(i-1)}^{\mathrm{B}}$$

$$y_{i(i+1)}^{\mathrm{B}} = \left(\mathbf{w}_i^{\mathrm{rB}}\right)^H \mathbf{H}_{i(i+1)} \mathbf{w}_{(i+1)}^{\mathrm{tF}} s_{(i+1)}^{\mathrm{F}} + \left(\mathbf{w}_i^{\mathrm{rB}}\right)^H \mathbf{H}_{i(i+1)} \mathbf{w}_{(i+1)}^{\mathrm{tB}} s_{(i+1)}^{\mathrm{B}}$$

where $[\cdot]^{\mathrm{H}}$ represents a complex conjugate transposed matrix of $[\cdot]$, $s_j^{\mathrm{F}}$ and $s_j^{\mathrm{B}}$ are transmitting signals for the forward link and the backward link of the j -th node, $\mathbf{H}_{ij} \in C^{M \times M}$ is a channel matrix from the j-th node to the i-th node, $\mathbf{w}_j^{\mathrm{tF}} \in C^M$ and $\mathbf{w}_j^{\mathrm{tB}} \in C^M$ are transmitting weight vectors for the forward link and the backward link of the j-th node, $\mathbf{w}_i^{\mathrm{rF}} \in C^M$ and $\mathbf{w}_i^{\mathrm{rB}} \in C^M$ are receiving weight vectors for the forward link and the backward link of the i-th node, $n_i^{\mathrm{F}}$ and $n_i^{\mathrm{B}}$ are equivalent additive noises of the forward link and the backward link that are received in the i-th node, in the forward link, $s_{(i-1)}^{\mathrm{F}}$ is a desired signal, on the other hand in the backward link, $s_{(i+1)}^{\mathrm{B}}$ is a desired signal.

Further, the above object of the present invention is also effectively achieved by the construction that said MIMO mesh network uses the linear ZF algorithm, the transmitting weight and the receiving weight are computed in order from the first node to the last node, when attention is focused on the i-th receiving node, transmitting weights $\mathbf{w}_{(i-1)}^{\mathrm{tF}}$ and $\mathbf{w}_{(i-1)}^{\mathrm{tB}}$ of the (i-1) -th transmitting node are already computed, a system model between the (i-1)-th transmitting node and the i-th receiving node, is represented by the following Expressions by using an equivalent transmitting channel vector $\mathbf{h}_{i(i-1)}^{\mathrm{tF}} = \mathbf{H}_{i(i-1)} \mathbf{w}_{i-1}^{\mathrm{tF}} \in C^M$ and an equivalent transmitting channel vector

$$\mathbf{h}_{i(i-1)}^{\mathrm{tB}} = \mathbf{H}_{i(i-1)} \mathbf{w}_{(i-1)}^{\mathrm{tB}} \in C^M ,$$

$$y^{F}_{i(i-1)} = \left(\mathbf{w}^{rF}_{i}\right)^{H} \mathbf{h}^{tF}_{i(i-1)} s^{F}_{(i-1)} + \left(\mathbf{w}^{rF}_{i}\right)^{H} \mathbf{h}^{tB}_{i(i-1)} s^{B}_{(i-1)}$$

$$y^{B}_{i(i-1)} = \left(\mathbf{w}^{rB}_{i}\right)^{H} \mathbf{h}^{tF}_{i(i-1)} s^{F}_{(i-1)} + \left(\mathbf{w}^{rB}_{i}\right)^{H} \mathbf{h}^{tB}_{i(i-1)} s^{B}_{(i-1)}$$

the i-th receiving node learns equivalent transmitting channel vectors $\mathbf{h}^{tB}_{i(i-1)}$ and $\mathbf{h}^{tF}_{i(i-1)}$ by using training signals that are transmitted from the (i-1)-th transmitting node through said transmitting weights $\mathbf{w}^{tF}_{(i-1)}$ and $\mathbf{w}^{tB}_{(i-1)}$, receiving weights $\mathbf{w}^{rF}_{i}, \mathbf{w}^{rB}_{i}$ of the i-th receiving node are computed based on the following Expressions,

$$\mathbf{w}^{rF}_{i} = \left(\mathbf{h}^{tF}_{i(i-1)}{}^{\parallel}, \mathbf{h}^{tB}_{i(i-1)}{}^{\perp}\right)$$

$$\mathbf{w}^{rB}_{i} = \left(\mathbf{h}^{tF}_{i(i-1)}{}^{\perp}, \mathbf{h}^{tB}_{i(i-1)}{}^{\perp}\right)$$

where $(\mathbf{x}^{\parallel}, \mathbf{y}^{\parallel})$ is a basis vector that is orthogonal to both **X** and **y**, $(\mathbf{x}^{\parallel}, \mathbf{y}^{\parallel})$ is a basis vector that is most parallel to **X** in a space that is orthogonal to **y**, said system between the (i-1)-th transmitting node and the i-th receiving node, is modeled by the following Expressions by using said computed receiving weights $\mathbf{w}^{rF}_{i}, \mathbf{w}^{rB}_{i}$ of the i-th receiving node,

$$y^{F}_{i(i-1)} = h^{eFF}_{i(i-1)} s^{F}_{(i-1)}$$

$$y^{B}_{i(i-1)} = 0$$

where $h^{eFF}_{i(i-1)} = \left(\mathbf{w}^{rF}_{i}\right)^{H} \mathbf{H}_{i(i-1)} \mathbf{w}^{tF}_{(i-1)}$ is an equivalent channel coefficient of the forward link between the (i-1)-thtransmitting node and the i-th receiving node.

Further, the above object of the present invention is also effectively achieved by the construction that a system between the i-th receiving node and the (i+1)-th transmitting node, is modeled by the following Expressions by using said computed receiving weights $\mathbf{w}^{rF}_{i}, \mathbf{w}^{rB}_{i}$ of the i-th receiving node,

$$y^{F}_{i(i+1)} = \left(\mathbf{h}^{rF}_{i(i+1)}\right)^{T} \mathbf{w}^{tF}_{(i+1)} s^{F}_{(i+1)} + \left(\mathbf{h}^{rF}_{i(i+1)}\right)^{T} \mathbf{w}^{tB}_{(i+1)} s^{B}_{(i+1)}$$

$$y_{i(i+1)}^{\mathrm{B}} = \left(\mathbf{h}_{i(i+1)}^{\mathrm{rB}}\right)^{T}\mathbf{w}_{(i+1)}^{\mathrm{tF}}s_{(i+1)}^{\mathrm{F}} + \left(\mathbf{h}_{i(i+1)}^{\mathrm{rB}}\right)^{T}\mathbf{w}_{(i+1)}^{\mathrm{tB}}s_{(i+1)}^{\mathrm{B}}$$

$$\mathrm{where}\ \ \mathbf{h}_{i(i+1)}^{\mathrm{rF}} = \left(\mathbf{H}_{i(i+1)}\right)^{T}\left(\mathbf{w}_{i}^{\mathrm{rF}}\right)^{*} \in C^{M}$$

and

$\mathbf{h}_{i(i+1)}^{\mathrm{rB}} = \left(\mathbf{H}_{i(i+1)}\right)^{T}\left(\mathbf{w}_{i}^{\mathrm{rB}}\right)^{*} \in C^{M}$ are equivalent receiving channel vectors of the forward link and the backward link, the (i+1)-th transmitting node utilizes the channel reciprocity $\left(\mathbf{H}_{i(i+1)}^{T} = \mathbf{H}_{(i+1)i}\right)$, and when the i-th receiving node is in the transmitting mode, the (i+1)-th transmitting node learns equivalent receiving channel vectors

$\mathbf{h}_{i(i+1)}^{\mathrm{rF}}$ and $\mathbf{h}_{i(i+1)}^{\mathrm{rB}}$ by transmitting a training signal through a conjugate receiving weight of the i-th receiving node,

or the (i+1)-th transmitting node transmits the training signal, and the i-th receiving node learns $\mathbf{h}_{i(i+1)}^{\mathrm{rF}}$ and $\mathbf{h}_{i(i+1)}^{\mathrm{rB}}$

and then feeds back said learned $\mathbf{h}_{i(i+1)}^{\mathrm{rF}}$ and $\mathbf{h}_{i(i+1)}^{\mathrm{rB}}$ to the (i+1)-th transmitting node, transmitting weights

$\mathbf{w}_{(i+1)}^{\mathrm{tF}}, \mathbf{w}_{(i+1)}^{\mathrm{tB}}$ of the (i+1)-th transmitting node are computed based on the following Expressions,

$$\mathbf{w}_{(i+1)}^{\mathrm{tF}} = \left(\left(\mathbf{h}_{i(i+1)}^{\mathrm{rF}}\right)^{*\perp}, \left(\mathbf{h}_{i(i+1)}^{\mathrm{rB}}\right)^{*\perp}\right)$$

$$\mathbf{w}_{(i+1)}^{\mathrm{tB}} = \left(\left(\mathbf{h}_{i(i+1)}^{\mathrm{rF}}\right)^{*\perp}, \left(\mathbf{h}_{i(i+1)}^{\mathrm{rB}}\right)^{*\|}\right)$$

said system between the i-th receiving node and the (i+1)-th transmitting node, is modeled by the following Expressions by using said computed transmitting weights $\mathbf{w}_{(i+1)}^{\mathrm{tF}}, \mathbf{w}_{(i+1)}^{\mathrm{tB}}$ of the (i+1)-th transmitting node,

$$y_{i(i+1)}^{\mathrm{F}} = 0$$

$$y_{i(i+1)}^{\mathrm{B}} = h_{i(i+1)}^{\mathrm{eBB}}s_{(i+1)}^{\mathrm{B}}$$

where $h_{i(i+1)}^{\mathrm{eBB}} = \left(\mathbf{w}_{i}^{\mathrm{rB}}\right)^{H}\mathbf{H}_{i(i+1)}\mathbf{w}_{(i+1)}^{\mathrm{tB}}$ is an equivalent channel coefficient of the backward link between the i-th receiving node and the (i+1)-th transmitting node.

Further, the above object of the present invention is also effectively achieved by the construction that said receiving signals $y_i^F, y_i^B$ of the forward link and the backward link of the i-th receiving node is represented by the following Expressions,

$$y_i^F = h_{i(i-1)}^{eFF} s_{(i-1)}^F + n_i^F$$

$$y_i^B = h_{i(i+1)}^{eBB} s_{(i+1)}^B + n_i^B$$

the i-th receiving node simultaneously receives signals of the forward link and the backward link without interferences from the (i-1)-th transmitting node and the (i+1)-th transmitting node.

Further, the above object of the present invention is also effectively achieved by the construction that said MIMO mesh network uses the nonlinear SIC/DPC algorithm, the transmitting weight and the receiving weight are computed in order from the first node to the last node, when attention is focused on the i-th receiving node, transmitting weights $\mathbf{W}_{(i-1)}^{tF}$ and $\mathbf{W}_{(i-1)}^{tB}$ of the (i-1)-th transmitting node are already computed, receiving weights $\mathbf{w}_i^{rF}, \mathbf{w}_i^{rB}$ of the i-th receiving node are computed based on the following Expressions,

$$\mathbf{w}_i^{rF} = \mathbf{h}_{i(i-1)}^{tF}{}^{\parallel}$$

$$\mathbf{w}_i^{rB} = \left( \mathbf{h}_{i(i-1)}^{tF}{}^{\perp}, \mathbf{h}_{i(i-1)}^{tB}{}^{\perp} \right)$$

where $\mathbf{x}^{\parallel}$ is a basis vector that is parallel to $\mathbf{x}$, $(\mathbf{x}^{\parallel}, \mathbf{y}^{\parallel})$ is a basis vector that is orthogonal to both $\mathbf{x}$ and $\mathbf{y}$, a system between the (i-1)-th transmitting node and the i-th receiving node, is modeled by the following Expressions by using said computed receiving weights $\mathbf{w}_i^{rF}, \mathbf{w}_i^{rB}$ of the i-th receiving node,

$$y_{i(i-1)}^F = h_{i(i-1)}^{eFF} s_{(i-1)}^F + h_{i(i-1)}^{eFB} s_{(i-1)}^B$$

$$y_{i(i-1)}^B = 0$$

where $h_{i(i-1)}^{eFF} = \left( \mathbf{w}_i^{rF} \right)^H \mathbf{H}_{i(i-1)} \mathbf{W}_{(i-1)}^{tF}$ is an equivalent channel coefficient of the forward link between the (i-1)-thtransmitting node and the i-th receiving node, $h_{i(i-1)}^{eFB} = \left( \mathbf{w}_i^{rF} \right)^H \mathbf{H}_{i(i-1)} \mathbf{W}_{(i-1)}^{tB}$ is an equivalent channel coefficient equivalent to an interference signal from the backward link of the (i-1)-th transmitting node to the forward link of the i-th receiving node, here, since both $s_{(i-1)}^F$ and $s_{(i-1)}^B$ are known, the (i-1)-th transmitting node utilizes the channel reciprocity $\left( \mathbf{H}_{i(i-1)} = \mathbf{H}_{(i-1)i}^T \right)$, and when the i-th receiving node is in the transmitting mode, the (i-

1)-th transmitting node learns equivalent channel coefficient $h_{i(i-1)}^{\mathrm{eFF}}$ and $h_{i(i-1)}^{\mathrm{eFB}}$ by transmitting a training signal through $\left(\mathbf{w}_i^{\mathrm{rF}}\right)^*$, or the (i-1)-th transmitting node transmits the training signal through $\mathbf{w}_{(i-1)}^{\mathrm{tF}}$ and $\mathbf{w}_{(i-1)}^{\mathrm{tB}}$, and the i-th receiving node learns $h_{i(i-1)}^{\mathrm{eFF}}$ and $h_{i(i-1)}^{\mathrm{eFB}}$ and then feeds back said learned $h_{i(i-1)}^{\mathrm{eFF}}$ and $h_{i(i-1)}^{\mathrm{eFB}}$ to the (i-1)-th transmitting node, the (i-1)-th transmitting node cancels the interference signal by using the DPC algorithm as the following Expressions,

$$s_{(i-1)}^{\mathrm{FDPC}} = s_{(i-1)}^{\mathrm{F}} - \frac{h_{i(i-1)}^{\mathrm{eFB}}}{h_{i(i-1)}^{\mathrm{eFF}}} s_{(i-1)}^{B}$$

$$y_{i(i-1)}^{\mathrm{FDPC}} = h_{i(i-1)}^{\mathrm{eFF}} s_{(i-1)}^{\mathrm{FDPC}} + h_{i(i-1)}^{\mathrm{eFB}} s_{(i-1)}^{\mathrm{B}} = h_{i(i-1)}^{\mathrm{eFF}} s_{(i-1)}^{\mathrm{F}}$$

where $s_{(i-1)}^{\mathrm{B}}$ is an interference signal, $s_{(i-1)}^{\mathrm{F}}$ is a desired signal.

Further, the above object of the present invention is also effectively achieved by the construction that based on said computed receiving weights $\mathbf{w}_i^{\mathrm{rF}}$, $\mathbf{w}_i^{\mathrm{rB}}$ of the i-th receiving node, transmitting weights $\mathbf{w}_{(i+1)}^{\mathrm{tF}}$, $\mathbf{w}_{(i+1)}^{\mathrm{tB}}$ of the (i+1)-th transmitting node are computed by the following Expressions,

$$\mathbf{w}_{(i+1)}^{\mathrm{tF}} = \left( \left(\mathbf{h}_{i(i+1)}^{\mathrm{rF}}\right)^{*\perp}, \left(\mathbf{h}_{i(i+1)}^{\mathrm{rB}}\right)^{*\perp} \right)$$

$$\mathbf{w}_{(i+1)}^{\mathrm{tB}} = \left(\mathbf{h}_{i(i+1)}^{\mathrm{rB}}\right)^{*\|}$$

a system between the i-th receiving node and the (i+1)-th transmitting node, is modeled by the following Expressions by using said computed transmitting weights $\mathbf{w}_{(i+1)}^{\mathrm{tF}}$, $\mathbf{w}_{(i+1)}^{\mathrm{tB}}$ of the (i+1)-th transmitting node,

$$y_{i(i+1)}^{\mathrm{F}} = h_{i(i+1)}^{\mathrm{eFB}} s_{(i+1)}^{\mathrm{B}}$$

$$y_{i(i+1)}^{\mathrm{B}} = h_{i(i+1)}^{\mathrm{eBB}} s_{(i+1)}^{\mathrm{B}}$$

where $h_{i(i+1)}^{\mathrm{eFB}} = \left(\mathbf{w}_i^{\mathrm{rF}}\right)^H \mathbf{H}_{i(i+1)} \mathbf{w}_{(i+1)}^{\mathrm{tB}}$ is an equivalent channel coefficient equivalent to an interference signal from the backward link of the (i+1)-th transmitting node to the forward link of the i-th receiving node,

$$h_{i(i+1)}^{\mathrm{eBB}} = \left(\mathbf{w}_i^{\mathrm{rB}}\right)^H \mathbf{H}_{i(i+1)} \mathbf{w}_{(i+1)}^{\mathrm{tB}}$$ is an equivalent channel coefficient of the backward link between the i-th receiving node and the (i+1)-th transmitting node, the i-th receiving node learns equivalent channel coefficients $h_{i(i+1)}^{\mathrm{eFF}}$

and $h_{i(i+1)}^{\mathrm{eFB}}$ by using a training signal that is transmitted from the (i+1)-th transmitting node through the transmitting

weight vector $\mathbf{w}_{(i+1)}^{\mathrm{tB}}$, in the receiving signal $y_i^{\mathrm{B}}$ of the backward link of the i-th receiving node, the desired signal

$s_{(i+1)}^{\mathrm{B}}$ is received without interferences as the following Expression,

$$y_i^{\mathrm{B}} = y_{i(i-1)}^{\mathrm{B}} + y_{i(i+1)}^{\mathrm{B}} + n_i^{\mathrm{B}} = h_{i(i+1)}^{\mathrm{eBB}} s_{(i+1)}^{\mathrm{B}} + n_i^{\mathrm{B}}$$

firstly, the i-th receiving node detects $s_{(i+1)}^{B}$ as the following Expression by using the SIC algorithm,

$$\hat{s}_{(i+1)}^{\mathrm{B}} = \frac{1}{h_{i(i+1)}^{\mathrm{eBB}}} y_i^{\mathrm{B}}$$

then, as shown in the following Expression, the i-th receiving node assumes that $\hat{s}_{(i+1)}^{\mathrm{B}}$ is detected accurately and realizes the interference cancellation by subtracting the replica signal from the receiving signal $y_i^{\mathrm{F}}$ of the forward link
of the i-th receiving node,

$$y_i^{\mathrm{FSIC}} = y_i^{\mathrm{F}} - h_{i(i+1)}^{\mathrm{eFB}} \hat{s}_{(i+1)}^{\mathrm{B}} = y_{i(i-1)}^{\mathrm{F}} + y_{i(i+1)}^{\mathrm{F}} - h_{i(i+1)}^{\mathrm{eFB}} \hat{s}_{(i+1)}^{\mathrm{B}} + n_i^{\mathrm{F}} = h_{i(i-1)}^{\mathrm{eFF}} s_{(i-1)}^{\mathrm{F}} + n_i^{\mathrm{F}}$$

where $h_{i(i-1)}^{\mathrm{eFF}} = \left(\mathbf{w}_i^{\mathrm{rF}}\right)^H \mathbf{H}_{i(i-1)} \mathbf{w}_{(i-1)}^{\mathrm{tF}}$ is an equivalent channel coefficient of the forward link between the (i-

1)-th transmitting node and the i-th receiving node, $s_{(i-1)}^{\mathrm{F}}$ is a desired signal.

Further, the above object of the present invention is also effectively achieved by the construction that the transmitting weight and the receiving weight are computed in order from the first node to the last node, the i-th node is a receiving node, when attention is focused on the i-th receiving node, transmitting weights $\mathbf{w}_{(i-1)}^{\mathrm{tF}}$ and $\mathbf{w}_{(i-1)}^{\mathrm{tB}}$ of

the (i-1)-th transmitting node are already computed, the reciprocity $\mathbf{H}_{i(i-1)} = \mathbf{H}_{(i-1)i}^{T}$ holds, where $[\cdot]^{\mathrm{T}}$ represents

a transposed matrix of $[\cdot]$, as shown in the following Expressions, training signals $\tilde{s}_{(i-1)}^{\mathrm{F}}(t)$ and $\tilde{s}_{(i-1)}^{\mathrm{B}}(t)$ that

are mutually orthogonal, are transmitted from the (i-1)-th transmitting node to the i-th receiving node through the trans-

mitting weights $\mathbf{w}_{(i-1)}^{\mathrm{tF}}$ and $\mathbf{w}_{(i-1)}^{\mathrm{tB}}$ of the (i-1)-th transmitting node,

$$\tilde{\mathbf{y}}_{i(i-1)}(t) = \mathbf{H}_{i(i-1)} \mathbf{w}_{(i-1)}^{\text{tF}} \tilde{s}_{(i-1)}^{\text{F}}(t) + \mathbf{H}_{i(i-1)} \mathbf{w}_{(i-1)}^{\text{tB}} \tilde{s}_{(i-1)}^{\text{B}}(t) + \mathbf{n}_i$$

$$\tilde{\mathbf{y}}_{i(i-1)}(t) = \mathbf{h}_{i(i-1)}^{\text{tF}} \tilde{s}_{(i-1)}^{\text{F}}(t) + \mathbf{h}_{i(i-1)}^{\text{tB}} \tilde{s}_{(i-1)}^{\text{B}}(t) + \mathbf{n}_i$$

where $\tilde{\mathbf{y}}_{i(i-1)}(t) \in C^M$ is a receiving signal vector of the i-th receiving node equivalent to the training signals $\tilde{s}_{(i-1)}^{\text{F}}(t), \tilde{s}_{(i-1)}^{\text{B}}(t)$ transmitted from the (i-1)-th transmitting node, $\mathbf{n}_i \in C^M$ is an additive noise vector of the i-th receiving node, then, equivalent transmitting channel vectors $\left\{ \mathbf{h}_{i(i-1)}^{\text{tF}}, \mathbf{h}_{i(i-1)}^{\text{tB}} \right\}$ are estimated based on the following Expressions,

$$\hat{\mathbf{h}}_{i(i-1)}^{\text{tF}} = \frac{1}{T} \int_0^T \tilde{\mathbf{y}}_{i(i-1)}(t) \tilde{s}_{(i-1)}^{\text{F*}}(t) \mathrm{d}t$$

$$\hat{\mathbf{h}}_{i(i-1)}^{\text{tB}} = \frac{1}{T} \int_0^T \tilde{\mathbf{y}}_{i(i-1)}(t) \tilde{s}_{(i-1)}^{\text{B*}}(t) \mathrm{d}t$$

where $\hat{\mathbf{h}}_{i(i-1)}^{\text{tF}}, \hat{\mathbf{h}}_{i(i-1)}^{\text{tB}}$ are estimated values of the equivalent transmitting channel vectors $\left\{ \mathbf{h}_{i(i-1)}^{\text{tF}}, \mathbf{h}_{i(i-1)}^{\text{tB}} \right\}$.

Further, the above object of the present invention is also effectively achieved by the construction that the transmitting weight and the receiving weight are computed in order from the first node to the last node, the i-th node is a transmitting node, when attention is focused on the i-th transmitting node, receiving weights $\mathbf{w}_{(i-1)}^{\text{rF}}$ and $\mathbf{w}_{(i-1)}^{\text{rB}}$ of the (i-1)-th receiving node are already computed, in the case that the channel reciprocity represented by $\mathbf{H}_{i(i-1)} = \mathbf{H}_{(i-1)i}^{T}$ holds, the following Expression,

$$h_{(i-1)i}^{\text{eBB}} = \left( \mathbf{w}_{(i-1)}^{\text{rB}} \right)^H \mathbf{H}_{(i-1)i} \mathbf{w}_i^{\text{tB}} = \left( h_{i(i-1)}^{\text{eFF}} \right)^T = \left( \mathbf{w}_{(i-1)}^{\text{tF}} \right)^T \mathbf{H}_{(i-1)i} \left( \mathbf{w}_i^{\text{rF}} \right)^*$$

comes into effect,
where $[\cdot]^*$ represents a complex conjugate matrix of $[\cdot]$, $[\cdot]^T$ represents a transposed matrix of $[\cdot]$, $[\cdot]^H$ represents a complex conjugate transposed matrix of $[\cdot]$, $\mathbf{w}_{(i-1)}^{\text{tF}} = \left( \mathbf{w}_{(i-1)}^{\text{rB}} \right)^*$ and $\mathbf{w}_i^{\text{tB}} = \left( \mathbf{w}_i^{\text{rF}} \right)^*$ hold, for the equivalent receiving channel vectors $\mathbf{h}_{(i-1)i}^{\text{rB}}, \mathbf{h}_{(i-1)i}^{\text{rF}}$, the property of the channel reciprocity represented by the following Expressions, comes into effect,

$$\mathbf{h}_{(i-1)i}^{\text{rB}} = \mathbf{H}_{(i-1)i}^{T} \left( \mathbf{w}_{(i-1)}^{\text{rB}} \right)^* = \mathbf{H}_{i(i-1)} \mathbf{w}_{(i-1)}^{\text{tF}} = \mathbf{h}_{i(i-1)}^{\text{tF}}$$

$$\mathbf{h}_{(i-1)i}^{\mathrm{rF}} = \mathbf{H}_{(i-1)i}^{T}\left(\mathbf{w}_{(i-1)}^{\mathrm{rF}}\right)^{*} = \mathbf{H}_{i(i-1)}\mathbf{w}_{(i-1)}^{\mathrm{tB}} = \mathbf{h}_{i(i-1)}^{\mathrm{tB}}$$

the learned equivalent transmitting channel vector $\mathbf{h}_{i(i-1)}^{\mathrm{tF}}$ is used as the equivalent receiving channel vector

$\mathbf{h}_{(i-1)i}^{\mathrm{rB}}$ , and the learned equivalent transmitting channel vector $\mathbf{h}_{i(i-1)}^{\mathrm{tB}}$ is used as the equivalent receiving channel

vector $\mathbf{h}_{(i-1)i}^{\mathrm{rF}}$ .

Moreover, the present invention relates to a MIMO mesh network having multiple nodes with the relay function in which said each node has multiple MIMO antennas and a wireless network is constructed by setting up forward links and backward links between said nodes. The above object of the present invention is effectively achieved by the construction that $K^{\mathrm{F}}$ stream signals ($K^{\mathrm{F}}$ streams) are multiplexed in said forward link and at the same time $K^{\mathrm{B}}$ stream signals ($K^{\mathrm{B}}$ streams) are also multiplexed in said backward link, a condition represented by the following Expression is satisfied,

$$M \geq K + \max(K^{\mathrm{F}}, K^{\mathrm{B}})$$

where M is the number of MIMO antennas which said each node has, K is the number of the total streams which a certain node transmits/receives, $K = K^{\mathrm{F}} + K^{\mathrm{B}}$ holds, a signal model of said MIMO mesh network is formulated as follows,

$$\mathbf{y}_{i}^{\mathrm{F}} = \mathbf{y}_{i(i-1)}^{\mathrm{F}} + \mathbf{y}_{i(i+1)}^{\mathrm{F}} + \mathbf{n}_{i}^{\mathrm{F}}$$

$$\mathbf{y}_{i}^{\mathrm{B}} = \mathbf{y}_{i(i-1)}^{\mathrm{B}} + \mathbf{y}_{i(i+1)}^{\mathrm{B}} + \mathbf{n}_{i}^{\mathrm{B}}$$

where $\mathbf{y}_{i}^{\mathrm{F}} \in C^{K^{\mathrm{F}}}$ is a receiving signal vector of the forward link of the i-th node and $\mathbf{y}_{i}^{\mathrm{B}} \in C^{K^{\mathrm{B}}}$ is a receiving signal vector of the backward link of the i-th node,

$$\mathbf{y}_{i(i-1)}^{\mathrm{F}} = \left(\mathbf{W}_{i}^{\mathrm{rF}}\right)^{H}\mathbf{H}_{i(i-1)}\mathbf{W}_{(i-1)}^{\mathrm{tF}}\mathbf{s}_{(i-1)}^{\mathrm{F}} + \left(\mathbf{W}_{i}^{\mathrm{rF}}\right)^{H}\mathbf{H}_{i(i-1)}\mathbf{W}_{(i-1)}^{\mathrm{tB}}\mathbf{s}_{(i-1)}^{\mathrm{B}}$$

$$\mathbf{y}_{i(i+1)}^{\mathrm{F}} = \left(\mathbf{W}_{i}^{\mathrm{rF}}\right)^{H}\mathbf{H}_{i(i+1)}\mathbf{W}_{(i+1)}^{\mathrm{tF}}\mathbf{s}_{(i+1)}^{\mathrm{F}} + \left(\mathbf{W}_{i}^{\mathrm{rF}}\right)^{H}\mathbf{H}_{i(i+1)}\mathbf{W}_{(i+1)}^{\mathrm{tB}}\mathbf{s}_{(i+1)}^{\mathrm{B}}$$

$$\mathbf{y}_{i(i-1)}^{\mathrm{B}} = \left(\mathbf{W}_{i}^{\mathrm{rB}}\right)^{H}\mathbf{H}_{i(i-1)}\mathbf{W}_{(i-1)}^{\mathrm{tF}}\mathbf{s}_{(i-1)}^{\mathrm{F}} + \left(\mathbf{W}_{i}^{\mathrm{rB}}\right)^{H}\mathbf{H}_{i(i-1)}\mathbf{W}_{(i-1)}^{\mathrm{tB}}\mathbf{s}_{(i-1)}^{\mathrm{B}}$$

$$\mathbf{y}_{i(i+1)}^{\mathrm{B}} = \left(\mathbf{W}_{i}^{\mathrm{rB}}\right)^{H}\mathbf{H}_{i(i+1)}\mathbf{W}_{(i+1)}^{\mathrm{tF}}\mathbf{s}_{(i+1)}^{\mathrm{F}} + \left(\mathbf{W}_{i}^{\mathrm{rB}}\right)^{H}\mathbf{H}_{i(i+1)}\mathbf{W}_{(i+1)}^{\mathrm{tB}}\mathbf{s}_{(i+1)}^{\mathrm{B}}$$

where $[\cdot]^H$ represents a complex conjugate transposed matrix of $[\cdot]$, $\mathbf{s}_j^F \in C^{K^F}$ and $\mathbf{s}_j^B \in C^{K^B}$ are transmitting signal vectors for the forward link and the backward link of the j-th node, $\mathbf{H}_{ij} \in C^{M \times M}$ is a channel matrix from the j-th node to the i-th node, $\mathbf{W}_j^{tF} \in C^{M \times K^F}$ and $\mathbf{W}_j^{tB} \in C^{M \times K^B}$ are transmitting weight matrices for the forward link and the backward link of the j-th node, $\mathbf{W}_i^{rF} \in C^{M \times K^F}$ and $\mathbf{W}_i^{rB} \in C^{M \times K^B}$ are receiving weight matrices for the forward link and the backward link of the i-th node, $\mathbf{n}_i^F \in C^{K^F}$ and $\mathbf{n}_i^B \in C^{K^B}$ are equivalent additive noise vectors of the forward link and the backward link that are received in the i-th node.

Further, the above object of the present invention is also effectively achieved by the construction that said MIMO mesh network uses the block ZF algorithm that is a linear scheme, a MIMO multiplexing transmission is performed in every link after avoiding the interferences to the other links by the linear interference cancellation based on the block ZF algorithm, each transmitting weight matrix and each receiving weight matrix at that time are computed based on the following Expressions,

$$\mathbf{W}_j^{tF} = \widetilde{\mathbf{W}}_j^{tF} \widetilde{\widetilde{\mathbf{W}}}_j^{tF}$$

$$\mathbf{W}_j^{tB} = \widetilde{\mathbf{W}}_j^{tB} \widetilde{\widetilde{\mathbf{W}}}_j^{tB}$$

$$\mathbf{W}_i^{rF} = \widetilde{\mathbf{W}}_i^{rF} \widetilde{\widetilde{\mathbf{W}}}_i^{rF}$$

$$\mathbf{W}_i^{rB} = \widetilde{\mathbf{W}}_i^{rB} \widetilde{\widetilde{\mathbf{W}}}_i^{rB}$$

where $\mathbf{W}_j^{tF}$ and $\mathbf{W}_j^{tB}$ are transmitting weight matrices for the forward link and the backward link of the j-th node, $\mathbf{W}_i^{rF}$ and $\mathbf{W}_i^{rB}$ are receiving weight matrices for the forward link and the backward link of the i-th node, $\widetilde{\mathbf{W}}_j^{tF} \in C^{M \times (M-K)}$ and $\widetilde{\mathbf{W}}_j^{tB} \in C^{M \times (M-K^F)}$ are block ZF transmitting weight matrices for the forward link and the backward link of the j-th node, $\widetilde{\widetilde{\mathbf{W}}}_j^{tF} \in C^{(M-K) \times K^F}$ and $\widetilde{\widetilde{\mathbf{W}}}_j^{tB} \in C^{(M-K^F) \times K^B}$ are MIMO transmitting weight matrices for the forward link and the backward link of the j-th node that avoid the interferences to the other links by the block ZF algorithm, $\widetilde{\mathbf{W}}_i^{rF} \in C^{M \times (M-K^B)}$ and $\widetilde{\mathbf{W}}_i^{rB} \in C^{M \times (M-K)}$ are block ZF receiving weight matrices for the forward link and the backward link of the i-th node, $\widetilde{\widetilde{\mathbf{W}}}_i^{rF} \in C^{(M-K^B) \times K^F}$ and

$\widetilde{\widetilde{\mathbf{W}}}_{i}^{\text{rB}} \in C^{(M-K) \times K^{\text{B}}}$ are MIMO receiving weight matrices for the forward link and the backward link of the i-th node that avoid the interferences from the other links by the block ZF algorithm.

Further, the above object of the present invention is also effectively achieved by the construction that the transmitting weight and the receiving weight are computed in order from the first node to the last node, when attention is focused on the i-th receiving node, a transmitting weight matrix $\mathbf{W}_{(i-1)}^{\text{tB}} \in C^{M \times K^{\text{B}}}$ for the backward link of the (i-1)-th transmitting node is known, a block ZF transmitting weight matrix $\widetilde{\mathbf{W}}_{(i-1)}^{\text{tF}} \in C^{M \times (M-K)}$ for the forward link of the (i-1)-th transmitting node is known, as shown in the following Expressions, the i-th receiving node learns equivalent transmitting channel matrices $\widetilde{\mathbf{H}}_{i(i-1)}^{\text{tF}}$ and $\mathbf{H}_{i(i-1)}^{\text{tB}}$ by using training signals that are transmitted from the (i-1)-th transmitting node through transmitting weight matrices

$$\mathbf{W}_{(i-1)}^{\text{tB}} \in C^{M \times K^{\text{B}}} \quad \text{and} \quad \widetilde{\mathbf{W}}_{(i-1)}^{\text{tF}} \in C^{M \times (M-K)} \,,$$

$$\widetilde{\mathbf{H}}_{i(i-1)}^{\text{tF}} = \mathbf{H}_{i(i-1)} \widetilde{\mathbf{W}}_{(i-1)}^{\text{tF}} \in C^{M \times (M-K)}$$

$$\mathbf{H}_{i(i-1)}^{\text{tB}} = \mathbf{H}_{i(i-1)} \mathbf{W}_{(i-1)}^{\text{tB}} \in C^{M \times K^{\text{B}}}$$

the block ZF receiving weight matrices $\widetilde{\mathbf{W}}_{i}^{\text{rF}}$ and $\widetilde{\mathbf{W}}_{i}^{\text{rB}}$ for the forward link and the backward link of the i-th receiving node, are computed based on the following Expressions by using the learned $\widetilde{\mathbf{H}}_{i(i-1)}^{\text{tF}}$ and $\mathbf{H}_{i(i-1)}^{\text{tB}}$ ,

$$\widetilde{\mathbf{W}}_{i}^{\text{rF}} = \left[ \mathbf{H}_{i(i-1)}^{\text{tB}} \right]^{\perp} \in C^{M \times (M-K^{\text{B}})}$$

$$\widetilde{\mathbf{W}}_{i}^{\text{rB}} = \left[ \mathbf{H}_{i(i-1)}^{\text{tF}}, \mathbf{H}_{i(i-1)}^{\text{tB}} \right]^{\perp} \in C^{M \times (M-K)}$$

where $[\cdot]^{\perp}$ is a basis matrix of the orthonormal complementary space of $[\cdot]$, $\mathbf{H}_{i(i-1)}^{\text{tF}}$ is computed based on the following Expression,

$$\mathbf{H}_{i(i-1)}^{\text{tF}} = \widetilde{\mathbf{H}}_{i(i-1)}^{\text{tF}} \widetilde{\widetilde{\mathbf{W}}}_{(i-1)}^{\text{tF}} \in C^{M \times K^{\text{F}}}$$

in this time, as shown in the following Expressions, a forward link with an equivalent channel matrix $\widetilde{\mathbf{H}}_{i(i-1)}^{\text{FF}}$ that avoids the interferences from different links by the block ZF, is formed between the (i-1)-th transmitting node and the i-

th receiving node,

$$\mathbf{y}^{\mathrm{F}}_{i(i-1)} = \left(\widetilde{\widetilde{\mathbf{W}}}^{\mathrm{rF}}_{i}\right)^{H} \widetilde{\mathbf{H}}^{\mathrm{FF}}_{i(i-1)} \widetilde{\widetilde{\mathbf{W}}}^{\mathrm{tF}}_{(i-1)} \mathbf{s}^{\mathrm{F}}_{(i-1)}$$

$$\mathbf{y}^{\mathrm{B}}_{i(i-1)} = \mathbf{O}$$

$$\widetilde{\mathbf{H}}^{\mathrm{FF}}_{i(i-1)} = \left(\widetilde{\mathbf{W}}^{\mathrm{rF}}_{i}\right)^{H} \mathbf{H}_{i(i-1)} \widetilde{\mathbf{W}}^{\mathrm{tF}}_{(i-1)} \in C^{(M-K^{\mathrm{B}})\times(M-K)}$$

for the equivalent channel matrix $\widetilde{\mathbf{H}}^{\mathrm{FF}}_{i(i-1)}$ , it is possible to apply arbitrary MIMO transmission scheme.

Further, the above object of the present invention is also effectively achieved by the construction that in the case that the open-loop transmission scheme is used as a MIMO transmission scheme and the ZF algorithm is used in the receiving side, the (i-1)-th transmitting node performs the multiplexing transmission of $K^{\mathrm{F}}$ streams by using arbitrary $K^{\mathrm{F}}$ column vectors of the block ZF transmitting weight matrix $\widetilde{\mathbf{W}}^{\mathrm{tF}}_{(i-1)}$ of order (M-K), when the leading $K^{\mathrm{F}}$ column vectors of $\widetilde{\mathbf{W}}^{\mathrm{tF}}_{(i-1)}$ is used, the following Expression holds,

$$\widetilde{\widetilde{\mathbf{W}}}^{\mathrm{tF}}_{(i-1)} = \mathbf{I}_{(M-K)}[1 : K^{\mathrm{F}}] \in C^{(M-K)\times K^{\mathrm{F}}}$$

where $\widetilde{\widetilde{\mathbf{W}}}^{\mathrm{tF}}_{(i-1)}$ is a selection matrix of the orthonormal basis, $\mathbf{I}_{(M-K)}[1:K^{\mathrm{F}}]$ is the first column ~ the $(K^{\mathrm{F}})$-th column of the identity matrix of order (M-K), the i-th receiving node performs the separation of the received $K^{\mathrm{F}}$ streams, in this time, a transmitting weight matrix for the forward link of the (i-1)-th transmitting node is computed based on the following Expression,

$$\mathbf{W}^{\mathrm{tF}}_{(i-1)} = \widetilde{\mathbf{W}}^{\mathrm{tF}}_{(i-1)} \widetilde{\widetilde{\mathbf{W}}}^{\mathrm{tF}}_{(i-1)}$$

in the case of using the ZF algorithm as the receiving scheme of the open-loop transmission scheme, by using the equivalent transmitting channel matrix $\widetilde{\widetilde{\mathbf{H}}}^{\mathrm{tFF}}_{i(i-1)}$ represented by

$$\widetilde{\widetilde{\mathbf{H}}}^{\mathrm{tFF}}_{i(i-1)} = \widetilde{\mathbf{H}}^{\mathrm{FF}}_{i(i-1)} \widetilde{\widetilde{\mathbf{W}}}^{\mathrm{tF}}_{(i-1)} \in C^{(M-K^{\mathrm{B}})\times K^{\mathrm{F}}}$$ , the MIMO receiving weight matrix $\widetilde{\widetilde{\mathbf{W}}}^{\mathrm{rF}}_{i}$ for the forward link of the i-th receiving node, is computed based on the following Expression,

$$\widetilde{\widetilde{\mathbf{W}}}^{\mathrm{rF}}_{i} = \left(\left[\widetilde{\widetilde{\mathbf{H}}}^{\mathrm{tFF}}_{i(i-1)}\right]^{-1}\right)^{H} \in C^{(M-K^{\mathrm{B}})\times K^{\mathrm{F}}}$$

where $[\cdot]^{-1}$ is a generalized inverse matrix of $[\cdot]$, $[\cdot]^H$ is a complex conjugate transposed matrix of $[\cdot]$, in this time, the receiving weight matrix for the forward link of the i-th receiving node is computed based on $\mathbf{W}_i^{rF} = \widetilde{\mathbf{W}}_i^{rF} \widetilde{\widetilde{\mathbf{W}}}_i^{rF}$ .

Further, the above object of the present invention is also effectively achieved by the construction that when attention is focused on the (i+1)-th transmitting node, a receiving weight matrix $\mathbf{W}_i^{rF} \in C^{M \times K^F}$ for the forward link of the i-th receiving node is known, a block ZF receiving weight matrix $\widetilde{\mathbf{W}}_i^{rB} \in C^{M \times (M-K)}$ for the backward link of the i-th receiving node is known, the (i+1)-th transmitting node utilizes the channel reciprocity $\left( \mathbf{H}_{i(i+1)}^T = \mathbf{H}_{(i+1)i} \right)$, and when the i-th receiving node is in the transmitting mode, the (i+1)-th transmitting node learns equivalent receiving channel matrices $\mathbf{H}_{i(i+1)}^{rF}$ and $\widetilde{\mathbf{H}}_{i(i+1)}^{rB}$ as the following Expressions by transmitting a training signal through a conjugate receiving weight of the i-th receiving node, or the (i+1)-th transmitting node transmits the training signal, and the i-th receiving node learns $\mathbf{H}_{i(i+1)}^{rF}$ and $\widetilde{\mathbf{H}}_{i(i+1)}^{rB}$ as the following Expressions and then feeds back the learned $\mathbf{H}_{i(i+1)}^{rF}$ and $\widetilde{\mathbf{H}}_{i(i+1)}^{rB}$ to the (i+1)-th transmitting node,

$$\mathbf{H}_{i(i+1)}^{rF} = \left( \mathbf{H}_{i(i+1)} \right)^T \left( \mathbf{W}_i^{rF} \right)^* \in C^{M \times K^F}$$

$$\widetilde{\mathbf{H}}_{i(i+1)}^{rB} = \left( \mathbf{H}_{i(i+1)} \right)^T \left( \widetilde{\mathbf{W}}_i^{rB} \right)^* \in C^{M \times (M-K)}$$

where $[\cdot]^*$ is a complex conjugate matrix of $[\cdot]$, $[\cdot]^T$ is a transposed matrix of $[\cdot]$, by using the learned $\mathbf{H}_{i(i+1)}^{rF}$ and $\widetilde{\mathbf{H}}_{i(i+1)}^{rB}$, the block ZF transmitting weight matrices $\widetilde{\mathbf{W}}_{(i+1)}^{tF}$ and $\widetilde{\mathbf{W}}_{(i+1)}^{tB}$ for the forward link and the backward link of the (i+1) transmitting node, are computed based on the following Expressions,

$$\widetilde{\mathbf{W}}_{(i+1)}^{tF} = \left[ \left( \mathbf{H}_{i(i+1)}^{rF} \right)^*, \left( \mathbf{H}_{i(i+1)}^{rB} \right)^* \right]^{\perp} \in C^{M \times (M-K)}$$

$$\widetilde{\mathbf{W}}_{(i+1)}^{tB} = \left[ \left( \mathbf{H}_{i(i+1)}^{rF} \right)^* \right]^{\perp} \in C^{M \times (M-K^F)}$$

where $[\cdot]^{\perp}$ is a basis matrix of the orthonormal complementary space of $[\cdot]$, $\mathbf{H}_{i(i+1)}^{rB}$ is computed based on the following Expression,

$$\mathbf{H}_{i(i+1)}^{\mathrm{rB}} = \widetilde{\mathbf{H}}_{i(i+1)}^{\mathrm{rB}} \left( \widetilde{\widetilde{\mathbf{W}}}_{i}^{\mathrm{rB}} \right)^{*} \in C^{M \times K^{\mathrm{B}}}$$

in this time, as shown in the following Expressions, a backward link with an equivalent channel matrix $\widetilde{\mathbf{H}}_{i(i+1)}^{\mathrm{BB}}$ that avoids the interferences from different links by the block ZF, is formed between the (i+1)-th transmitting node and the i-th receiving node,

$$\mathbf{y}_{i(i+1)}^{\mathrm{F}} = \mathbf{O}$$

$$\mathbf{y}_{i(i+1)}^{\mathrm{B}} = \left( \widetilde{\widetilde{\mathbf{W}}}_{i}^{\mathrm{rB}} \right)^{H} \widetilde{\mathbf{H}}_{i(i+1)}^{\mathrm{BB}} \widetilde{\widetilde{\mathbf{W}}}_{(i+1)}^{\mathrm{tB}} \mathbf{s}_{(i+1)}^{\mathrm{B}}$$

$$\widetilde{\mathbf{H}}_{i(i+1)}^{\mathrm{BB}} = \left( \widetilde{\mathbf{W}}_{i}^{\mathrm{rB}} \right)^{H} \mathbf{H}_{i(i+1)} \widetilde{\mathbf{W}}_{(i+1)}^{\mathrm{tB}} \in C^{(M-K) \times (M-K^{\mathrm{F}})}$$

for the equivalent channel matrix $\widetilde{\mathbf{H}}_{i(i+1)}^{\mathrm{BB}}$ , it is possible to apply arbitrary MIMO transmission scheme.

Further, the above object of the present invention is also effectively achieved by the construction that in the case that the open-loop transmission scheme is used as a MIMO transmission scheme and the ZF algorithm is used in the transmitting side, the (i+1)-th transmitting node performs the multiplexing transmission of $K^{\mathrm{B}}$ streams by the weight that performs the stream separation in advance, in this time, the i-th receiving node receives $K^{\mathrm{B}}$ streams by using arbitrary $K^{\mathrm{B}}$ column vectors of the block ZF receiving weight matrix $\widetilde{\mathbf{W}}_{i}^{\mathrm{rB}}$ of order (M-K), when the leading $K^{\mathrm{B}}$ column vectors of $\widetilde{\mathbf{W}}_{i}^{\mathrm{rB}}$ is used, the following Expression holds,

$$\widetilde{\widetilde{\mathbf{W}}}_{i}^{\mathrm{rB}} = \mathbf{I}_{(M-K)}[1:K^{\mathrm{B}}] \in C^{(M-K) \times K^{\mathrm{B}}}$$

where $\widetilde{\widetilde{\mathbf{W}}}_{i}^{\mathrm{rB}}$ is a selection matrix of the orthonormal basis, $\mathbf{I}_{(M-K)}[1:K^{\mathrm{B}}]$ is the first column ~ the $(K^{\mathrm{B}})$-th column of the identity matrix of order (M-K), in this time, a receiving weight matrix for the backward link of the i-th receiving node is computed based on the following Expression,

$$\mathbf{W}_{i}^{\mathrm{rB}} = \widetilde{\mathbf{W}}_{i}^{\mathrm{rB}} \widetilde{\widetilde{\mathbf{W}}}_{i}^{\mathrm{rB}}$$

in the case of using the ZF algorithm as the transmitting scheme of the open-loop transmission scheme, by using the equivalent receiving channel matrix $\widetilde{\widetilde{\mathbf{H}}}_{i(i+1)}^{\mathrm{rBB}}$ represented by

$$\overset{\approx}{\mathbf{H}}{}^{rBB}_{i(i+1)} = \left(\overset{\sim}{\mathbf{H}}{}^{BB}_{i(i+1)}\right)^{T}\left(\overset{\approx}{\mathbf{W}}{}^{rB}_{i}\right)^{*} \in C^{(M-K^{F})\times K^{B}}$$, the MIMO transmitting weight matrix $\overset{\approx}{\mathbf{W}}{}^{tB}_{(i+1)}$ for the

backward link of the (i+1)-th transmitting node, is computed based on the following Expression,

$$\overset{\approx}{\overset{\sim}{\mathbf{W}}}{}^{tB}_{(i+1)} = \left[\left(\overset{\approx}{\mathbf{H}}{}^{rBB}_{i(i+1)}\right)^{T}\right]^{-1} \in C^{(M-K^{F})\times K^{B}}$$

where $[\cdot]^{*}$ is a complex conjugate matrix of $[\cdot]$, $[\cdot]^{T}$ is a transposed matrix of $[\cdot]$, $[\cdot]^{-1}$ is a generalized inverse matrix of $[\cdot]$, in this time, the transmitting weight matrix for the backward link of the (i+1)-th transmitting node is computed based on

$$\mathbf{W}^{tB}_{(i+1)} = \overset{\sim}{\mathbf{W}}{}^{tB}_{(i+1)}\overset{\approx}{\overset{\sim}{\mathbf{W}}}{}^{tB}_{(i+1)} \; .$$

Further, the above object of the present invention is also effectively achieved by the construction that the receiving signal vector $\mathbf{y}^{F}_{i}$ of the forward link of the i-th receiving node becomes the following Expression,

$$\mathbf{y}^{F}_{i} = \mathbf{H}^{eFF}_{i(i-1)}\mathbf{s}^{F}_{(i-1)} + \mathbf{n}^{F}_{i}$$

the receiving signal vector $\mathbf{y}^{B}_{i}$ of the backward link of the i-th receiving node becomes the following Expression,

$$\mathbf{y}^{B}_{i} = \mathbf{H}^{eBB}_{i(i+1)}\mathbf{s}^{B}_{(i-1)} + \mathbf{n}^{B}_{i}$$

where $\mathbf{H}^{eFF}_{i(i-1)}$ is a matrix whose diagonal elements are equivalent channel responses of $K^{F}$ streams of the forward link between the (i-1)-th transmitting node and the i-th receiving node and is computed based on the following Expression,

$$\mathbf{H}^{eFF}_{i(i-1)} = \left(\overset{\approx}{\overset{\sim}{\mathbf{W}}}{}^{rF}_{i}\right)^{H}\mathbf{H}^{FF}_{i(i-1)}\overset{\approx}{\overset{\sim}{\mathbf{W}}}{}^{tF}_{(i-1)} \in C^{K^{F}\times K^{F}}$$

$\mathbf{H}^{eBB}_{i(i+1)}$ is a matrix whose diagonal elements are equivalent channel responses of $K^{B}$ streams of the backward link between the (i+1) -th transmitting node and the i-th receiving node and is computed

based on $$\mathbf{H}^{eBB}_{i(i+1)} = \left(\overset{\approx}{\overset{\sim}{\mathbf{W}}}{}^{rB}_{i}\right)^{H}\mathbf{H}^{BB}_{i(i+1)}\overset{\approx}{\mathbf{W}}{}^{tB}_{(i+1)} \in C^{K^{B}\times K^{B}} \; .$$

Further, the above object of the present invention is also effectively achieved by the construction that in addition to the block ZF algorithm, the transmitting side uses the block DPC algorithm and the receiving side uses the block SIC algorithm, by a combination of the linear interference cancellation based on the block ZF algorithm and the nonlinear interference cancellation based on the block SIC algorithm/the block DPC algorithm, the MIMO multiplexing transmission is performed in each link after avoiding the interferences to the other links, each transmitting weight matrix and each receiving weight matrix at that time are computed by the following Expressions,

$$\mathbf{W}_j^{\mathrm{tF}} = \widetilde{\mathbf{W}}_j^{\mathrm{tF}} \widetilde{\widetilde{\mathbf{W}}}_j^{\mathrm{tF}} \in C^{M \times K^{\mathrm{F}}}$$

$$\mathbf{W}_j^{\mathrm{tB}} = \widetilde{\mathbf{W}}_j^{\mathrm{tB}} \widetilde{\widetilde{\mathbf{W}}}_j^{\mathrm{tB}} \in C^{M \times K^{\mathrm{B}}}$$

$$\mathbf{W}_i^{\mathrm{rF}} = \widetilde{\mathbf{W}}_i^{\mathrm{rF}} \widetilde{\widetilde{\mathbf{W}}}_i^{\mathrm{rF}} \in C^{M \times K^{\mathrm{F}}}$$

$$\mathbf{W}_i^{\mathrm{rB}} = \widetilde{\mathbf{W}}_i^{\mathrm{rB}} \widetilde{\widetilde{\mathbf{W}}}_i^{\mathrm{rB}} \in C^{M \times K^{\mathrm{B}}}$$

where the dimensions of each weight matrix become

$$\widetilde{\mathbf{W}}_j^{\mathrm{tF}} \in C^{M \times (M-K)} \;,\; \widetilde{\mathbf{W}}_j^{\mathrm{tB}} \in C^{M \times M} \;,\; \widetilde{\widetilde{\mathbf{W}}}_j^{\mathrm{tF}} \in C^{(M-K) \times K^{\mathrm{F}}} \;,\; \widetilde{\widetilde{\mathbf{W}}}_j^{\mathrm{tB}} \in C^{M \times K^{\mathrm{B}}} \;,$$

$$\widetilde{\mathbf{W}}_i^{\mathrm{rF}} \in C^{M \times M} \;,\; \widetilde{\mathbf{W}}_i^{\mathrm{rB}} \in C^{M \times (M-K)} \;,\; \widetilde{\widetilde{\mathbf{W}}}_i^{\mathrm{rF}} \in C^{M \times K^{\mathrm{F}}} \text{ and } \widetilde{\widetilde{\mathbf{W}}}_i^{\mathrm{rB}} \in C^{(M-K) \times K^{\mathrm{B}}} \;,\; \mathbf{W}_j^{\mathrm{tF}} \text{ and}$$

$\mathbf{W}_j^{\mathrm{tB}}$ are transmitting weight matrices for the forward link and the backward link of the j-th node, $\mathbf{W}_i^{\mathrm{rF}}$ and $\mathbf{W}_i^{\mathrm{rB}}$ are receiving weight matrices for the forward link and the backward link of the i-th node, $\widetilde{\mathbf{W}}_j^{\mathrm{tF}}$ and $\widetilde{\mathbf{W}}_j^{\mathrm{tB}}$ are the block ZF transmitting weight matrices for the forward link and the backward link of the j-th node, $\widetilde{\widetilde{\mathbf{W}}}_j^{\mathrm{tF}}$ and $\widetilde{\widetilde{\mathbf{W}}}_j^{\mathrm{tB}}$ are the MIMO transmitting weight matrices for the forward link and the backward link of the j-th node that avoid the interferences to the other links by the block ZF, $\widetilde{\mathbf{W}}_i^{\mathrm{rF}}$ and $\widetilde{\mathbf{W}}_i^{\mathrm{rB}}$ are the block ZF receiving weight matrices for the forward link and the backward link of the i-th node, $\widetilde{\widetilde{\mathbf{W}}}_i^{\mathrm{rF}}$ and $\widetilde{\widetilde{\mathbf{W}}}_i^{\mathrm{rB}}$ are the MIMO receiving weight matrices for the forward link and the backward link of the i-th node that avoid the interferences from the other links by the block ZF.

Further, the above object of the present invention is also effectively achieved by the construction that the transmitting weight and the receiving weight are computed in order from the first node to the last node, when attention is focused on the i-th receiving node, a transmitting weight matrix $\mathbf{W}_{(i-1)}^{\mathrm{tB}} \in C^{M \times K^{\mathrm{B}}}$ for the backward link of the (i-1) -th transmitting node is known, a block ZF transmitting weight matrix $\widetilde{\mathbf{W}}_{(i-1)}^{\mathrm{tF}} \in C^{M \times (M-K)}$ for the forward link of the (i-1)-th transmitting node is known, as shown in the following Expressions, the i-th receiving node learns equivalent transmitting channel matrices $\widetilde{\mathbf{H}}_{i(i-1)}^{\mathrm{tF}} \in C^{M \times (M-K)}$ and $\mathbf{H}_{i(i-1)}^{\mathrm{tB}} \in C^{M \times K^{B}}$ by using training signals that are transmitted from the (i-1) -th transmitting node through transmitting weight matrices

$$\mathbf{W}_{(i-1)}^{\text{tB}} \in C^{M \times K^{\text{B}}} \quad \text{and} \quad \widetilde{\mathbf{W}}_{(i-1)}^{\text{tF}} \in C^{M \times (M-K)} \; ,$$

$$\widetilde{\mathbf{H}}_{i(i-1)}^{\text{tF}} = \mathbf{H}_{i(i-1)} \widetilde{\mathbf{W}}_{(i-1)}^{\text{tF}} \in C^{M \times (M-K)}$$

$$\mathbf{H}_{i(i-1)}^{\text{tB}} = \mathbf{H}_{i(i-1)} \mathbf{W}_{(i-1)}^{\text{tB}} \in C^{M \times K^{\text{B}}}$$

the block ZF receiving weight matrices $\widetilde{\mathbf{W}}_i^{\text{rF}}$ and $\widetilde{\mathbf{W}}_i^{\text{rB}}$ for the forward link and the backward link of the i-th receiving node, are computed based on the following Expressions by using the learned $\widetilde{\mathbf{H}}_{i(i-1)}^{\text{tF}}$ and $\mathbf{H}_{i(i-1)}^{\text{tB}}$ ,

$$\widetilde{\mathbf{W}}_i^{\text{rF}} = \mathbf{I}_M \in C^{M \times M}$$

$$\widetilde{\mathbf{W}}_i^{\text{rB}} = \left[ \mathbf{H}_{i(i-1)}^{\text{tF}}, \mathbf{H}_{i(i-1)}^{\text{tB}} \right]^{\perp} \in C^{M \times (M-K)}$$

where $\mathbf{I}_M$ is the identity matrix of order M, $[\cdot]^{\perp}$ is a basis matrix of the orthonormal complementary space of $[\cdot]$, $\mathbf{H}_{i(i-1)}^{\text{tF}}$ is computed based on the following Expression,

$$\mathbf{H}_{i(i-1)}^{\text{tF}} = \widetilde{\mathbf{H}}_{i(i-1)}^{\text{tF}} \widetilde{\widetilde{\mathbf{W}}}_{(i-1)}^{\text{tF}} \in C^{M \times K^{\text{F}}}$$

in this time, the forward link of the i-th receiving node is regarded as a MIMO link with an equivalent channel matrix $\widetilde{\mathbf{H}}_{i(i-1)}^{\text{FF}}$ that is represented by the following Expression,

$$\widetilde{\mathbf{H}}_{i(i-1)}^{\text{FF}} = \left( \widetilde{\mathbf{W}}_i^{\text{rF}} \right)^H \mathbf{H}_{i(i-1)} \widetilde{\mathbf{W}}_{(i-1)}^{\text{tF}} \in C^{M \times (M-K)}$$

in this time, $\widetilde{\widetilde{\mathbf{W}}}_{(i-1)}^{\text{tF}} \in C^{(M-K) \times K^{\text{F}}}$ and $\widetilde{\widetilde{\mathbf{W}}}_i^{\text{rF}} \in C^{M \times K^{\text{F}}}$ are obtained as the MIMO transmitting weight matrix and the MIMO receiving weight matrix of the adopted MIMO transmission scheme, when the block ZF receiving weight matrices $\widetilde{\mathbf{W}}_i^{\text{rF}}$ and $\widetilde{\mathbf{W}}_i^{\text{rB}}$ are given, the following Expressions hold,

$$\mathbf{y}_{i(i-1)}^{\text{F}} = \mathbf{H}_{i(i-1)}^{\text{eFF}} \mathbf{s}_{(i-1)}^{\text{F}} + \mathbf{H}_{i(i-1)}^{\text{eFB}} \mathbf{s}_{(i-1)}^{\text{B}}$$

$$\mathbf{y}^{\mathrm{B}}_{i(i-1)} = \mathbf{O}$$

where $\mathbf{H}^{\mathrm{eFF}}_{i(i-1)}$ is an equivalent channel matrix of the forward link from the (i-1)-th transmitting node to the i-th receiving node and is computed based on the following Expression,

$$\mathbf{H}^{\mathrm{eFF}}_{i(i-1)} = \left( \widetilde{\widetilde{\mathbf{W}}}^{\mathrm{rF}}_i \right)^H \widetilde{\widetilde{\mathbf{H}}}^{\mathrm{FF}}_{i(i-1)} \widetilde{\widetilde{\mathbf{W}}}^{\mathrm{tF}}_{(i-1)} \in C^{K^{\mathrm{F}} \times K^{\mathrm{F}}}$$

$\mathbf{H}^{\mathrm{eFB}}_{i(i-1)}$ is an equivalent channel matrix that corresponds to the interferences from the backward link of the (i-1)-th transmitting node to the forward link of the i-th receiving node and is computed based on the following Expression,

$$\mathbf{H}^{\mathrm{eFB}}_{i(i-1)} = \left( \widetilde{\widetilde{\mathbf{W}}}^{\mathrm{rF}}_i \right)^H \widetilde{\mathbf{H}}^{\mathrm{FB}}_{i(i-1)} \widetilde{\widetilde{\mathbf{W}}}^{\mathrm{tB}}_{(i-1)} \in C^{K^{\mathrm{F}} \times K^{\mathrm{B}}}$$

$\widetilde{\mathbf{H}}^{\mathrm{FB}}_{i(i-1)}$ is an equivalent channel matrix that corresponds to the interference signal from the backward link of the (i-1)-th transmitting node formed by the block ZF to the forward link of the i-th receiving node and is computed based on the following Expression,

$$\widetilde{\mathbf{H}}^{\mathrm{FB}}_{i(i-1)} = \left( \widetilde{\mathbf{W}}^{\mathrm{rF}}_i \right)^H \mathbf{H}_{i(i-1)} \widetilde{\mathbf{W}}^{\mathrm{tB}}_{(i-1)} \in C^{M \times M}$$

in this regard, both $\mathbf{S}^{\mathrm{F}}_{(i-1)}$ and $\mathbf{S}^{\mathrm{B}}_{(i-1)}$ are known, the (i-1)-th transmitting node utilizes the channel reciprocity $\left( \mathbf{H}^T_{i(i-1)} = \mathbf{H}_{(i-1)i} \right)$, and when the i-th receiving node is in the transmitting mode, the (i-1)-th transmitting node learns equivalent channel matrices $\mathbf{H}^{\mathrm{eFF}}_{i(i-1)}$ and $\mathbf{H}^{\mathrm{eFB}}_{i(i-1)}$ by transmitting a training signal through $\left( \mathbf{W}^{\mathrm{rF}}_i \right)^*$, or the (i-1)-th transmitting node transmits the training signal through $\mathbf{W}^{\mathrm{tF}}_{(i-1)}$ and $\mathbf{W}^{\mathrm{tB}}_{(i-1)}$, and the i-th receiving node learns $\mathbf{H}^{\mathrm{eFF}}_{i(i-1)}$ and $\mathbf{H}^{\mathrm{eFB}}_{i(i-1)}$ and then feeds back the learned $\mathbf{H}^{\mathrm{eFF}}_{i(i-1)}$ and $\mathbf{H}^{\mathrm{eFB}}_{i(i-1)}$ to the (i-1)-th transmitting node, the transmitting signal $\mathbf{S}^{\mathrm{FDPC}}_{(i-1)}$ of the forward link of the (i-1)-th transmitting node is represented by the following Expression,

$$\mathbf{S}^{\mathrm{FDPC}}_{(i-1)} = \mathbf{S}^{\mathrm{F}}_{(i-1)} - \left[ \mathbf{H}^{\mathrm{eFF}}_{i(i-1)} \right]^{-1} \mathbf{H}^{\mathrm{eFB}}_{i(i-1)} \mathbf{S}^{\mathrm{B}}_{(i-1)}$$

in this time, the receiving signal $\mathbf{y}^{\mathrm{FDPC}}_{i(i-1)}$ of the forward link of the i-th receiving node is represented by

$$\mathbf{y}_{i(i-1)}^{\text{FDPC}} = \mathbf{H}_{i(i-1)}^{\text{eFF}} \mathbf{s}_{(i-1)}^{\text{FDPC}} + \mathbf{H}_{i(i-1)}^{\text{eFB}} \mathbf{s}_{(i-1)}^{\text{B}} = \mathbf{H}_{i(i-1)}^{\text{eFF}} \mathbf{s}_{(i-1)}^{\text{F}} \ .$$

Further, the above object of the present invention is also effectively achieved by the construction that when attention is focused on the (i+1)-th transmitting node, a receiving weight matrix $\mathbf{W}_i^{\text{rF}} \in C^{M \times K^{\text{F}}}$ for the forward link of the i-th receiving node is known, a block ZF receiving weight matrix $\widetilde{\mathbf{W}}_i^{\text{rB}} \in C^{M \times (M-K)}$ for the backward link of the i-th receiving node is known, the (i+1)-th transmitting node utilizes the channel reciprocity $\left( \mathbf{H}_{i(i+1)}^{T} = \mathbf{H}_{(i+1)i} \right)$, and when the i-th receiving node is in the transmitting mode, the (i+1)-th transmitting node learns equivalent receiving channel matrices $\mathbf{H}_{i(i+1)}^{\text{rF}} \in C^{M \times K^{\text{F}}}$ and $\widetilde{\mathbf{H}}_{i(i+1)}^{\text{rB}} \in C^{M \times (M-K)}$ as the following Expressions by transmitting a training signal through a conjugate receiving weight of the i-th receiving node, or the (i+1)-th transmitting node transmits the training signal, and the i-th receiving node learns $\mathbf{H}_{i(i+1)}^{\text{rF}}$ and $\widetilde{\mathbf{H}}_{i(i+1)}^{\text{rB}}$ as the following Expressions and then feeds back the learned $\mathbf{H}_{i(i+1)}^{\text{rF}}$ and $\widetilde{\mathbf{H}}_{i(i+1)}^{\text{rB}}$ to the (i+1)-th transmitting node,

$$\mathbf{H}_{i(i+1)}^{\text{rF}} = \left( \mathbf{H}_{i(i+1)} \right)^{T} \left( \mathbf{W}_i^{\text{rF}} \right)^{*} \in C^{M \times K^{\text{F}}}$$

$$\widetilde{\mathbf{H}}_{i(i+1)}^{\text{rB}} = \left( \mathbf{H}_{i(i+1)} \right)^{T} \left( \widetilde{\mathbf{W}}_i^{\text{rB}} \right)^{*} \in C^{M \times (M-K)}$$

where $[\cdot]^{*}$ is a complex conjugate matrix of $[\cdot]$, $[\cdot]^{T}$ is a transposed matrix of $[\cdot]$, by using the learned $\mathbf{H}_{i(i+1)}^{\text{rF}}$ and $\widetilde{\mathbf{H}}_{i(i+1)}^{\text{rB}}$, the block ZF transmitting weight matrices $\widetilde{\mathbf{W}}_{(i+1)}^{\text{tF}}$ and $\widetilde{\mathbf{W}}_{(i+1)}^{\text{tB}}$ for the forward link and the backward link of the (i+1) transmitting node, are computed based on the following Expressions,

$$\widetilde{\mathbf{W}}_{(i+1)}^{\text{tF}} = \left[ \left( \mathbf{H}_{i(i+1)}^{\text{rF}} \right)^{*}, \left( \mathbf{H}_{i(i+1)}^{\text{rB}} \right)^{*} \right]^{\perp} \in C^{M \times (M-K)}$$

$$\widetilde{\mathbf{W}}_{(i+1)}^{\text{tB}} = \mathbf{I}_M \in C^{M \times M}$$

where $\mathbf{I}_M$ is the identity matrix of order M, $[\cdot]^{\perp}$ is a basis matrix of the orthonormal complementary space of $[\cdot]$, $\mathbf{H}_{i(i+1)}^{\text{rB}}$ is computed based on the following Expression,

$$\mathbf{H}_{i(i+1)}^{\mathrm{rB}} = \widetilde{\mathbf{H}}_{i(i+1)}^{\mathrm{rB}} \left( \widetilde{\widetilde{\mathbf{W}}}_{i}^{\mathrm{rB}} \right)^{*} \in C^{M \times K^{\mathrm{B}}}$$

in this time, the backward link of the (i+1)-th transmitting node is regarded as a MIMO link with an equivalent channel matrix $\widetilde{\mathbf{H}}_{i(i+1)}^{\mathrm{BB}}$ that is represented by the following Expression,

$$\widetilde{\mathbf{H}}_{i(i+1)}^{\mathrm{BB}} = \left( \widetilde{\mathbf{W}}_{i}^{\mathrm{rB}} \right)^{H} \mathbf{H}_{i(i+1)} \widetilde{\mathbf{W}}_{(i+1)}^{\mathrm{tB}} \in C^{(M-K) \times M}$$

in this time, $\widetilde{\widetilde{\mathbf{W}}}_{i}^{\mathrm{rB}} \in C^{(M-K) \times K^{\mathrm{B}}}$ and $\widetilde{\widetilde{\mathbf{W}}}_{(i+1)}^{\mathrm{tB}} \in C^{M \times K^{\mathrm{B}}}$ are obtained as the MIMO transmitting weight matrix and the MIMO receiving weight matrix of the adopted MIMO transmission scheme, when the block ZF transmitting weight matrices $\widetilde{\mathbf{W}}_{(i+1)}^{\mathrm{tF}}$ and $\widetilde{\mathbf{W}}_{(i+1)}^{\mathrm{tB}}$ are given, the following Expressions hold,

$$\mathbf{y}_{i(i+1)}^{\mathrm{F}} = \mathbf{H}_{i(i+1)}^{\mathrm{eFB}} \mathbf{s}_{(i+1)}^{\mathrm{B}}$$

$$\mathbf{y}_{i(i+1)}^{\mathrm{B}} = \mathbf{H}_{i(i+1)}^{\mathrm{eBB}} \mathbf{s}_{(i+1)}^{\mathrm{B}}$$

where $\mathbf{H}_{i(i+1)}^{\mathrm{eBB}}$ is an equivalent channel matrix of the backward link from the (i+1)-th transmitting node to the i-th receiving node and is computed based on the following Expression,

$$\mathbf{H}_{i(i+1)}^{\mathrm{eBB}} = \left( \widetilde{\widetilde{\mathbf{W}}}_{i}^{\mathrm{rB}} \right)^{H} \widetilde{\mathbf{H}}_{i(i+1)}^{\mathrm{BB}} \widetilde{\widetilde{\mathbf{W}}}_{(i+1)}^{\mathrm{tB}} \in C^{K^{\mathrm{B}} \times K^{\mathrm{B}}}$$

$\mathbf{H}_{i(i+1)}^{\mathrm{eFB}}$ is an equivalent channel matrix that corresponds to the interferences from the backward link of the (i+1)-th transmitting node to the forward link of the i-th receiving node and is computed based on the following Expression,

$$\mathbf{H}_{i(i+1)}^{\mathrm{eFB}} = \left( \widetilde{\widetilde{\mathbf{W}}}_{i}^{\mathrm{rF}} \right)^{H} \widetilde{\mathbf{H}}_{i(i+1)}^{\mathrm{FB}} \widetilde{\widetilde{\mathbf{W}}}_{(i+1)}^{\mathrm{tB}} \in C^{K^{\mathrm{F}} \times K^{\mathrm{B}}}$$

$\widetilde{\mathbf{H}}_{i(i+1)}^{\mathrm{FB}}$ is an equivalent channel matrix that corresponds to the interference signal from the backward link of the (i+1)-th transmitting node formed by the block ZF to the forward link of the i-th receiving node and is computed based on the following Expression,

$$\widetilde{\mathbf{H}}_{i(i+1)}^{\mathrm{FB}} = \left(\widetilde{\mathbf{W}}_{i}^{\mathrm{rF}}\right)^{H} \mathbf{H}_{i(i+1)} \widetilde{\mathbf{W}}_{(i+1)}^{\mathrm{tB}} \in C^{M \times M}$$

the i-th receiving node learns equivalent channel matrices $\mathbf{H}_{i(i+1)}^{\mathrm{eFF}}$ and $\mathbf{H}_{i(i+1)}^{\mathrm{eFB}}$ by using the training signal that is transmitted from the (i+1)-th transmitting node through the transmitting weight vector $\mathbf{W}_{(i+1)}^{\mathrm{tB}}$, here, in the receiving signal vector $\mathbf{y}_{i}^{\mathrm{B}}$ of the backward link of the i-th receiving node, as shown in the following Expression, the desired signal vector $\mathbf{s}_{(i+1)}^{\mathrm{B}}$ is received without the interferences from the other links,

$$\mathbf{y}_{i}^{\mathrm{B}} = \mathbf{y}_{i(i-1)}^{\mathrm{B}} + \mathbf{y}_{i(i+1)}^{\mathrm{B}} + \mathbf{n}_{i}^{\mathrm{B}} = \mathbf{H}_{i(i+1)}^{\mathrm{eBB}} \mathbf{s}_{(i+1)}^{\mathrm{B}} + \mathbf{n}_{i}^{\mathrm{B}}$$

in this regard, the i-th receiving node learns equivalent channel matrices $\mathbf{H}_{i(i+1)}^{\mathrm{eBB}}$ and $\mathbf{H}_{i(i+1)}^{\mathrm{eFB}}$ by using the training signal that is transmitted from the (i+1)-th transmitting node through $\mathbf{W}_{(i+1)}^{\mathrm{tB}}$, firstly the i-th receiving node detects $\mathbf{s}_{(i+1)}^{\mathrm{B}}$ depending on the adopted MIMO transmission scheme, and then the i-th receiving node assumes that $\hat{\mathbf{s}}_{(i+1)}^{\mathrm{B}}$ is detected accurately and realizes the interference cancellation by subtracting the replica signal from the receiving signal vector $\mathbf{y}_{i}^{\mathrm{F}}$ of the forward link of the i-th receiving node as shown in the following Expression,

$$\mathbf{y}_{i}^{\mathrm{FSIC}} = \mathbf{y}_{i}^{\mathrm{F}} - \mathbf{H}_{i(i+1)}^{\mathrm{eFB}} \hat{\mathbf{s}}_{(i+1)}^{\mathrm{B}} = \mathbf{y}_{i(i-1)}^{\mathrm{FDPC}} + \mathbf{y}_{i(i+1)}^{\mathrm{F}} - \mathbf{H}_{i(i+1)}^{\mathrm{eFB}} \hat{\mathbf{s}}_{(i+1)}^{\mathrm{B}} + \mathbf{n}_{i}^{\mathrm{F}} = \mathbf{H}_{i(i-1)}^{\mathrm{eFF}} \mathbf{s}_{(i-1)}^{\mathrm{F}} + \mathbf{n}_{i}^{\mathrm{F}}$$

where $\mathbf{H}_{i(i-1)}^{\mathrm{eFF}}$ is an equivalent channel matrix of the forward link from the (i-1)-th transmitting node to the i-th receiving node, $\mathbf{s}_{(i-1)}^{\mathrm{F}}$ is an interference signal vector.

Moreover, the present invention relates to a MIMO-OFDM mesh network which operates as a broadband wireless network and is constructed by combining the MIMO mesh network according to the present invention and the orthogonal frequency division multiplexing (OFDM). The above object of the present invention is effectively achieved by the construction that the MIMO algorithm used in said MIMO mesh network is applied to each sub-carrier of the OFDM, in the l-th sub-carrier of the OFDM, $K^{\mathrm{F}}(l)$ stream signals are multiplexed in the forward link, and at the same time $K^{\mathrm{B}}(l)$ stream signals are multiplexed in the backward link, a signal model of said MIMO-OFDM mesh network is formulated as follows,

$$\mathbf{y}_{i}^{\mathrm{F}}(l) = \mathbf{y}_{i(i-1)}^{\mathrm{F}}(l) + \mathbf{y}_{i(i+1)}^{\mathrm{F}}(l) + \mathbf{n}_{i}^{\mathrm{F}}(l)$$

$$\mathbf{y}_{i}^{\mathrm{B}}(l) = \mathbf{y}_{i(i-1)}^{\mathrm{B}}(l) + \mathbf{y}_{i(i+1)}^{\mathrm{B}}(l) + \mathbf{n}_{i}^{\mathrm{B}}(l)$$

where $\mathbf{y}_i^F(l) \in C^{K^F(l)}$ is a receiving signal vector of the forward link of the *l*-th sub-carrier in the i-th receiving node, $\mathbf{y}_i^B(l) \in C^{K^B(l)}$ is a receiving signal vector of the backward link of the *l*-th sub-carrier in the i-th receiving node,

$$\mathbf{y}_{i(i-1)}^F(l) = \left(\mathbf{W}_i^{rF}(l)\right)^H \mathbf{H}_{i(i-1)}(l)\mathbf{W}_{(i-1)}^{tF}(l)\mathbf{s}_{(i-1)}^F(l)$$
$$+\left(\mathbf{W}_i^{rF}(l)\right)^H \mathbf{H}_{i(i-1)}(l)\mathbf{W}_{(i-1)}^{tB}(l)\mathbf{s}_{(i-1)}^B(l)$$

$$\mathbf{y}_{i(i+1)}^F(l) = \left(\mathbf{W}_i^{rF}(l)\right)^H \mathbf{H}_{i(i+1)}(l)\mathbf{W}_{(i+1)}^{tF}(l)\mathbf{s}_{(i+1)}^F(l)$$
$$+\left(\mathbf{W}_i^{rF}(l)\right)^H \mathbf{H}_{i(i+1)}(l)\mathbf{W}_{(i+1)}^{tB}(l)\mathbf{s}_{(i+1)}^B(l)$$

$$\mathbf{y}_{i(i-1)}^B(l) = \left(\mathbf{W}_i^{rB}(l)\right)^H \mathbf{H}_{i(i-1)}(l)\mathbf{W}_{(i-1)}^{tF}(l)\mathbf{s}_{(i-1)}^F(l)$$
$$+\left(\mathbf{W}_i^{rB}(l)\right)^H \mathbf{H}_{i(i-1)}(l)\mathbf{W}_{(i-1)}^{tB}(l)\mathbf{s}_{(i-1)}^B(l)$$

$$\mathbf{y}_{i(i+1)}^B(l) = \left(\mathbf{W}_i^{rB}(l)\right)^H \mathbf{H}_{i(i+1)}(l)\mathbf{W}_{(i+1)}^{tF}(l)\mathbf{s}_{(i+1)}^F(l)$$
$$+\left(\mathbf{W}_i^{rB}(l)\right)^H \mathbf{H}_{i(i+1)}(l)\mathbf{W}_{(i+1)}^{tB}(l)\mathbf{s}_{(i+1)}^B(l)$$

where $[\cdot]^H$ represents a complex conjugate transposed matrix of $[\cdot]$, $\mathbf{s}_j^F(l) \in C^{K^F(l)}$ and $\mathbf{s}_j^B(l) \in C^{K^B(l)}$ are transmitting signal vectors for the forward link and the backward link of the *l*-th sub-carrier in the j-th node, $\mathbf{H}_{ij}(l) \in C^{M \times M}$ is a channel matrix of the *l*-th sub-carrier from the j-th node to the i-th node, $\mathbf{W}_j^{tF}(l) \in C^{M \times K^F(l)}$ and $\mathbf{W}_j^{tB}(l) \in C^{M \times K^B(l)}$ are transmitting weight matrices for the forward link and the backward link of the *l*-th sub-carrier in the j-th node, $\mathbf{W}_i^{rF}(l) \in C^{M \times K^F(l)}$ and $\mathbf{W}_i^{rB}(l) \in C^{M \times K^B(l)}$ are receiving weight matrices for the forward link and the backward link of the *l*-th sub-carrier in the i-th node, $\mathbf{n}_i^F(l) \in C^{K^F(l)}$ and

$$\mathbf{n}_i^{\mathrm{B}}(l) \in C^{K^{\mathrm{B}}(l)}$$ are equivalent additive noise vectors of the forward link and the backward link of the *l*-th sub-carrier that are received in the i-th node, for said formulated signal model, the computing process algorithms of the transmitting weight matrix and the receiving weight matrix of said MIMO mesh network is applied to every sub-carrier of the OFDM.

BRIEF DESCRIPTION OF THE DRAWINGS

FIG.1 is a conceptual diagram illustrating a conventional one-dimensional (1D) mesh network (a multi-hop network);
FIG.2 is a conceptual diagram illustrating the concept of a cognitive MIMO mesh network;
FIG.3 is a conceptual diagram illustrating the concept of MIMO multiple access (MIMO-MA);
FIG.4 is a conceptual diagram illustrating the concept of MIMO broadcast (MIMO-BC);
FIG.5 is a conceptual diagram illustrating a one-dimensional (1D) MIMO mesh network according to a first embodiment of the present invention;
FIG.6 is a conceptual diagram illustrating the relation between transmitting weight and receiving weight in the one-dimensional (1D) MIMO mesh network according to the first embodiment of the present invention;
FIG.7 is a conceptual diagram illustrating a two-dimensional (2D) MIMO mesh network according to the first embodiment of the present invention;
FIG.8 is a conceptual diagram illustrating the simulation scenarios;
FIG.9 is a graph showing the results of simulation;
FIG.10 is a conceptual diagram illustrating a MIMO mesh network according to a second embodiment of the present invention;
FIG.11 is a conceptual diagram illustrating a MIMO mesh network using a linear algorithm according to the second embodiment of the present invention;
FIG.12 is a conceptual diagram illustrating a MIMO mesh network using a nonlinear algorithm according to the second embodiment of the present invention;
FIG.13 is a conceptual diagram illustrating the scenarios (a), (b), (c), (d), (e) and (f) for numerical simulation;
FIG.14 is a diagram showing the matrices represent the interference distance;
FIG.15 is a graph showing the relation between the average sum capacity and the SNR of each scenario computed by Monte Carlo simulation in the case of ignoring interference signals from nodes having a 3d or more distance;
FIG. 16 is a graph showing the relation between the average sum capacity and the SNR of each scenario computed by Monte Carlo simulation in the case of considering all interference signals within network;
FIG.17 is a conceptual diagram illustrating a generalized MIMO mesh network according to the present invention;
FIG.18 is a conceptual diagram illustrating a generalized MIMO mesh network using a linear algorithm according to the present invention; and
FIG.19 is a conceptual diagram illustrating a generalized MIMO mesh network using a nonlinear algorithm according to the present invention.

THE BEST MODE FOR CARRYING OUT THE INVENTION

The following is a description of preferred embodiments for carrying out the present invention, with reference to the accompanying drawings and expressions.

In recent years, cognitive wireless technology that recognizes radio wave environment (wireless environment) and performs wireless resource assignment dynamically, attracts attention (see Non-Patent Documents 3 and 4). In the cognitive wireless technology that was already proposed now, dynamical assignment of frequency channel is mainly studied. A cognitive wireless network that achieves ultimate spectral efficiency by recognizing all wireless environments, the recognized information is shared by wireless nodes and furthermore performing cooperative and adaptive processing base on the recognized information, will be desirable in future.

It is conceivable that a cognitive MIMO mesh network (a secondary wireless system) overlaid on an existing system (a primary wireless system) can be constructed by dynamically assigning wireless resources such as time, space, spectral and power. It is possible to illustrate the concept of such a cognitive MIMO mesh network in FIG.2.

MIMO-OFDM (Orthogonal Frequency Division Multiplexing) is adopted as the communication scheme of mesh nodes in the secondary wireless systemwhich is overlaid on the primary wireless system. It is possible to construct a local autonomous decentralized wireless network with fast transmission rate and high reliability by realizing the following elemental technology for these mesh nodes.

Elemental technology:

(1) Cooperative recognition of wireless environments and sharing of the recognized information
(2) Spatial spectral sharing by MIMO technology
(3) Area spectral sharing by adaptive routing and adaptive power control
(4) Adaptive radio resources management of time, space and spectral
(5) Network coding and cooperative relay
(6) Cross-layer optimization of the above elemental technology (1) to (5)

It is possible to apply such a cognitive MIMO mesh network to a local wireless network that does not use a public wireless network or is overlaid on a public wireless network (for example, a wireless LAN in an event site, a public wireless system used in a police station or a fire department, an emergency wireless system in a disaster area, a wireless plant control system, and a sensor network), and a wireless network in the shielded environment where a public wireless network does not reach.

Here, we explain the mathematical.symbols that are used in the mathematical expressions described below. $[\cdot]^*$ represents a complex conjugate matrix of $[\cdot]$. $[\cdot]^T$ represents a transposed matrix of $[\cdot]$. $[\cdot]^H$ represents a complex conjugate transposed matrix of $[\cdot]$. $\mathbf{x}^{\perp}$ represents a basis vector that is orthogonal to $\mathbf{x}$. $\mathbf{x}^{\parallel}$ represents a basis vector that is parallel to $\mathbf{x}$.

<1> MIMO receiving-interference/transmitting-interference avoidance (spectrum sharing)

Here, we explain the methods of the receiving-interference/transmitting-interference avoidance and the multiplexing that use MIMO technology from analogy with the multi-user MIMO system (see Non-Patent Document 5), as a basic technology to construct a MIMO mesh network of the present invention. Using these receiving-interference/transmitting-interference avoidance and multiplexing technologies, is capable of the spectrum sharing in a space axis, and it is possible to realize wireless networks with high spectrum efficiency.

The technology in which a node having a MIMO antenna performs the spectrum sharing with multiple systems including a primary wireless system and a secondary wireless system by the receiving process, is called as a MIMO multiple access (a MIMO-MA). The technology in which a node having a MIMO antenna performs the spectrum sharing with multiple systems including a primary wireless system and a secondary wireless system by the transmitting process, is called as a MIMO broadcast (a MIMO-BC).

<1-1> receiving-interference avoidance in MIMO-MA

Here, we explain the methods of the receiving-interference avoidance and the multiplexing in the MIMO-MA.

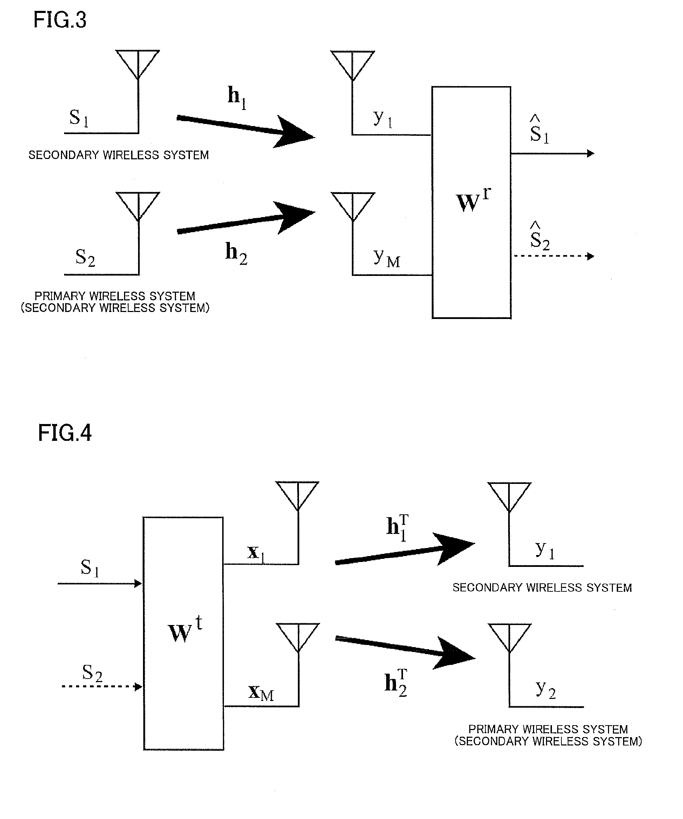

FIG.3 shows an example of system configuration diagram of the MIMO multiple access (the MIMO-MA). In the MIMO-MA, K transmitting nodes including the primary wireless system and the secondary wireless system, access a receiving node having M antennas at the same time. However, to simplify explanation, as shown in FIG.3, we explain the case of K=2.

Here, when the receiving signal from the i-th transmitting node is assumed as $s_i$ and the channel vector between the i-th transmitting node and the receiving node is assumed as $\mathbf{h}_i \in C^M$, the receiving signal vector $\mathbf{y} \in C^M$ can be represented by the following Expression 1.

[Expression 1]

$$\mathbf{y} = \mathbf{h}_1 s_1 + \mathbf{h}_2 s_2 + \mathbf{n} = \begin{bmatrix} \mathbf{h}_1 & \mathbf{h}_2 \end{bmatrix} \mathbf{s} + \mathbf{n}$$

where, $\mathbf{s}=[s_1\ s_2]^T \in C^2$ holds. $\mathbf{n} \in C^M$ is an additive noise vector.

Here, the purpose of the MIMO receiving algorithm is to receive the desired signal $s_1$ from the secondary wireless system while avoiding the receiving-interference signal $s_2$ from the primary wireless system. Furthermore, when both $s_1$ and $s_2$ are signal from the secondary wireless system, it is possible to improve the spectrum efficiency of the system by performing the spatial multiplexing transmission of $s_1$ and $s_2$.

The linear ZF algorithm and the nonlinear SIC algorithm are known as the methods of the receiving-interference avoidance and the multiplexing in the MIMO-MA.

Firstly, we describe the linear ZF (Zero Forcing) algorithm.

In the receiving-interference avoidance using the linear ZF algorithm, the basis weight $\mathbf{w}_1^r = (\mathbf{h}_2)^\perp \in C^M$ that is orthogonal to a channel vector $\mathbf{h}_2$ of the primary wireless system, is used as the receiving weight for the secondary wireless system.

The output signal $\tilde{y}_1$ of this time, can be represented by the following Expression 2 and does not suffer the interferences from the primary wireless system.

$$[\text{Expression } 2]$$

$$\tilde{y}_1 = \mathbf{w}_1^{r^H}\mathbf{y} = h_1^e s_1 + \tilde{n}$$

Therefore, it is possible to receiving the signal $s_1$ from the secondary wireless system without suffering the interferences from the primary wireless system.

$$[\text{Expression } 3]$$

$$\hat{s}_1 = \frac{1}{h_1^e}\tilde{y}_1$$

Where, $h_1^e = \mathbf{w}_1^{r^H}\mathbf{h}_1$ is an effective channel response of the secondary wireless system. $\tilde{n} = \mathbf{w}_1^{r^H}\mathbf{n}$ Holds.

On the other hand, when both $s_1$ and $s_2$ are signals of the secondary wireless system, it is possible to perform the multiplexing transmission by receiving $s_2$ with the weight $\mathbf{w}_2^r = (\mathbf{h}_1)^\perp \in C^M$ that is orthogonal to a channel vector $\mathbf{h}_1$.

The output signal vector $\tilde{y} = [\tilde{y}_1 \ \tilde{y}_2]^T \in C^2$ of this time, can be represented by the following Expression 4.

$$[\text{Expression } 4]$$

$$\tilde{\mathbf{y}} = \begin{bmatrix} \mathbf{w}_1^r & \mathbf{w}_2^r \end{bmatrix}^H \mathbf{y} = \begin{bmatrix} h_1^e & 0 \\ 0 & h_2^e \end{bmatrix}\mathbf{s} + \tilde{\mathbf{n}}$$

Where, $\tilde{\mathbf{n}} = \begin{bmatrix} \mathbf{w}_1^r & \mathbf{w}_2^r \end{bmatrix}^H \mathbf{n}$ holds.

Here, since the channels are diagonalized, it is clear that both $s_1$ and $s_2$ can be detected without the interferences, and the receiving-interference avoidance and the multiplexing transmission are realized as shown in the following Expressions 5 and 6.

$$[\text{Expression } 5]$$

$$\hat{s}_1 = \frac{1}{h_1^e}\tilde{y}_1$$

[Expression 6]

$$\hat{s}_2 = \frac{1}{h_2^e} \tilde{y}_2$$

As mentioned above, we explained the ZF algorithm as a linear algorithm. With respect to the other linear algorithm, for example, for the MMSE algorithm, the same discussion is possible.

Next, we describe the nonlinear SIC (Successive Interference Cancellation) algorithm (see Non-Patent Document 6).

The nonlinear SIC algorithm is an algorithm that firstly detects the signal of the primary wireless system and then performs the receiving-interference avoidance by subtracting the detected signal from the receiving signal.

In the nonlinear SIC algorithm, the weight $\mathbf{w}_2^r = (\mathbf{h}_1)^{\perp}$ that is orthogonal to the channel vector $\mathbf{h}_1$ of the secondary wireless system, is used as the receiving weight of the primary wireless system, and the weight $\mathbf{w}_1^r = (\mathbf{h}_1)^{\parallel}$ that is parallel (matched) to the channel vector $\mathbf{h}_1$ of the secondary wireless system, is used as the receiving weight of the secondary wireless system.

The output signal vector of this time, can be represented by the following Expression 7.

[Expression 7]

$$\tilde{\mathbf{y}} = \begin{bmatrix} \mathbf{w}_1^r & \mathbf{w}_2^r \end{bmatrix}^H \mathbf{y} = \begin{bmatrix} h_1^e & h_2^i \\ 0 & h_2^e \end{bmatrix} \mathbf{s} + \tilde{\mathbf{n}}$$

Where, $h_2^i$ represents the interference from the primary wireless system to the secondary wireless system.

Therefore, it is possible to detect the signal of the secondary wireless system by firstly detecting the signal $\hat{s}_2$ of the primary wireless system represented by the following Expression 8, and then performing the receiving-interference avoidance by the following Expression 9.

[Expression 8]

$$\hat{s}_2 = \frac{1}{h_2^e} \tilde{y}_2$$

[Expression 9]

$$\hat{s}_1 = \frac{1}{h_1^e} (\tilde{y}_1 - h_2^i \hat{s}_2)$$

Furthermore, when both $s_1$ and $s_2$ are signals from the secondary wireless system, the sequencing multiplexing transmission is realized by the same procedure. Moreover, the sequences of processing of $s_1$ and $s_2$ are not limited to the above procedure.

<1-2> transmitting-interference avoidance in MIMO-BC

Here, we explain the methods of the transmitting-interference avoidance and the multiplexing in the MIMO-BC.

FIG.4 shows an example of system configuration diagram of the MIMO broadcast (the MIMO-BC). The MIMO-MA and the MIMO-BC have a dual relation except for the constraint condition of transmitting power.

When the transmitting signal vector of the transmitting node is assumed to $\mathbf{x} \in C^M$ and the channel vector from the transmitting node to the i-th receiving node is assumed to $\mathbf{h}_i^T \in C^{1 \times M}$, the receiving signal $y_i$ of the i-th node can be represented by the following Expressions 10 and 11.

$$[\text{Expression 10}]$$

$$y_1 = \mathbf{h}_1^T \mathbf{x} + n_1$$

$$[\text{Expression 11}]$$

$$y_2 = \mathbf{h}_2^T \mathbf{x} + n_2$$

Where, $n_i$ is an additive noise of the i-th receiving node. Furthermore, when the two receiving signals are put together in a vector $\mathbf{y} = [y_1\ y_2]^T \in C^2$, the following Expression 12 holds.

$$[\text{Expression 12}]$$

$$\mathbf{y} = \begin{bmatrix} \mathbf{h}_1 & \mathbf{h}_2 \end{bmatrix}^T \mathbf{x} + \mathbf{n}$$

Where, $\mathbf{n} \in C^2$ is a vector that puts together additive noises $n_1$ and $n_2$ of two nodes.

Here, the purpose of the MIMO transmitting algorithm is to transmit the desired signal to the secondary wireless system while avoiding the transmitting-interference $y_2$ to the primary wireless system. Furthermore, when the two receiving nodes are the nodes of the secondary wireless system, it is possible to improve the spectrum efficiency of system by performing the spatial multiplexing transmission of different information.

The linear ZF algorithm and the nonlinear DPC (SIC) algorithm are known as the methods of the transmitting-interference avoidance and the multiplexing in the MIMO-BC.

Firstly, we describe the linear ZF algorithm.

In the transmitting-interference avoidance using the linear ZF algorithm, based on the following Expression 13, the transmission is performed by preliminarily multiplying the transmitting signal $s_1$ of the secondary wireless system by the transmitting weight $\mathbf{w}_1^t \in C^M$.

$$[\text{Expression 13}]$$

$$\mathbf{x} = \mathbf{w}_1^t s_1$$

In this time, it is possible to perform the transmitting-interference avoidance by using the basis weight $\mathbf{w}_1^t = (\mathbf{h}_2^*)^\perp$ that is orthogonal to a channel vector $\mathbf{h}_2^*$ of the primary wireless system as the transmitting weight.

The receiving signal vector of this time can be represented by the following Expression 14, and it is clear that the transmitting-interference avoidance is performed.

[Expression 14]

$$\tilde{\mathbf{y}} = \begin{bmatrix} \mathbf{h}_1 & \mathbf{h}_2 \end{bmatrix}^T \mathbf{w}_1^t s_1 + \mathbf{n} = \begin{bmatrix} h_1^e \\ 0 \end{bmatrix} s_1 + \mathbf{n}$$

Where, $h_1^e = \mathbf{h}_1^T \mathbf{w}_1^t$ is an effective channel response to the secondary wireless system.

Furthermore, when y1 and y2 are signals of the secondary wireless system, based on the following Expression 15, the multiplexing transmission is performed by preliminarily multiplying the transmitting signal $s_2$ by the basis weight $\mathbf{w}_2^t = (\mathbf{h}_1^*)^\perp \in C^M$ that is orthogonal to a channel vector $\mathbf{h}_1^*$.

[Expression 15]

$$\mathbf{x} = \begin{bmatrix} \mathbf{w}_1^t & \mathbf{w}_2^t \end{bmatrix} \mathbf{s}$$

The receiving signal vector of this time can be represented by the following Expression 16, and the transmitting-interference avoidance and the multiplexing transmission are possible.

[Expression 16]

$$\tilde{\mathbf{y}} = \begin{bmatrix} \mathbf{h}_1 & \mathbf{h}_2 \end{bmatrix}^T \begin{bmatrix} \mathbf{w}_1^t & \mathbf{w}_2^t \end{bmatrix} \mathbf{s} + \mathbf{n} = \begin{bmatrix} h_1^e & 0 \\ 0 & h_2^e \end{bmatrix} \mathbf{s} + \mathbf{n}$$

Next, we describe the nonlinear DPC (Dirty Paper Coding) algorithm (see Non-Patent Document 7).
The nonlinear DPC algorithm is an algorithm that is equivalent to the SIC algorithm of a transmitting side and performs the transmitting-interference avoidance by preliminarily subtracting the component of the signal of the secondary wireless system which arrives at the primary wireless system in the transmitting side.

In the DPC algorithm, the transmitting weight $\mathbf{w}_2^t = (\mathbf{h}_1^*)^\perp$ that is orthogonal to the channel vector $\mathbf{h}_1^*$ of the secondary wireless system is used for the primary wireless system, and the transmitting weight $\mathbf{w}_1^t = (\mathbf{h}_1^*)^\parallel$ that is parallel (matched) to the channel vector $\mathbf{h}_1^*$ of the secondary wireless system is used for the secondary wireless system.

The receiving signal vector of this time, can be represented by the following Expression 17.

[Expression 17]

$$\tilde{\mathbf{y}} = \begin{bmatrix} \mathbf{h}_1 & \mathbf{h}_2 \end{bmatrix}^T \begin{bmatrix} \mathbf{w}_1^t & \mathbf{w}_2^t \end{bmatrix} \mathbf{s} + \mathbf{n} = \begin{bmatrix} h_1^e & 0 \\ h_1^i & h_2^e \end{bmatrix} \mathbf{s} + \mathbf{n}$$

Where, $h_1^i$ represents the interference from the secondary wireless system to the primary wireless system.

Therefore, it is possible to perform the transmitting-interference avoidance by the following Expression 18 by preliminarily subtracting this interference component $h_1^i$ from the transmitting signal of the primary wireless system.

$$[\text{Expression 18}]$$

$$s_2 = -\frac{1}{h_2^e} h_1^i s_1$$

Furthermore, when both $y_1$ and $y_2$ are signals from the secondary wireless system, the sequencing multiplexing transmission is realized by transmitting an independent transmitting signal $s'_2$ to $y_2$. Moreover, the sequences of processing of $s_1$ and $s_2$ are not limited to the above procedure.

$$[\text{Expression 19}]$$

$$s_2 = s'_2 - \frac{h_1^i}{h_2^e} s_1$$

We explained the methods of the receiving-interference/transmitting-interference avoidance and the multiplexing that use MIMO technology by the above description. It is possible to realize the spectrum sharing in the spatial axis by using these technologies.

<2> MIMO mesh network according to the first embodiment of the present invention

A MIMO mesh network according to the first embodiment of the present invention, is a MIMO mesh network which is obtained by developing the technologies of the receiving-interference/transmitting-interference avoidance and the multiplexing that use MIMO algorithm as described in <1>. According to the MIMO mesh network of the first embodiment of the present invention, it is possible to solve the interference problem of conventional mesh networks (multi-hop networks) and realize high spectrum efficiency.

<2-1> one-dimensional (1D) MIMO mesh network

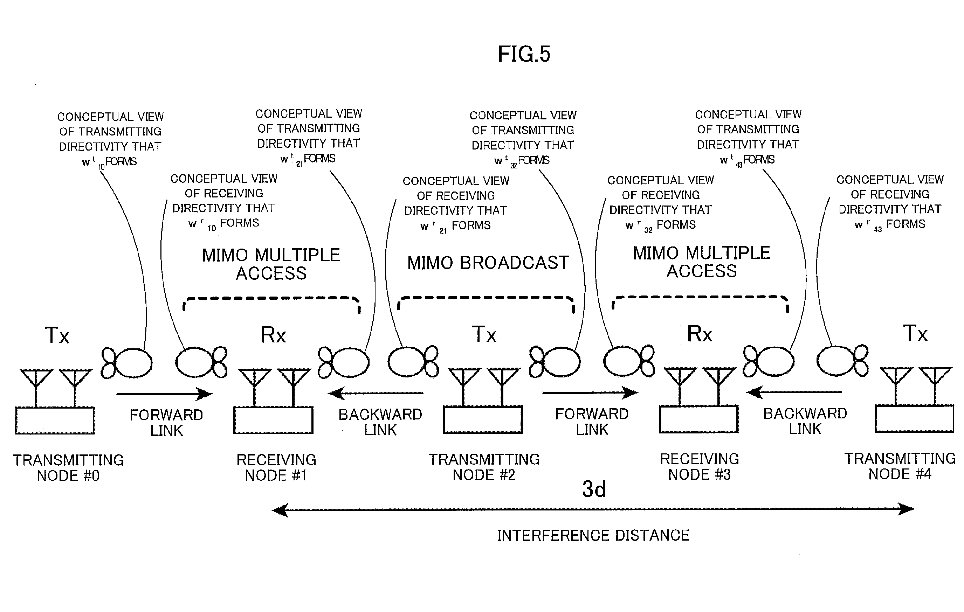

FIG.5 shows the configuration of a one-dimensional (1D) MIMO mesh network that is a specific example of a MIMO mesh network according to the first embodiment of the present invention (hereinafter referred to as "a relay MIMO network").

As shown in FIG.5, the MIMO mesh network of the present invention has a configuration in which the MIMO multiple access and the MIMO broadcast are alternately linked, and simultaneously realizes the interference avoidance (the receiving-interference/transmitting interference avoidance) and the multiplexing transmission. It will be possible to extend the interference distance to 3d by using signal frequency channel. Further, it is possible to improve the spectrum efficiency of the whole network by multiplex transmitting a backward link as well as a forward link.

In the MIMO mesh network according to the first embodiment of the present invention, the computing process methods of the transmitting/receiving weight for simultaneously realizing the interference avoidance and the multiplexing transmission, are divided into the linear algorithm and the nonlinear algorithm, and concretely described as follows.

<2-1-1> linear algorithm

Here, we explain the computing process methods of the transmitting/receiving weight in the MIMO mesh network according to the first embodiment of the present invention, in the case of using the linear ZF algorithm as a MIMO transmission scheme. Moreover, the explanation is performed in order of the computing process method of the receiving weight, the computing process method of the transmitting weight and a mutual relation between transmitting/receiving weights.

Firstly, we explain the computing process method of the receiving weight in the case of using the linear algorithm.

In FIG.5, when attention is focused on the receiving node #1, it is possible to regard the transmitting nodes #0 and #2 as a MIMO multiple access system with multiple antennas.

Here, the purpose of the MIMO algorithm in the receiving node #1, is to receive the signal from the transmitting node #0 while avoiding the receiving-interference from the transmitting node #2, and receive the signal from the transmitting node #2 while avoiding the receiving-interference from the transmitting node #0.

Here, when the transmitting weights of the transmitting nodes #0 and #2 are given in

$\mathbf{w}_{10}^{t} \in \mathbf{C}^{M}, \mathbf{w}_{12}^{t} \in \mathbf{C}^{M}$ respectively, the receiving signal vector $\mathbf{y}_1 \in C^M$ of the receiving node #1 can be represented by the following Expression 20.

[Expression 20]

$$\mathbf{y}_1 = \mathbf{H}_{10}\mathbf{w}_{10}^{t}s_{10} + \mathbf{H}_{12}\mathbf{w}_{12}^{t}s_{12} + \mathbf{n}_1 = \begin{bmatrix} \mathbf{h}_{10}^{t} & \mathbf{h}_{12}^{t} \end{bmatrix}\mathbf{s}_1 + \mathbf{n}_1$$

Where, $s_{10}$ and $s_{12}$ are the transmitting signals of the transmitting node #0 and #2. $\mathbf{s}_1 = [s_{10} \ s_{12}]^T \in C^2$ holds.

Further, $\mathbf{H}_{ij} \in C^{M \times M}$ is a channel matrix from the node #j to the node #i. $\mathbf{h}_{ij}^{t} = \mathbf{H}_{ij}\mathbf{w}_{ij}^{t} \in \mathbf{C}^{M}$ Holds.

Since Expression 20 and Expression 1 have the same constitution, it is possible to receive the signal from the transmitting node #0 while avoiding the receiving-interference from the transmitting node #2 by using

$\mathbf{w}_{10}^{r} = \left(\mathbf{h}_{12}^{t}\right)^{\perp} \in \mathbf{C}^{M}$ that is orthogonal to a channel vector $\mathbf{h}_{12}^{t}$ as the receiving weight.

Further, at the same time, it is possible to realize a bi-directional link multiplexing (hereinafter referred to as "a FB multiplexing") of a forward link and a backward link in the MIMO mesh network by using the receiving weight

$\mathbf{w}_{12}^{r} = \left(\mathbf{h}_{10}^{t}\right)^{\perp} \in \mathbf{C}^{M}$ that is orthogonal to a channel vector $\mathbf{h}_{10}^{t}$.

The output signal vector $\tilde{\mathbf{y}}_1 \in C^2$ of this time can be represented by the following Expression 21, and it is clear that the receiving-interference avoidance and the FB multiplexing are simultaneously realized.

[Expression 21]

$$\tilde{\mathbf{y}}_1 = \begin{bmatrix} \mathbf{w}_{10}^{r} & \mathbf{w}_{12}^{r} \end{bmatrix}^{H}\mathbf{y}_1 = \begin{bmatrix} h_{10}^{e} & 0 \\ 0 & h_{12}^{e} \end{bmatrix}\mathbf{s}_1 + \tilde{\mathbf{n}}_1$$

Where, $h_{ij}^{e} = \mathbf{w}_{ij}^{r}{}^{H}\mathbf{H}_{ij}\mathbf{w}_{ij}^{t}$ represents an effective channel response from the node #j to the node #i.

Next, we explain the computing process method of the transmitting weight in the case of using the linear algorithm.

In FIG.5, when attention is focused on the transmitting node #2, it is possible to regard the receiving nodes #1 and #3 as a MIMO broadcast system with multiple antennas.

Here, the purpose of the MIMO algorithm in the transmitting node #2, is to transmit the signal to the receiving node #3 while avoiding the transmitting-interference to the receiving node #1, and transmit the signal to the receiving node #1 while avoiding the transmitting-interference to the receiving node #3.

Here, when the receiving weights of the receiving nodes #1 and #3 are given in $\mathbf{w}_{12}^{r} \in C^{M}, \mathbf{w}_{32}^{r} \in C^{M}$ respectively, the receiving signals of the receiving nodes #1 and #3 can be represented by the following Expressions 22 and 23 respectively.

[Expression 22]

$$y_1 = \mathbf{w}_{12}^{r \ H} \mathbf{H}_{12} \mathbf{x}_2 + n_1$$

[Expression 23]

$$y_3 = \mathbf{w}_{32}^{r \ H} \mathbf{H}_{32} \mathbf{x}_2 + n_3$$

Where, $\mathbf{x}_2 \in C^M$ is the transmitting signal vector of the transmitting node #2.

Further, when the vector notation is adopted by using $\mathbf{y}_2 = [y_1 \ y_3]^T \in C^2$, the following Expression 24 holds.

[Expression 24]

$$\mathbf{y}_2 = \begin{bmatrix} \mathbf{h}_{12}^{r} & \mathbf{h}_{32}^{r} \end{bmatrix}^{T} \mathbf{x}_2 + \mathbf{n}_2$$

Where, $\mathbf{h}_{ij}^{r \ T} = \mathbf{w}_{ij}^{r \ H} \mathbf{H}_{ij} \in C^{1 \times M}$ is a channel vector.

Since Expression 24 and Expression 12 have the same constitution, it is possible to transmit the signal to the receiving node #3 while avoiding the transmitting-interference to the receiving node#1 by using $\mathbf{w}_{32}^{t} = \left( \mathbf{h}_{12}^{r \ *} \right)^{\perp} \in C^{M}$ that is orthogonal to a channel vector $\mathbf{h}_{12}^{r \ *}$ as the transmitting weight.

Further, at the same time, it is possible to realize the FB multiplexing of a forward link and a backward link in the MIMO mesh network by using $\mathbf{w}_{12}^{t} = \left( \mathbf{h}_{32}^{r \ *} \right)^{\perp} \in C^{M}$ that is orthogonal to a channel vector $\mathbf{h}_{32}^{r \ *}$ as the transmitting weight.

The output signal vector $\tilde{y}_2 \in C^2$ of this time can be represented by the following Expression 25.

[Expression 25]

$$\tilde{\mathbf{y}}_2 = \begin{bmatrix} \mathbf{h}_{12}^{r} & \mathbf{h}_{32}^{r} \end{bmatrix}^{T} \begin{bmatrix} \mathbf{w}_{12}^{t} & \mathbf{w}_{32}^{t} \end{bmatrix} \mathbf{s}_2 + \mathbf{n}_2 = \begin{bmatrix} h_{12}^{e} & 0 \\ 0 & h_{32}^{e} \end{bmatrix} \mathbf{s}_2 + \mathbf{n}_2$$

Where, $\mathbf{s}_2 = [s_{12} \ s_{32}]^T$ holds. $s_{12}$ represents the transmitting signal to the receiving node #1. $s_{32}$ represents the transmitting signal to the receiving node #3.

According to these, it is clear that the transmitting-interference avoidance and the FB multiplexing are simultaneously realized.

Next, we explain the mutual relation between transmitting/receiving weights in the case of using the linear algorithm.

As described above, in the case of using the linear ZF algorithm, there is a linkage relation in which the receiving weight of the second link is determined based on the transmitting weight of the first link, and the transmitting weight of the third link is determined based on the receiving weight of the second link.

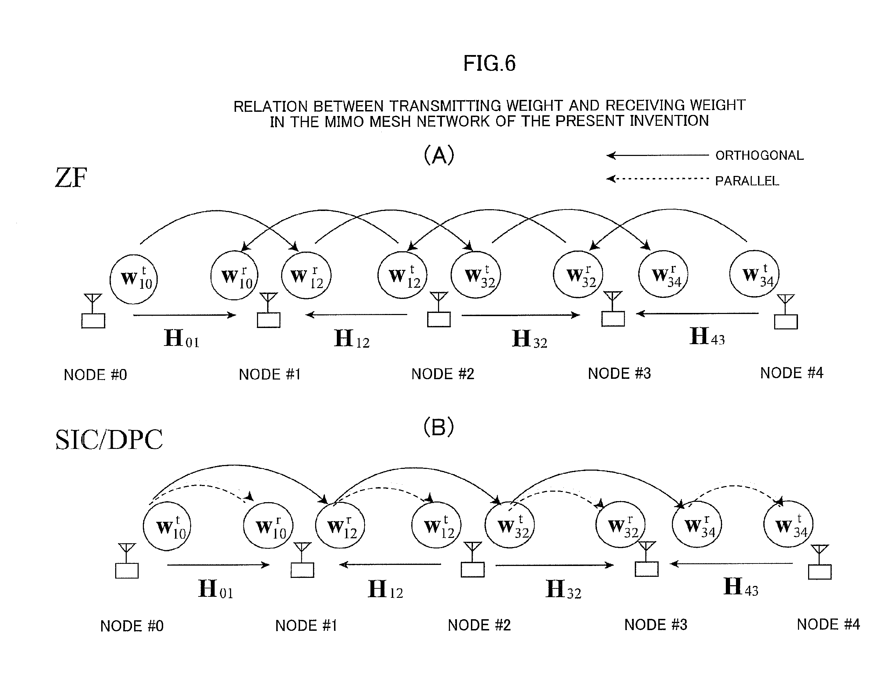

There are two weight linkages in the one-dimensional MIMO mesh network using the linear algorithm and the relation between transmitting weight and receiving weight is shown in FIG. 6(A) . The initial weight values of both ends of the one-dimensional MIMO mesh network, i.e. the starting point weights of a forward network and a backward network determine all weights. It is necessary to optimize sequentially the two initial weights so that the network throughput becomes greatest.

We explained the computing process methods of transmitting/receiving weight in the MIMO mesh network according to the first embodiment of the present invention, in the case of using the linear ZF algorithm as the MIMO transmission scheme in detail as described above. However, it is not necessary to be limited to the ZF algorithm as a linear scheme used in the present invention, for example, of course it is possible to use the MMSE algorithm.

<2-1-2> nonlinear algorithm (SIC/DPC)

Here, we explain the computing process methods of transmitting/receiving weight in a MIMO mesh network in the case of using the nonlinear SIC/DPC algorithm as a MIMO transmission scheme. Moreover, like the case of the linear scheme, the explanation is performed in order of the computing process method of the receiving weight, the computing process method of the transmitting weight and the mutual relation between transmitting/receiving weights.

Firstly, we explain the computing process method of the receiving weight in the case of using the nonlinear algorithm.

Like the case of the linear scheme, in FIG. 5, when attention is focused on the receiving node #1, it is possible to regard the transmitting nodes #0 and #2 as a MIMO multiple access system with multiple antennas.

Here, the purpose of the MIMO algorithm in the receiving node #1, is to receive the signal from the transmitting node #0 while avoiding the receiving-interference from the transmitting node #2, and receive the signal from the transmitting node #2 while avoiding the receiving-interference from the transmitting node #0.

That is to say, the receiving node #1 multiplexing receives the signals from the transmitting nodes #0 and #2 while avoiding the receiving-interference, by using the SIC algorithm that is a nonlinear receiving scheme.

In the SIC algorithm that is a nonlinear receiving scheme, in Expression 20 that is the receiving signal vector of the receiving node #1, firstly, the signal $s_{12}$ from the transmitting node #2 is detected, and then the signal $s_{10}$ from the transmitting node #0 is received while avoiding the receiving-interference by subtracting the detected signal $s_{12}$ from the receiving signal $\mathbf{y}_1$.

Here, when the receiving weight for the signal $s_{12}$ is represented by $\mathbf{w}_{12}^{r} = \left( \mathbf{h}_{10}^{t} \right)^{\perp}$ , and the receiving

weight for the signal $s_{10}$ is represented by $\mathbf{w}_{10}^{r} = \left( \mathbf{h}_{10}^{t} \right)^{\parallel}$ , the output signal vector $\tilde{y}_1$ of this time can be represented by the following Expression 26.

[Expression 26]

$$\tilde{\mathbf{y}}_1 = \begin{bmatrix} \mathbf{w}_{10}^{r} & \mathbf{w}_{12}^{r} \end{bmatrix}^{H} \mathbf{y}_1 = \begin{bmatrix} h_{10}^{e} & h_{12}^{i} \\ 0 & h_{12}^{e} \end{bmatrix} \mathbf{s}_1 + \tilde{\mathbf{n}}_1$$

Where, $h_{12}^{i}$ represents the interference from the transmitting node #2.

Therefore, firstly $\hat{s}_{12}$ represented by the following Expression 27 is detected, and then it is possible to detect $\hat{s}_{10}$ by performing the receiving-interference avoidance basing on the following Expression 28. This can realize the receiving-interference avoidance which is prioritized and the FB multiplexing. In addition, the order of processing of $s_{10}$ and $s_{12}$ is not limited to this.

[Expression 27]

$$\hat{s}_{12} = \frac{1}{h^{e}_{12}}[\tilde{\mathbf{y}}_{1}]_{2}$$

[Expression 28]

$$\hat{s}_{10} = \frac{1}{h^{e}_{10}}\left([\tilde{\mathbf{y}}_{1}]_{1} - h^{i}_{12}\hat{s}_{12}\right)$$

Next, we explain the computing process method of the transmitting weight in the case of using the nonlinear algorithm.

Like the case of the linear scheme, in FIG. 5, when attention is focused on the transmitting node #2, it is possible to regard the receiving nodes #1 and #3 as a MIMO broadcast system with multiple antennas.

Here, the purpose of the MIMO algorithm in the transmitting node #2, is to transmit the signal to the receiving node #3 while avoiding the transmitting-interference to the receiving node #1, and transmit the signal to the receiving node #1 while avoiding the transmitting-interference to the receiving node #3.

That is to say, the transmitting node #2 multiplexing transmits the signals to the receiving nodes #1 and #3 while avoiding the transmitting-interference, by using the DPC algorithm that is a nonlinear transmitting scheme.

In the DPC algorithm that is a nonlinear transmitting scheme, as shown in Expression 24, the transmitting weight $\mathbf{w}^{t}_{32} = \left(\mathbf{h}^{r}_{12}{}^{*}\right)^{\perp}$ that is orthogonal to a channel vector $\mathbf{h}^{r}_{12}{}^{*}$ is used for $y_{3}$ i.e. $s_{32}$, and the transmitting weight $\mathbf{w}^{t}_{12} = \left(\mathbf{h}^{r}_{12}{}^{*}\right)^{\parallel}$ that is parallel (matched) to the channel vector $\mathbf{h}^{r}_{12}{}^{*}$ is used for $y_{1}$ i.e. $s_{12}$.

The output signal vector $\tilde{\mathbf{y}}_{2}$ of this time can be represented by the following Expression 29.

[Expression 29]

$$\tilde{\mathbf{y}}_{2} = \begin{bmatrix} \mathbf{h}^{r}_{12} & \mathbf{h}^{r}_{32} \end{bmatrix}^{T} \begin{bmatrix} \mathbf{w}^{t}_{12} & \mathbf{w}^{t}_{32} \end{bmatrix} s_{2} + \mathbf{n}_{2} = \begin{bmatrix} h^{e}_{12} & 0 \\ h^{i}_{12} & h^{e}_{32} \end{bmatrix} s_{2} + \mathbf{n}_{2}$$

Where, $h^{i}_{12}$ represents the interference for $y_{3}$ of $s_{12}$.

Therefore, it is possible to avoid the transmitting-interference by preliminarily subtracting this interference component from the transmitting signal of $s'_{32}$.

[Expression 30]

$$s_{32} = s'_{32} - \frac{h^{i}_{12}}{h^{e}_{32}}s_{12}$$

This can realize the transmitting-interference avoidance which is prioritized and the FB multiplexing. In addition, the order of processing of $s_{12}$ and $s_{32}$ is not limited to this.

Next, we explain the mutual relation between transmitting/receivingweights in the case of using the nonlinear algorithm.

The mutual relation between transmitting/receiving weights in the case of using the nonlinear algorithm is different from the mutual relation between transmitting/receiving weights in the case of using the linear algorithm. In the case of using the nonlinear algorithm, the receiving weights of the first and the second links are determined based on the transmitting weight of the first link, and the transmitting weights of the second and the third links are determined based on the receiving weight of the second link.

Thus, there is only one weight linkage in the one-dimensional MIMO mesh network using the nonlinear algorithm and the relation between transmitting weight and receiving weight is shown in FIG. 6(B) . That is to say, it is clear that if the starting point weight of one end of the one-dimensional MIMO mesh network is determined, all weights get decided. It is possible to optimize the initial value of the starting point weight for example by using the first transmitting eigenvector.

<2-2> two-dimensional (2D) MIMO mesh network

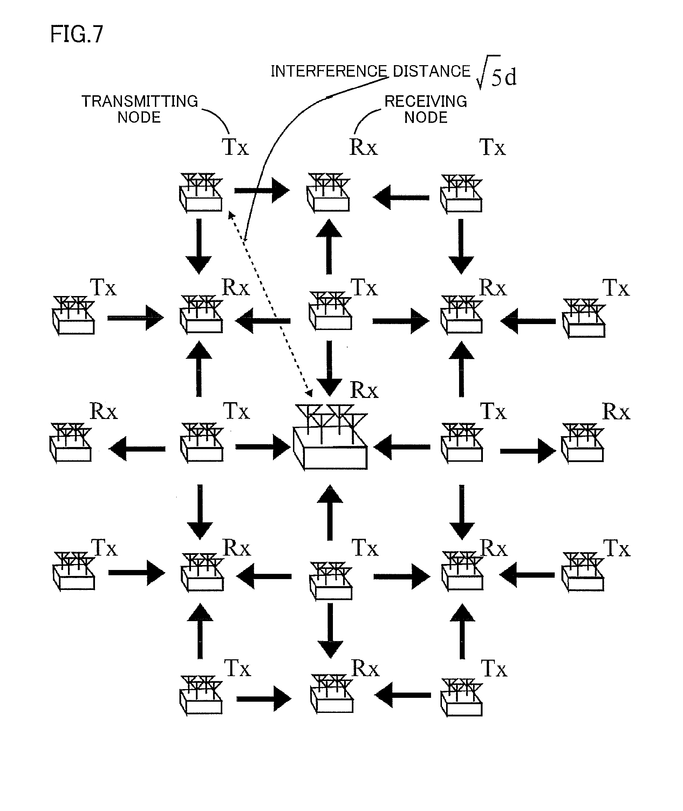

Here we show a two-dimensional (2D) MIMO mesh network that is obtained by expanding a MIMO mesh network according to the first embodiment of the present invention to a two-dimensional plane in FIG.7 and explain it.

For example, it is possible to transmit and receive four streams simultaneously by preparing mesh nodes (relay nodes) with four antennas, and it is possible to construct a two-dimensional (2D) MIMO mesh network having the shape of a go board shown in FIG.7.

If this two-dimensional (2D) MIMO mesh network is constructed by a single frequency channel, it is possible to expand the interference distance from "d" to " $\sqrt{5d}$ " , furthermore it is possible to improve the spectral efficiency by performing the spatial multiplexing transmission of four streams.

Also, sincethetwo-dimensional (2D) MIMO mesh network shown in FIG.7 can be regarded as a multi-terminal system, further optimization is possible by using a network coding and a cooperative relay.

As described above, we explained two specific examples of the MIMO mesh network according to the first embodiment of the present invention based on FIG. 5 and FIG. 7. However, the present invention is not limited to the one-dimensional (1D) MIMO mesh network and the two-dimensional (2D) MIMO mesh network that are shown in those two specific examples respectively. Of course, in the MIMO mesh network of the present invention, it is possible to arrange each relay node (the transmitting node and the receiving node) in an arbitrary shape.

<2-3> computer simulation

Here, the numerical simulation by computer is performed so as to verify the effectiveness of the MIMO mesh network according to the first embodiment of the present invention.

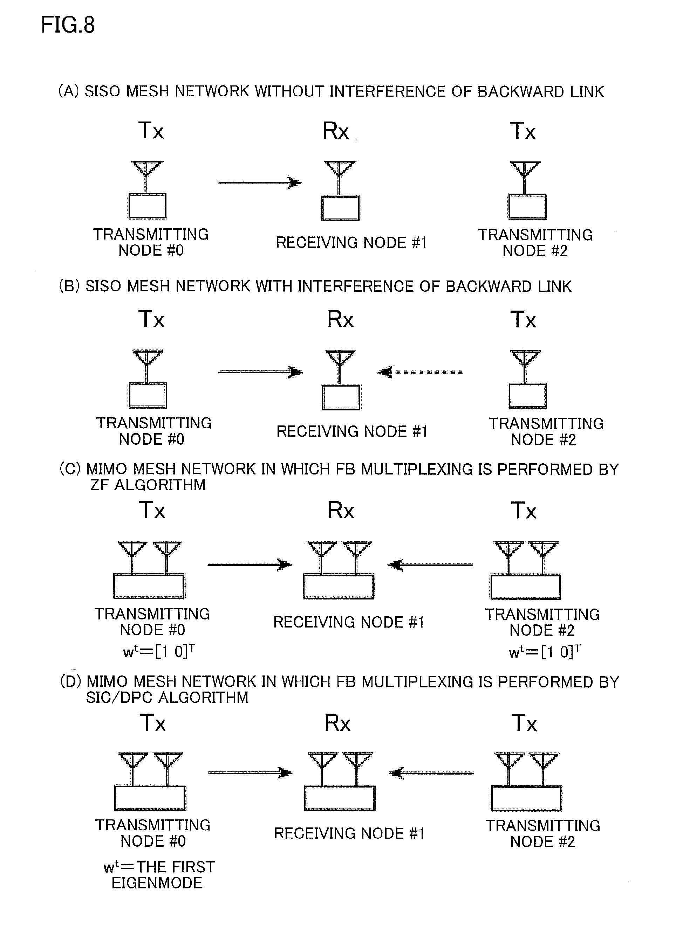

The numerical simulation is performed by using four ways of scenarios, i.e. scenarios (A), (B), (C) and (D) shown in FIG.8. In order to simplify explanation, we discuss a one-dimensional (1D) MIMO mesh network constructed by three nodes, i.e. the transmitting node #0, the receiving node #1 and the transmitting node #2.

Scenario (A) is a SISO communication between the transmitting node #0 and the receiving node #1. Further, Scenario (B) is a communication that added the interference of the backward link from the transmitting node #2 in Scenario (A).

On the other hand, scenarios (C) and (D) are the MIMO mesh network according to the first embodiment of the present invention. Further, the linear ZF algorithm is used in scenario (C) and the nonlinear SIC/DPC algorithm is used in scenario (D).

Here the initial values of the transmitting weights of both ends of the linear ZF algorithm are assumed to

$$\mathbf{w}_{10}^{t} = \begin{bmatrix} 1 & 0 \end{bmatrix}^{T}, \mathbf{w}_{12}^{t} = \begin{bmatrix} 1 & 0 \end{bmatrix}^{T}$$ respectively. On the other hand, the initial value of the transmitting weight of the left end of the nonlinear SIC/DPC algorithm is assumed to the first right singular vector of the channel matrix $\mathbf{H}_{10}$.

Furthermore, the number of antennas of each node is two. All the channels are assumed to independent identically distributed Rayleigh fading channels. The mean spectral efficiency of the receiving node #1 of each method is computed.

For example, the mean spectral efficiency of the MIMO mesh network is computed by the following Expression 31.

[Expression 31]

$$C = E\left[\log_2(1+\frac{P}{\sigma^2}|h_{10}^e|^2) + \log_2(1+\frac{P}{\sigma^2}|h_{12}^e|^2)\right]$$

Where P represents the transmission power of each transmitting node and $\sigma^2$ represents the noise power per antenna of the receiving node.

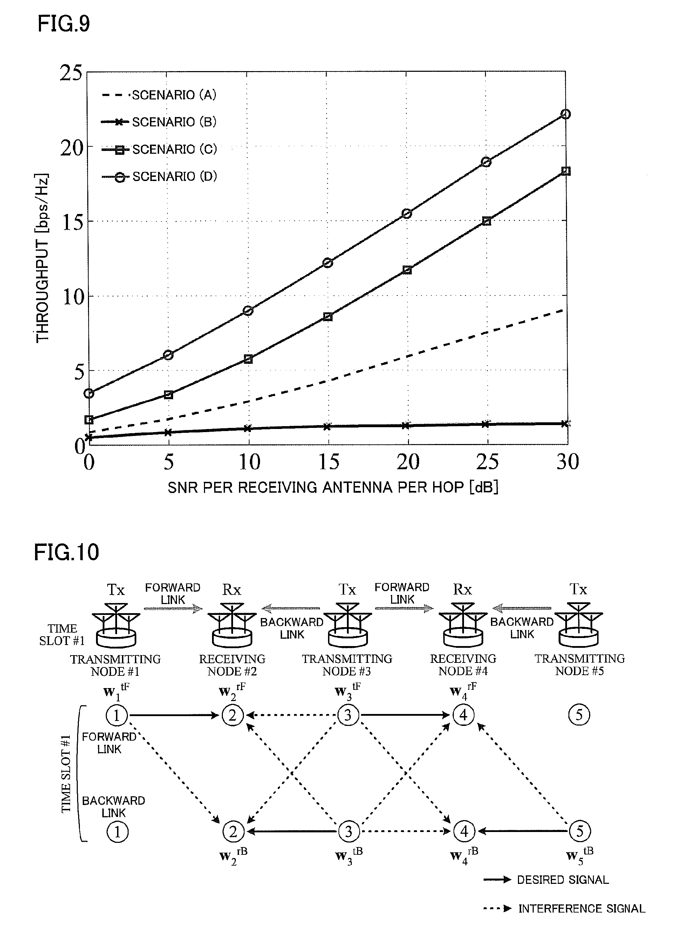

The mean spectral efficiency obtained from the Monte Carlo simulation is shown in FIG.9.

From FIG.9, it is clear that it is impossible to realize high spectral efficiency by the conventional mesh networks due to the interference of the backward link.

On the other hand, by performing the receiving-interference avoidance and the FB multiplexing, the MIMO mesh network according to the first embodiment of the present invention can realize approximately 2 times spectral efficiency of the SISO mesh network in which there is no the interference of the backward link.

Furthermore, in comparison with the MIMO mesh network according to the first embodiment of the present invention using the linear ZF algorithm, the MIMO mesh network according to the first embodiment of the present invention using the nonlinear SIC/DPC algorithm improves an around 6dB characteristic by SNR conversion. This is due to the array-gain by using the matched weight in the forward link.

<3> MIMO mesh network according to the second embodiment of the present invention

Here, we explain a MIMO mesh network according to the second embodiment of the present invention in detail. According to the MIMO mesh network of the second embodiment of the present invention, it is possible to solve the co-channel interference problem of the conventional mesh network while realizing the linkmultiplexing and improve the capacity of the entire network.

<3-1> network model

Here, we illustrate a network model of the MIMO mesh network according to the second embodiment of the present invention in which there are multiple relay nodes, each relay node has M MIMO antennas and a wireless network is constructed by setting up wireless links between relay nodes.

As a result of having considered the viewability of a drawing, we shown a network model of the MIMO mesh network according to the second embodiment of the present invention in which there are five relay nodes and each relay node has three (M=3) MIMO antennas in FIG.10.

As shown in FIG. 10, in the MIMO mesh network according to the second embodiment of the present invention, the forward link and the backward link are spatial multiplexed.

Next, attention is focused on two links adj acent to a certain node and we formulate a signal model of the MIMO mesh network according to the second embodiment of the present invention in which each node is equipped with M MIMO antennas.

Here, the receiving signals $y_i^F, y_i^B$ of the forward link and the backward link of the i-th node can be modeled by using the following Expression 32 ∼ Expression 37.

[Expression 32]

$$y_i^F = y_{i(i-1)}^F + y_{i(i+1)}^F + n_i^F$$

[Expression 33]

$$y_i^{\mathrm{B}} = y_{i(i-1)}^{\mathrm{B}} + y_{i(i+1)}^{\mathrm{B}} + n_i^{\mathrm{B}}$$

[Expression 34]

$$y_{i(i-1)}^{\mathrm{F}} = \left(\mathbf{w}_i^{\mathrm{rF}}\right)^H \mathbf{H}_{i(i-1)} \mathbf{w}_{(i-1)}^{\mathrm{tF}} s_{(i-1)}^{\mathrm{F}} + \left(\mathbf{w}_i^{\mathrm{rF}}\right)^H \mathbf{H}_{i(i-1)} \mathbf{w}_{(i-1)}^{\mathrm{tB}} s_{(i-1)}^{\mathrm{B}}$$

[Expression 35]

$$y_{i(i+1)}^{\mathrm{F}} = \left(\mathbf{w}_i^{\mathrm{rF}}\right)^H \mathbf{H}_{i(i+1)} \mathbf{w}_{(i+1)}^{\mathrm{tF}} s_{(i+1)}^{\mathrm{F}} + \left(\mathbf{w}_i^{\mathrm{rF}}\right)^H \mathbf{H}_{i(i+1)} \mathbf{w}_{(i+1)}^{\mathrm{tB}} s_{(i+1)}^{\mathrm{B}}$$

[Expression 36]

$$y_{i(i-1)}^{\mathrm{B}} = \left(\mathbf{w}_i^{\mathrm{rB}}\right)^H \mathbf{H}_{i(i-1)} \mathbf{w}_{(i-1)}^{\mathrm{tF}} s_{(i-1)}^{\mathrm{F}} + \left(\mathbf{w}_i^{\mathrm{rB}}\right)^H \mathbf{H}_{i(i-1)} \mathbf{w}_{(i-1)}^{\mathrm{tB}} s_{(i-1)}^{\mathrm{B}}$$

[Expression 37]

$$y_{i(i+1)}^{\mathrm{B}} = \left(\mathbf{w}_i^{\mathrm{rB}}\right)^H \mathbf{H}_{i(i+1)} \mathbf{w}_{(i+1)}^{\mathrm{tF}} s_{(i+1)}^{\mathrm{F}} + \left(\mathbf{w}_i^{\mathrm{rB}}\right)^H \mathbf{H}_{i(i+1)} \mathbf{w}_{(i+1)}^{\mathrm{tB}} s_{(i+1)}^{\mathrm{B}}$$

Where $[\cdot]^{\mathrm{H}}$ represents a complex conjugate transposed matrix of $[\cdot]$. $s_j^{\mathrm{F}}$ and $s_j^{\mathrm{B}}$ are the transmitting signals for the forward link and the backward link of the j-th node. $\mathbf{H}_{ij} \in C^{M \times M}$ is a channel matrix from the j-th node to the i-th node. $\mathbf{w}_j^{\mathrm{tF}} \in C^M$ and $\mathbf{w}_j^{\mathrm{tB}} \in C^M$ are the transmitting weight vectors for the forward link and the backward link of the j-th node. $\mathbf{w}_i^{\mathrm{rF}} \in C^M$ and $\mathbf{w}_i^{\mathrm{rB}} \in C^M$ are the receiving weight vectors for the forward link and the backward link of the i-th node. $n_i^{\mathrm{F}}$ and $n_i^{\mathrm{B}}$ are the equivalent additive noises of the forward link and the backward link that are received in the i-th node.

In the forward link, $s_{(i-1)}^{\mathrm{F}}$ is a desired signal and the other three signals $\left\{ s_{(i-1)}^{\mathrm{B}}, s_{(i+1)}^{\mathrm{F}}, s_{(i+1)}^{\mathrm{B}} \right\}$ are interference signals. On the other hand, in the backward link, $s_{(i+1)}^{\mathrm{B}}$ is a desired signal and $\left\{ s_{(i-1)}^{\mathrm{F}}, s_{(i-1)}^{\mathrm{B}}, s_{(i+1)}^{\mathrm{F}} \right\}$ are interference signals.

The MIMO mesh network according to the second embodiment of the present invention realizes the spatial multiplexing of the forward link and the backward link while performing the interference avoidance by the combination of the transmitting weight and the receiving weight. In the MIMO mesh network according to the second embodiment of the present invention, the computing process methods of the transmitting/receiving weight for simultaneously realizing the interference avoidance and the spatial multiplexing, are divided into the linear algorithm and the nonlinear algorithm, and concretely described as follows.

<3-2> linear algorithm

As the interference cancellation schemes using an array antenna, there are algorithms such as the linear ZF algorithm, the linear MMSE algorithm and the nonlinear SIC/DPC algorithm.

Here, we explain the computing process methods of the transmitting/receiving weight in a MIMO mesh network according to the second embodiment of the present invention, in the case of using the linear ZF algorithm as a MIMO transmission scheme.

In general, it is possible to cancel the (M-1) interference signals by using the linear scheme (the ZF algorithm) that uses a M-element array antenna. To simplify explanation, we consider the case of M=3. In the case of M=3, it is possible to cancel up to two interference signals by using one antenna weight.

However, in a MIMO mesh network, since there are three interference signals for one desired signal, there is the problem that it is impossible to deal with three interference signals by one antenna weight.

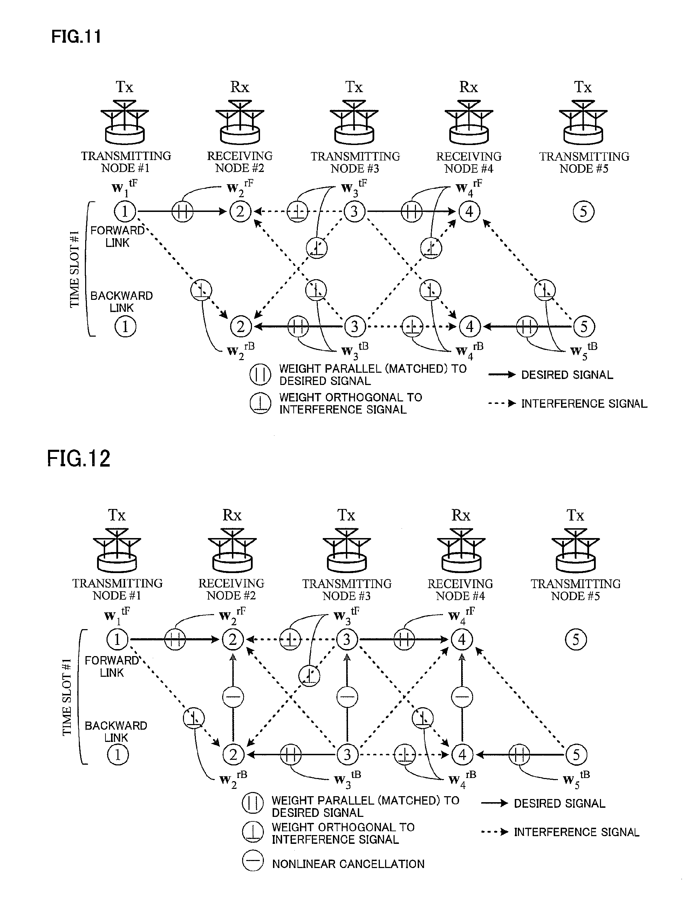

So as shown in a conceptual diagram of FIG.11, in a MIMO mesh network of the present invention that uses the linear algorithm, the interference signal is cancelled by the combination of the transmitting weight and the receiving weight. Referring to FIG. 11, we explain the computing process procedures (the determining procedures) of the transmitting/receiving weight in the case of using the linear algorithm in detail as follows.

When the k-th node is a receiving node, hereinafter referred to as "the k-th receiving node". Furthermore, when the k-th node is a transmitting node, hereinafter referred to as "the k-th transmitting node". Where k is an arbitrary natural number and $k \geq 1$ holds.

In the MIMO mesh network of the present invention, the transmitting weight and the receiving weight are computed (determined) in order from the first node to the last node. When attention is focused on the i-th receiving node, the transmitting weights $\mathbf{w}_{(i-1)}^{tF}$ and $\mathbf{w}_{(i-1)}^{tB}$ of the (i-1)-th transmitting node are already computed (determined).

In this time, a system model between the (i-1)-th transmitting node and the i-th receiving node, can be represented by the following Expression 38 and Expression 39 by using an equivalent transmitting channel vector $\mathbf{h}_{i(i-1)}^{tF} = \mathbf{H}_{i(i-1)}\mathbf{w}_{i-1}^{tF} \in C^{M}$ and an equivalent transmitting channel vector

$$\mathbf{h}_{i(i-1)}^{tB} = \mathbf{H}_{i(i-1)}\mathbf{w}_{(i-1)}^{tB} \in C^{M} .$$

[Expression 38]

$$y_{i(i-1)}^{F} = \left(\mathbf{w}_i^{rF}\right)^{H}\mathbf{h}_{i(i-1)}^{tF}s_{(i-1)}^{F} + \left(\mathbf{w}_i^{rF}\right)^{H}\mathbf{h}_{i(i-1)}^{tB}s_{(i-1)}^{B}$$

[Expression 39]

$$y_{i(i-1)}^{B} = \left(\mathbf{w}_i^{rB}\right)^{H}\mathbf{h}_{i(i-1)}^{tF}s_{(i-1)}^{F} + \left(\mathbf{w}_i^{rB}\right)^{H}\mathbf{h}_{i(i-1)}^{tB}s_{(i-1)}^{B}$$

The i-th receiving node learns the equivalent transmitting channel vectors $\mathbf{h}_{i(i-1)}^{tB}$ and $\mathbf{h}_{i(i-1)}^{tF}$ by using training signals that are transmitted from the (i-1)-th transmitting node through the transmitting weights $\mathbf{w}_{(i-1)}^{tF}$ and $\mathbf{w}_{(i-1)}^{tB}$ .

In the MIMO mesh network according to the second embodiment of the present invention that uses the linear ZF algorithm, the receiving weights $\mathbf{w}_i^{rF}, \mathbf{w}_i^{rB}$ of the i-th receiving node are computed based on the following Expression 40 and Expression 41.

[Expression 40]

$$\mathbf{w}_i^{rF} = \left( \mathbf{h}_{i(i-1)}^{tF}{}^{\parallel}, \mathbf{h}_{i(i-1)}^{tB}{}^{\perp} \right)$$

[Expression 41]

$$\mathbf{w}_i^{rB} = \left( \mathbf{h}_{i(i-1)}^{tF}{}^{\perp}, \mathbf{h}_{i(i-1)}^{tB}{}^{\perp} \right)$$

Where $(\mathbf{x}^{\perp}, \mathbf{y}^{\perp})$ is a basis vector that is orthogonal to both $\mathbf{x}$ and $\mathbf{y}$. $(\mathbf{x}^{\parallel}, \mathbf{y}^{\parallel})$ is a basis vector that is most parallel to $\mathbf{x}$ in a space that is orthogonal to $\mathbf{y}$.

The system between the (i-1) -th transmitting node and the i-th receiving node, can be modeled by the following Expression 42 and Expression 43 by using the receiving weights $\mathbf{w}_i^{rF}, \mathbf{w}_i^{rB}$ of the i-th receiving node that are computed based on the above Expression 40 and Expression 41.

[Expression 42]

$$y_{i(i-1)}^{F} = h_{i(i-1)}^{eFF} s_{(i-1)}^{F}$$

[Expression 43]

$$y_{i(i-1)}^{B} = 0$$

Where $h_{i(i-1)}^{eFF} = \left( \mathbf{w}_i^{rF} \right)^{H} \mathbf{H}_{i(i-1)} \mathbf{w}_{(i-1)}^{tF}$ is an equivalent channel coefficient of a forward link between the (i-1) -th transmitting node and the i-th receiving node.

Next, a system between the i-th receiving node and the (i+1)-th transmitting node, can be modeled by the following Expression 44 and Expression 45 by using the receiving weights $\mathbf{w}_i^{rF}, \mathbf{w}_i^{rB}$ of the i-th receiving node that are computed based on the above Expression 40 and Expression 41.

[Expression 44]

$$y_{i(i+1)}^{F} = \left( \mathbf{h}_{i(i+1)}^{rF} \right)^{T} \mathbf{w}_{(i+1)}^{tF} s_{(i+1)}^{F} + \left( \mathbf{h}_{i(i+1)}^{rF} \right)^{T} \mathbf{w}_{(i+1)}^{tB} s_{(i+1)}^{B}$$

[Expression 45]

$$y_{i(i+1)}^{B} = \left(\mathbf{h}_{i(i+1)}^{rB}\right)^{T} \mathbf{w}_{(i+1)}^{tF} s_{(i+1)}^{F} + \left(\mathbf{h}_{i(i+1)}^{rB}\right)^{T} \mathbf{w}_{(i+1)}^{tB} s_{(i+1)}^{B}$$

Where $\mathbf{h}_{i(i+1)}^{rF} = \left(\mathbf{H}_{i(i+1)}\right)^{T}\left(\mathbf{w}_{i}^{rF}\right)^{*} \in C^{M}$ and $\mathbf{h}_{i(i+1)}^{rB} = \left(\mathbf{H}_{i(i+1)}\right)^{T}\left(\mathbf{w}_{i}^{rB}\right)^{*} \in C^{M}$ are

equivalent receiving channel vectors of the forward link and the backward link.

The (i+1)-th transmitting node utilizes the channel reciprocity $\left(\mathbf{H}_{i(i+1)}^{T} = \mathbf{H}_{(i+1)i}\right)$ , and when the i-th receiving node is in the transmitting mode, the (i+1)-th transmitting node learns the equivalent receiving channel vectors

$\mathbf{h}_{i(i+1)}^{rF}$ and $\mathbf{h}_{i(i+1)}^{rB}$ by transmitting a training signal through a conjugate receiving weight of the i-th receiving node.

Or the (i+1)-th transmitting node transmits the training signal, and the i-th receiving node learns $\mathbf{h}_{i(i+1)}^{rF}$ and $\mathbf{h}_{i(i+1)}^{rB}$

and then feeds back the learned $\mathbf{h}_{i(i+1)}^{rF}$ and $\mathbf{h}_{i(i+1)}^{rB}$ to the (i+1)-th transmitting node.

In the MIMO mesh network according to the second embodiment of the present invention that uses the linear ZF algorithm, the transmitting weights $\mathbf{W}_{(i+1)}^{tF}, \mathbf{W}_{(i+1)}^{tB}$ of the (i+1)-th transmitting node are computed based on the following Expression 46 and Expression 47.

[Expression 46]

$$\mathbf{W}_{(i+1)}^{tF} = \left(\left(\mathbf{h}_{i(i+1)}^{rF}\right)^{*\perp}, \left(\mathbf{h}_{i(i+1)}^{rB}\right)^{*\perp}\right)$$

[Expression 47]

$$\mathbf{W}_{(i+1)}^{tB} = \left(\left(\mathbf{h}_{i(i+1)}^{rF}\right)^{*\perp}, \left(\mathbf{h}_{i(i+1)}^{rB}\right)^{*\parallel}\right)$$

The system between the i-th receiving node and the (i+1)-th transmitting node, can be modeled by the following Expression 48 and Expression 49 by using the transmitting weights $\mathbf{W}_{(i+1)}^{tF}, \mathbf{W}_{(i+1)}^{tB}$ of the (i+1)-th transmitting node that are computed based on the above Expression 46 and Expression 47.

[Expression 48]

$$y_{i(i+1)}^{F} = 0$$

[Expression 49]

$$y_{i(i+1)}^{\mathrm{B}} = h_{i(i+1)}^{\mathrm{eBB}} s_{(i+1)}^{\mathrm{B}}$$

Where $h_{i(i+1)}^{\mathrm{eBB}} = \left( \mathbf{w}_i^{\mathrm{rB}} \right)^H \mathbf{H}_{i(i+1)} \mathbf{w}_{(i+1)}^{\mathrm{tB}}$ is an equivalent channel coefficient of the backward link between the i-th receiving node and the (i+1)-th transmitting node.

Finally, by combining Expression 42, Expression 43, Expression 48 and Expression 49, the above Expression 32 and Expression 33 can be represented by the following Expression 50 and Expression 51.

[Expression 50]

$$y_i^{\mathrm{F}} = h_{i(i-1)}^{\mathrm{eFF}} s_{(i-1)}^{\mathrm{F}} + n_i^{\mathrm{F}}$$

[Expression 51]

$$y_i^{\mathrm{B}} = h_{i(i+1)}^{\mathrm{eBB}} s_{(i+1)}^{\mathrm{B}} + n_i^{\mathrm{B}}$$

That is to say, the above Expression 50 and Expression 51 mean that the i-th receiving node can simultaneously receive signals of the forward link and the backward link without interferences from adjacent nodes (i.e. the (i-1)-th transmitting node and the (i+1)-th transmitting node).

We explained the computing process methods of transmitting/receiving weight in the MIMO mesh network according to the second embodiment of the present invention, in the case of using the linear ZF algorithm as the MIMO transmission scheme in detail as described above. However, it is not necessary to be limited to the ZF algorithm as the linear scheme used in the present invention, for example, of course it is possible to use the MMSE algorithm.

<3-3> nonlinear algorithm (SIC/DPC)

Here, we explain the computing process methods of transmitting/receiving weight in a MIMO mesh network according to the second embodiment of the present invention that uses the nonlinear SIC/DPC algorithm as a MIMO transmission scheme.

In the case of using the nonlinear algorithm, the transmitting side uses the DPC algorithm and the receiving side uses the SIC algorithm. In the MIMO mesh network according to the second embodiment of the present invention, compared to the case of using the linear algorithm (the ZF algorithm), it is possible to reduce orthogonal constraint conditions and realize high diversity gain with redundant degrees of freedom of array by using the SIC/DPC algorithm.

As shown in a conceptual diagram of FIG. 12, in a MIMO mesh network of the present invention that uses the nonlinear algorithm, the interference signal is cancelled by the combination of the transmitting weight and the receiving weight. Referring to FIG. 12, we explain the computing process procedures (the determining procedures) of the transmitting/receiving weight in the case of using the nonlinear algorithm in detail as follows.

In the MIMO mesh network of the present invention, the transmitting weight and the receiving weight are computed (determined) in order from the first node to the last node. In the case of using the nonlinear algorithm (the SIC/DPC algorithm), when attention is focused on the i-th receiving node, the transmitting weights $\mathbf{w}_{(i-1)}^{\mathrm{tF}}$ and $\mathbf{w}_{(i-1)}^{\mathrm{tB}}$ of the (i-1)-th transmitting node are already computed (determined), and the receiving weights $\mathbf{w}_i^{\mathrm{rF}}, \mathbf{w}_i^{\mathrm{rB}}$ of the i-th receiving node are computed (determined) based on the following Expression 52 and Expression 53.

[Expression 52]

$$\mathbf{w}_i^{\mathrm{rF}} = \mathbf{h}_{i(i-1)}^{\mathrm{tF}}{}^{\parallel}$$

[Expression 53]

$$\mathbf{w}_i^{\mathrm{rB}} = \left( \mathbf{h}_{i(i-1)}^{\mathrm{tF}}{}^{\perp}, \mathbf{h}_{i(i-1)}^{\mathrm{tB}}{}^{\perp} \right)$$

Where $\mathbf{x}^{\parallel}$ is a basis vector that is parallel to $\mathbf{x}$. $(\mathbf{x}^{\parallel},\mathbf{y}^{\parallel})$ is a basis vector that is orthogonal to both $\mathbf{x}$ and $\mathbf{y}$.

Here, compared to the case of using the linear algorithm (the ZF algorithm), in the case of using the nonlinear algorithm (the SIC/DPC algorithm), since the orthogonal constraint conditions for the equivalent transmitting channel vector $\mathbf{h}_{i(i-1)}^{\mathrm{tB}}$ of the receiving weight $\mathbf{w}_i^{\mathrm{rF}}$ of the i-th receiving node are reduced, so according to the MIMO mesh network of the present invention that uses the nonlinear algorithm, it is possible to realize high diversity gain with redundant degrees of freedom of array.

The system between the (i-1)-th transmitting node and the i-th receiving node that is modeled by the above Expression 38 and Expression 39, can be modeled by the following Expression 54 and Expression 55 by using the receiving weights $\mathbf{w}_i^{\mathrm{rF}}, \mathbf{w}_i^{\mathrm{rB}}$ of the i-th receiving node that are computed based on the above Expression 52 and Expression 53.

[Expression 54]

$$y_{i(i-1)}^{\mathrm{F}} = h_{i(i-1)}^{\mathrm{eFF}} s_{(i-1)}^{\mathrm{F}} + h_{i(i-1)}^{\mathrm{eFB}} s_{(i-1)}^{\mathrm{B}}$$

[Expression 55]

$$y_{i(i-1)}^{\mathrm{B}} = 0$$

Where $h_{i(i-1)}^{\mathrm{eFF}} = \left( \mathbf{w}_i^{\mathrm{rF}} \right)^H \mathbf{H}_{i(i-1)} \mathbf{w}_{(i-1)}^{\mathrm{tF}}$ is an equivalent channel coefficient of the forward link between the (i-1)-thtransmitting node and the i-th receiving node. Further, $h_{i(i-1)}^{\mathrm{eFB}} = \left( \mathbf{w}_i^{\mathrm{rF}} \right)^H \mathbf{H}_{i(i-1)} \mathbf{w}_{(i-1)}^{\mathrm{tB}}$ is an equivalent channel coefficient equivalent to an interference signal from the backward link of the (i-1)-th transmitting node to the forward link of the i-th receiving node.

Here, since both $s_{(i-1)}^{\mathrm{F}}$ and $s_{(i-1)}^{\mathrm{B}}$ are known, the (i-1)-th transmitting node utilizes the channel reciprocity $\left( \mathbf{H}_{i(i-1)} = \mathbf{H}_{(i-1)i}^{T} \right)$, and when the i-th receiving node is in the transmitting mode, the (i-1)-th transmitting node learns the equivalent channel coefficient $h_{i(i-1)}^{\mathrm{eFF}}$ and $h_{i(i-1)}^{\mathrm{eFB}}$ by transmitting a training signal through $\left( \mathbf{w}_i^{\mathrm{rF}} \right)^{*}$.

Or the (i-1)-th transmitting node transmits the training signal through $\mathbf{w}_{(i-1)}^{\mathrm{tF}}$ and $\mathbf{w}_{(i-1)}^{\mathrm{tB}}$, and the i-th receiving node learns $h_{i(i-1)}^{\mathrm{eFF}}$ and $h_{i(i-1)}^{\mathrm{eFB}}$ and then feeds back the learned $h_{i(i-1)}^{\mathrm{eFF}}$ and $h_{i(i-1)}^{\mathrm{eFB}}$ to the (i-1)-th transmitting node.

As shown in the following Expression 56 and Expression 57, it is possible to cancel the interference signal $s_{(i-1)}^{B}$ by using the DPC algorithm.

[Expression 56]

$$s_{(i-1)}^{FDPC} = s_{(i-1)}^{F} - \frac{h_{i(i-1)}^{eFB}}{h_{i(i-1)}^{eFF}} s_{(i-1)}^{B}$$

[Expression 57]

$$y_{i(i-1)}^{FDPC} = h_{i(i-1)}^{eFF} s_{(i-1)}^{FDPC} + h_{i(i-1)}^{eFB} s_{(i-1)}^{B} = h_{i(i-1)}^{eFF} s_{(i-1)}^{F}$$

By the way, since the DPC algorithm subtracts the interference signal from the desired signal, the variation problem of transmitting power can occur. Therefore practically, as a substitute for the DPC algorithm, it is possible to use algorithms such as Tomlinson-Harashima precoding disclosed in Non-Patent Document 8 and lattice precoding disclosed in Non-Patent Document 9. The upper bounds of the performance of these algorithms come close enough to the performance of the DPC algorithm.

In the case of using the nonlinear algorithm (the DPC/SIC algorithm), next, based on the receiving weights $\mathbf{w}_{i}^{rF}, \mathbf{w}_{i}^{rB}$ of the i-th receiving node that are computed based on the above Expression 52 and Expression 53, the transmitting weights $\mathbf{w}_{(i+1)}^{tF}, \mathbf{w}_{(i+1)}^{tB}$ of the (i+1)-th transmitting node are computed (determined) by the following Expression 58 and Expression 59.

[Expression 58]

$$\mathbf{w}_{(i+1)}^{tF} = \left( \left( \mathbf{h}_{i(i+1)}^{rF} \right)^{*\perp}, \left( \mathbf{h}_{i(i+1)}^{rB} \right)^{*\perp} \right)$$

[Expression 59]

$$\mathbf{w}_{(i+1)}^{tB} = \left( \mathbf{h}_{i(i+1)}^{rB} \right)^{*\|}$$

Here, compared to the case of using the linear algorithm (the ZF algorithm), in the case of using the nonlinear algorithm (the SIC/DPC algorithm), since orthogonal constraint conditions for the equivalent receiving channel vector $\mathbf{h}_{i(i+1)}^{rF}$ of the transmitting weight $\mathbf{w}_{(i+1)}^{tB}$ of the (i+1)-th transmitting node are reduced, so according to the MIMO mesh network of the present invention that uses the nonlinear algorithm, it is possible to realize high diversity gain.

The system between the i-th receiving node and the (i+1)-th transmitting node that is modeled by the above Expression 44 and Expression 45, can be modeled by the following Expression 60 and Expression 61 by using the transmitting weights $\mathbf{w}_{(i+1)}^{tF}, \mathbf{w}_{(i+1)}^{tB}$ of the (i+1)-th transmitting node that are computed based on the above Expression 58 and Expression 59.

[Expression 60]

$$y^{F}_{i(i+1)} = h^{eFB}_{i(i+1)} s^{B}_{(i+1)}$$

[Expression 61]

$$y^{B}_{i(i+1)} = h^{eBB}_{i(i+1)} s^{B}_{(i+1)}$$

Where $h^{eFB}_{i(i+1)} = \left(\mathbf{w}^{rF}_{i}\right)^{H} \mathbf{H}_{i(i+1)} \mathbf{W}^{tB}_{(i+1)}$ is an equivalent channel coefficient equivalent to an interference signal from the backward link of the (i+1)-th transmitting node to the forward link of the i-th receiving node. Further, $h^{eBB}_{i(i+1)} = \left(\mathbf{w}^{rB}_{i}\right)^{H} \mathbf{H}_{i(i+1)} \mathbf{W}^{tB}_{(i+1)}$ is an equivalent channel coefficient of the backward link between the i-th receiving node and the (i+1)-th transmitting node.

The i-th receiving node learns the equivalent channel coefficients $h^{eFF}_{i(i+1)}$ and $h^{eFB}_{i(i+1)}$ by using a training signal that is transmitted from the (i+1)-th transmitting node through the transmitting weight vector $\mathbf{W}^{tB}_{(i+1)}$ .

Here, in the receiving signal $y^{B}_{i}$ of the backward link of the i-th receiving node, as shown in the following Expression 62, since the desired signal $s^{B}_{(i+1)}$ is received without interferences from the other links, it is possible to cancel interference signals by an nonlinear processing based on the SIC algorithm.

[Expression 62]

$$y^{B}_{i} = y^{B}_{i(i-1)} + y^{B}_{i(i+1)} + n^{B}_{i} = h^{eBB}_{i(i+1)} s^{B}_{(i+1)} + n^{B}_{i}$$

In the case of using the SIC algorithm, as shown in the following Expression 63, firstly the i-th receiving node detects $s^{B}_{(i+1)}$ .

[Expression 63]

$$\hat{s}^{B}_{(i+1)} = \frac{1}{h^{eBB}_{i(i+1)}} y^{B}_{i}$$

Then, as shown in the following Expression 64, the i-th receiving node assumes that $\hat{s}^{B}_{(i+1)}$ is detected accurately and realizes the interference cancellation by subtracting the replica signal from the receiving signal $y^{F}_{i}$ of the forward link of the i-th receiving node.

[Expression 64]

$$y_i^{\text{FSIC}} = y_i^{\text{F}} - h_{i(i+1)}^{\text{eFB}} \hat{s}_{(i+1)}^{\text{B}} = y_{i(i-1)}^{\text{FDPC}} + y_{i(i+1)}^{\text{F}} - h_{i(i+1)}^{\text{eFB}} \hat{s}_{(i+1)}^{\text{B}} + n_i^{\text{F}} = h_{i(i-1)}^{\text{eFF}} s_{(i-1)}^{\text{F}} + n_i^{\text{F}}$$

Where $h_{i(i-1)}^{\text{eFF}} = \left(\mathbf{w}_i^{\text{rF}}\right)^H \mathbf{H}_{i(i-1)} \mathbf{w}_{(i-1)}^{\text{tF}}$ is an equivalent channel coefficient of the forwardlinkbetweenthe (i-1)-thtransmitting node and the i-th receiving node. Further, $s_{(i-1)}^{\text{F}}$ is a desired signal.

Finally, from the above Expression 62 and Expression 64, it is clear that according to the MIMO mesh network of the present invention that uses the nonlinear algorithm (the SIC/DPC algorithm), it is possible to realize the multiplexing transmission of the forward link and the backward without interferences from adjacent nodes.

Further, compared to the MIMO mesh network of the present invention that uses the linear algorithm (the ZF algorithm), the MIMO mesh network of the present invention that uses the nonlinear algorithm (the SIC/DPC algorithm) realizes a higher diversity gain.

<3-4> channel estimating method (channel estimating protocol)

As described above, in the MIMO mesh network of the present invention, bi-directional signal streams are spatial multiplexed, and at the same time interference signals from adjacent nodes are canceled. To realize this, for each node, it is necessary to compute (determine) the transmitting weight or the receiving weight and the channel matrix (the channel information) of adjacent links.

We explain a channel estimating method of the MIMO mesh network of the present invention as follows.

Here, we suppose that the channel reciprocity came into effect. That is to say, we explain preferred embodiments of the channel estimating method (protocol) applied to the MIMO mesh network of the present invention in the case that

$$\mathbf{H}_{i(i-1)} = \mathbf{H}_{(i-1)i}^{T}$$ holds (where $[\cdot]^T$ represents a transposed matrix of $[\cdot]$). Furthermore, in general, when channels are static channels and the calibration of the RF circuit is implemented, the channel reciprocity comes into effect.

<3-4-1> in the case that the i-th node is a receiving node

In the MIMO mesh network of the present invention, when the i-th node is a receiving node i.e. "Rx", it is necessary to learn the channel matrix $\mathbf{H}_{i(i-1)}$ from the (i-1)-th transmitting node to the i-th receiving node and the trans-

mitting weights $\left\{\mathbf{w}_{(i-1)}^{\text{tF}}, \mathbf{w}_{(i-1)}^{\text{tB}}\right\}$ of the (i-1)-th transmitting node.

When attention is focused on the i-th node (the i-th receiving node), the transmitting weights $\mathbf{w}_{(i-1)}^{\text{tF}}$ and

$\mathbf{w}_{(i-1)}^{\text{tB}}$ of the (i-1)-th transmitting nod are already computed (determined).

Therefore, since learning the channel matrix $\mathbf{H}_{i(i-1)}$ and the transmitting weights $\left\{\mathbf{w}_{(i-1)}^{\text{tF}}, \mathbf{w}_{(i-1)}^{\text{tB}}\right\}$ of the (i-1)-th transmitting node is the same a's learning the equivalent transmitting channel vectors $\left\{\mathbf{h}_{i(i-1)}^{\text{tF}}, \mathbf{h}_{i(i-1)}^{\text{tB}}\right\}$ ,

the present invention performs the channel estimation processing by learning the equivalent transmitting channel vectors

$\left\{\mathbf{h}_{i(i-1)}^{\text{tF}}, \mathbf{h}_{i(i-1)}^{\text{tB}}\right\}$ , i.e. by estimating the equivalent transmitting channel vectors $\left\{\mathbf{h}_{i(i-1)}^{\text{tF}}, \mathbf{h}_{i(i-1)}^{\text{tB}}\right\}$ .

In the MIMO mesh network of the present invention, in order to estimate the equivalent transmitting channel

vectors $\left\{\mathbf{h}_{i(i-1)}^{\text{tF}}, \mathbf{h}_{i(i-1)}^{\text{tB}}\right\}$ , firstly, as shown in the following Expression 65 and Expression 66, training signals

$\tilde{s}_{(i-1)}^{\text{F}}(t)$ and $\tilde{s}_{(i-1)}^{\text{B}}(t)$ that are mutually orthogonal, are transmitted from the (i-1)-th transmitting node to the i-th receiving node through the transmitting weights $\mathbf{w}_{(i-1)}^{tF}$ and $\mathbf{w}_{(i-1)}^{tB}$ of the (i-1)-th transmitting node that are already computed.

[Expression 65]

$$\tilde{\mathbf{y}}_{i(i-1)}(t) = \mathbf{H}_{i(i-1)}\mathbf{w}_{(i-1)}^{tF}\tilde{s}_{(i-1)}^{F}(t) + \mathbf{H}_{i(i-1)}\mathbf{w}_{(i-1)}^{tB}\tilde{s}_{(i-1)}^{B}(t) + \mathbf{n}_i$$

[Expression 66]

$$\tilde{\mathbf{y}}_{i(i-1)}(t) = \mathbf{h}_{i(i-1)}^{tF}\tilde{s}_{(i-1)}^{F}(t) + \mathbf{h}_{i(i-1)}^{tB}\tilde{s}_{(i-1)}^{B}(t) + \mathbf{n}_i$$

Where $\tilde{y}_{i(i-1)}(t) \in C^M$ is a receiving signal vector of the i-th receiving node equivalent to the training signals $\tilde{s}_{(i-1)}^{F}(t), \tilde{s}_{(i-1)}^{B}(t)$ transmitted from the (i-1)-th transmitting node. Further, $\mathbf{n}_i \in C^M$ is an additive noise vector of the i-th receiving node.

Next, since the training signals $\tilde{s}_{(i-1)}^{F}(t)$ and $\tilde{s}_{(i-1)}^{B}(t)$ are mutually orthogonal, in the present invention, the equivalent transmitting channel vectors $\{\mathbf{h}_{i(i-1)}^{tF}, \mathbf{h}_{i(i-1)}^{tB}\}$ are estimated based on the following Expression 67 and Expression 68.

[Expression 67]

$$\hat{\mathbf{h}}_{i(i-1)}^{tF} = \frac{1}{T}\int_0^T \tilde{\mathbf{y}}_{i(i-1)}(t)\tilde{s}_{(i-1)}^{F*}(t)\mathrm{d}t$$

[Expression 68]

$$\hat{\mathbf{h}}_{i(i-1)}^{tB} = \frac{1}{T}\int_0^T \tilde{\mathbf{y}}_{i(i-1)}(t)\tilde{s}_{(i-1)}^{B*}(t)\mathrm{d}t$$

Where $\hat{\mathbf{h}}_{i(i-1)}^{tF}, \hat{\mathbf{h}}_{i(i-1)}^{tB}$ are the estimated equivalent transmitting channel vectors, i.e. estimation values of the equivalent transmitting channel vectors $\{\mathbf{h}_{i(i-1)}^{tF}, \mathbf{h}_{i(i-1)}^{tB}\}$.

<3-4-2> in the case that the i-th node is a transmitting node

In the MIMO mesh network of the present invention, when the i-th node is a transmitting node i.e. "Tx", it is necessary to learn the channel matrix $\mathbf{H}_{(i-1)i}$ from the i-th transmitting node to the (i-1)-th receiving node and the receiving weights $\{\mathbf{w}_{(i-1)}^{rF}, \mathbf{w}_{(i-1)}^{rB}\}$ of the (i-1) -th receiving node.

When attention is focused on the i-th node (the i-th transmitting node), the receiving weights $\mathbf{w}_{(i-1)}^{rF}$ and

$\mathbf{w}_{(i-1)}^{rB}$ of the (i-1)-th receiving nod are already computed (determined).

Therefore, since learning the channel matrix $\mathbf{H}_{(i-1)i}$ and the receiving weights $\left\{\mathbf{w}_{(i-1)}^{rF}, \mathbf{w}_{(i-1)}^{rB}\right\}$ of the (i-1)-th receiving node is the same as learning the equivalent receiving channel vectors $\left\{\mathbf{h}_{(i-1)i}^{rF}, \mathbf{h}_{(i-1)i}^{rB}\right\}$, the present invention performs the channel estimation processing by learning the equivalent receiving channel vectors $\left\{\mathbf{h}_{(i-1)i}^{rF}, \mathbf{h}_{(i-1)i}^{rB}\right\}$, i.e. by estimating the equivalent receiving channel vectors $\left\{\mathbf{h}_{(i-1)i}^{rF}, \mathbf{h}_{(i-1)i}^{rB}\right\}$.

In order to estimate the equivalent receiving channel vectors $\left\{\mathbf{h}_{(i-1)i}^{rF}, \mathbf{h}_{(i-1)i}^{rB}\right\}$, the present invention utilizes the property of the channel reciprocity that is represented by the following Expression 69.

[Expression 69]

$$h_{(i-1)i}^{eBB} = \left(\mathbf{w}_{(i-1)}^{rB}\right)^{H}\mathbf{H}_{(i-1)i}\mathbf{w}_{i}^{tB} = \left(h_{i(i-1)}^{eFF}\right)^{T} = \left(\mathbf{w}_{(i-1)}^{tF}\right)^{T}\mathbf{H}_{(i-1)i}\left(\mathbf{w}_{i}^{rF}\right)^{*}$$

Where $[\cdot]^{*}$ represents a complex conjugate matrix of $[\cdot]$. $[\cdot]^{T}$ represents a transposed matrix of $[\cdot]$. $[\cdot]^{H}$ represents a complex conjugate transposed matrix of $[\cdot]$.

In the case that the property of the channel reciprocity represented by the above Expression 69 came into effect, as $\mathbf{w}_{(i-1)}^{tF} = \left(\mathbf{w}_{(i-1)}^{rB}\right)^{*}$, the receiving weight of the backward link is equivalent to the transmitting weight of the forward link, and as $\mathbf{w}_{i}^{tB} = \left(\mathbf{w}_{i}^{rF}\right)^{*}$, the receiving weight of the forward link is equivalent to the transmitting weight of the backward link.

As the transmitting weights and receiving weights $\mathbf{w}_{(i-1)}^{rB}, \mathbf{w}_{(i-1)}^{tF}, \mathbf{w}_{i}^{tB}, \mathbf{w}_{i}^{rF}$, ·the equivalent receiving channel vectors $\mathbf{h}_{(i-1)i}^{rB}, \mathbf{h}_{(i-1)i}^{rF}$ also has the property of the channel reciprocity and that can be represented by the following Expression 70 and Expression 71.

[Expression 70]

$$\mathbf{h}_{(i-1)i}^{rB} = \mathbf{H}_{(i-1)i}^{T}\left(\mathbf{w}_{(i-1)}^{rB}\right)^{*} = \mathbf{H}_{i(i-1)}\mathbf{w}_{(i-1)}^{tF} = \mathbf{h}_{i(i-1)}^{tF}$$

[Expression 71]

$$\mathbf{h}_{(i-1)i}^{rF} = \mathbf{H}_{(i-1)i}^{T}\left(\mathbf{w}_{(i-1)}^{rF}\right)^{*} = \mathbf{H}_{i(i-1)}\mathbf{w}_{(i-1)}^{tB} = \mathbf{h}_{i(i-1)}^{tB}$$

From the above Expression 70 and Expression 71, $\mathbf{h}_{(i-1)i}^{rB} = \mathbf{h}_{i(i-1)}^{tF}$ and $\mathbf{h}_{(i-1)i}^{rF} = \mathbf{h}_{i(i-1)}^{tB}$ hold. Therefore, the estimation value $\hat{\mathbf{h}}_{(i-1)i}^{rF}$ of the equivalent receiving channel vector $\mathbf{h}_{(i-1)i}^{rF}$ and the estimation value $\hat{\mathbf{h}}_{(i-1)i}^{rB}$ of the equivalent receiving channel vector $\mathbf{h}_{(i-1)i}^{rB}$ are equivalent to $\hat{\mathbf{h}}_{i(i-1)}^{tB}$ obtained by the above Expression 68 and $\hat{\mathbf{h}}_{i(i-1)}^{tF}$ obtained by the above Expression 69, respectively.

In the present invention, the learned equivalent transmitting channel vector $\mathbf{h}_{i(i-1)}^{tF}$ is used as the equivalent receiving channel vector $\mathbf{h}_{(i-1)i}^{rB}$, and the learned equivalent transmitting channel vector $\mathbf{h}_{i(i-1)}^{tB}$ is used as the equivalent receiving channel vector $\mathbf{h}_{(i-1)i}^{rF}$.

As described above, if only the equivalent transmitting channel vectors $\left\{\mathbf{h}_{i(i-1)}^{tF}, \mathbf{h}_{i(i-1)}^{tB}\right\}$ are estimated, the estimation values of the equivalent receiving channel vectors $\left\{\mathbf{h}_{(i-1)i}^{rF}, \mathbf{h}_{(i-1)i}^{rB}\right\}$ will be obtained.

That is to say, it is possible to obtain the transmitting and receiving weights $\left\{\mathbf{w}_i^{rF}, \mathbf{w}_i^{rB}, \mathbf{w}_i^{tF}, \mathbf{w}_i^{tB}\right\}$ of the i-th node based on the equivalent transmitting channel vectors $\hat{\mathbf{h}}_{i(i-1)}^{tF}, \hat{\mathbf{h}}_{i(i-1)}^{tB}$ that are estimated by the above Expression 67 and Expression 68.

Furthermore, in the case that the channel reciprocity came into effect, it is not necessary to perform a feedback control or a feed forward control.

In the MIMO mesh network of the present invention, firstly, an initial channel estimating process that estimates the equivalent transmitting channel vector in order from the first node is performed, and then each node performs the channel tracking sequentially and dispersively after the initial channel estimating processes of all nodes are complete.

<3-5> performance evaluation based on computer simulation

Here, the performance evaluation based on computer simulation is performed so as to verify the effectiveness (the performance) of the MIMO mesh network according to the second embodiment of the present invention.

<3-5-1> simulation conditions

Conditions for performing the numerical simulation by computer are as follows.

Condition 1:

The number of nodes that construct the one-dimensional (1D) MIMO mesh network is eight.nodes.

Condition 2:

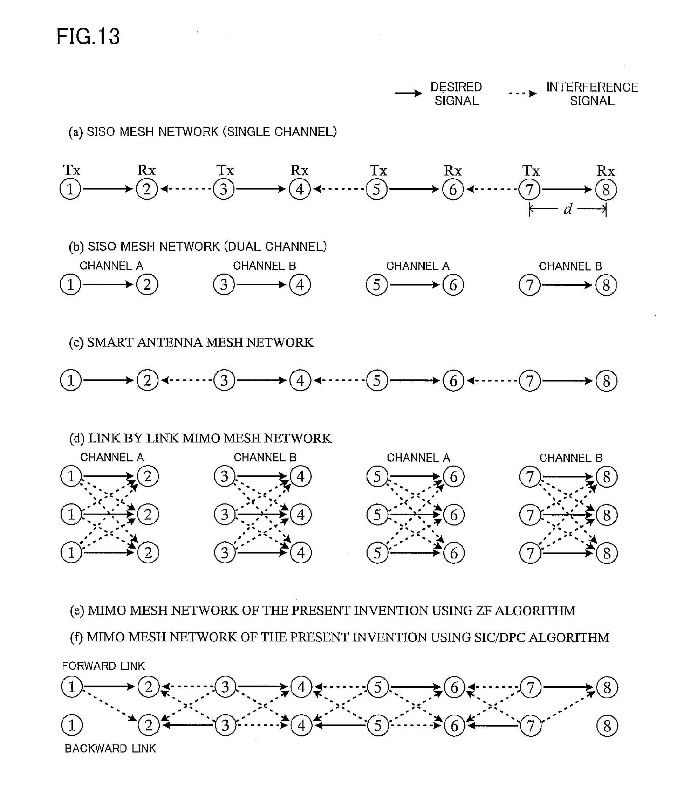

FIG.13 shows scenarios for the numerical simulation. Six ways of scenarios, i.e. scenarios (a), (b), (c), (d), (e) and (f) shown in FIG. 13 are classified in two kinds of the single channel and the multi-channel.

Concretely, scenario (a): a SISO mesh network with single channel, scenario (c): a smart antenna mesh network, scenario (e) : a MIMO mesh network of the present invention that uses the ZF algorithm, and scenario (f) : a MIMO mesh network of the present invention that uses the SIC/DPC algorithm, are classified in the single channel (one channel).

Scenario (b): a SISO mesh network with dual channel, and scenario (d) : a link by link MIMO mesh network are classified in the multi-channel (two channels).

Condition 3:

In scenarios in which each node has multiple antennas, that is, in scenario (c) : a smart antenna mesh network, scenario (d) : a link by link MIMO mesh network, (e) : a MIMO mesh network of the present invention that uses the ZF algorithm, and scenario (f) : a MIMO mesh network of the present invention that uses the SIC/DPC algorithm, the number of antennas of each node is three.

Condition 4:

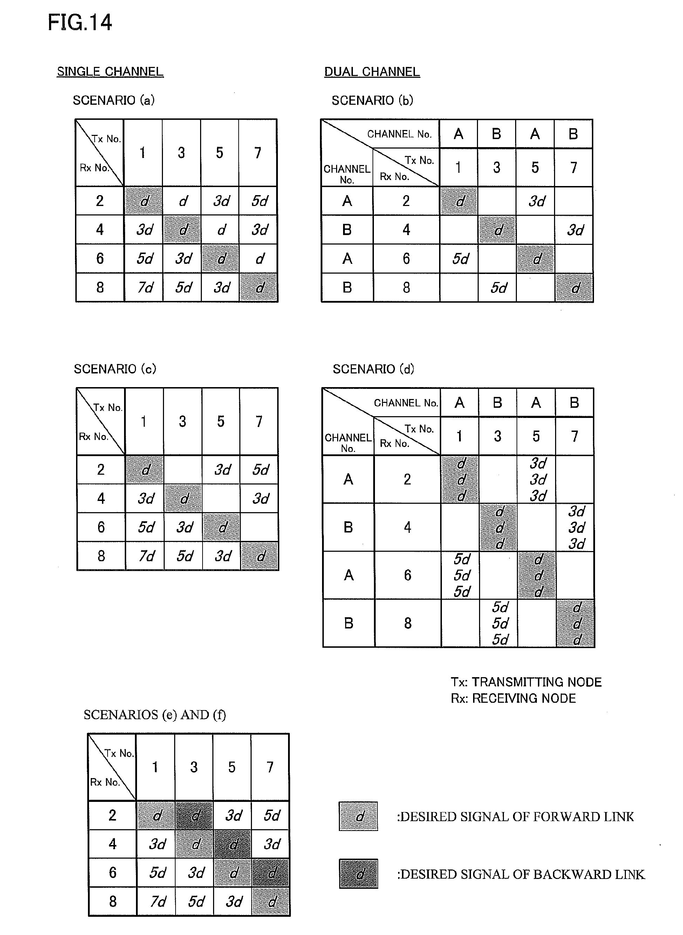

All distances between adjacent nodes are equally assumed as "d". With respect to all combinations of the transmitting node and the receiving node, matrices that represent the distance between the transmitting node and the receiving node is shown in FIG.14. In FIG.14, with respect to a certain receiving node, the distance from the certain receiving node to a node that transmits the desired signal and the interference signal, is indicated in the row of the certain receiving node number.

From FIG.14, it is clear that in all scenarios, the interference condition of the fourth node is the severest. Therefore, the capacity of the fourth node becomes dominant in the network capacity. So, in the following the numerical analysis, the performance of the fourth node is evaluated. Further, in the case of a multi-hop relay network, since links connected to the fourth node become the bottleneck, the trend of the end to end capacity from the first node to the eighth node accords with the trend of the capacity of the fourth node.

Condition 5:

Channels between arbitrary transmitting antenna and arbitrary receiving antenna of arbitrary adjacent nodes, are assumed to independent identically distributed flat Rayleigh fading channels. Further, those power are assumed to decay with distance, and the path loss constant is 3.5. All the channels are artificial environments that assumed Non Line of Sight (NLOS) environment.

Condition 6:

With respect to scenario (d), i.e. with respect to a link by link MIMO mesh network, in each link, the Singular Value Decomposition (SVD) MIMO transmission (see Non-Patent Document 10) is assumed. In the Singular Value Decomposition MIMO transmission, the right singular matrix and the left singular matrix of the channel matrix of each link, are used as the transmitting weight and the receiving weight respectively.

Condition 7:

As a value that represents the network channel capacity, the sum channel capacity of the fourth node is evaluated. For example, the average channel capacity of the MIMO mesh network for the fading variation $C_{mimo}$ is computed based on the following Expression 72.

[Expression 72]

$$C_{\mathrm{mimo}} = \mathrm{E}\left[\log_2\left(1+\gamma_4^{\mathrm{F}}\right)+\log_2\left(1+\gamma_4^{\mathrm{B}}\right)\right]$$

Where $\gamma_4^{\mathrm{F}}$ and $\gamma_4^{\mathrm{B}}$ represent the Signal to Interference plus Noise Ratio (SINR) of the forward link and the backward link of the fourth node, respectively.

Based on the interference conditions (the interference distances) shown in FIG.14, these SINRs, i.e. $\gamma_4^{\mathrm{F}}$ and $\gamma_4^{\mathrm{B}}$ can be computed based on the following Expression 73 and Expression 74.

[Expression 73]

$$\gamma_4^{\mathrm{F}} = \frac{P_3^{\mathrm{F}}\mid h_{43}^{\mathrm{eFF}}\mid^2}{\displaystyle\sum_{j=1,5,7} P_j^{\mathrm{F}}\mid h_{4j}^{\mathrm{eFF}}\mid^2 + \sum_{j=1,3,5,7} P_j^{\mathrm{B}}\mid h_{4j}^{\mathrm{eFB}}\mid^2 + \sigma^2}$$

[Expression 74]

$$\gamma_4^{\mathrm{B}} = \frac{P_5^{\mathrm{B}} \mid h_{45}^{\mathrm{eBB}} \mid^2}{\displaystyle\sum_{j=1,3,7} P_j^{\mathrm{B}} \mid h_{4j}^{\mathrm{eBB}} \mid^2 + \sum_{j=1,3,5,7} P_j^{\mathrm{F}} \mid h_{4j}^{\mathrm{eBF}} \mid^2 + \sigma^2}$$

Where $P_j^{\mathrm{F}}$ and $P_j^{\mathrm{B}}$ are the transmission power of the forward link and the backward link of the j-th node, respectively. The total transmission power P that is the transmission power of $P_j^{\mathrm{F}}$ and $P_j^{\mathrm{B}}$ in total, is represented by $P = P_j^{\mathrm{F}} + P_j^{\mathrm{B}} \forall j$ and is constant. Further, the noise power per receiving antenna is defined in $\sigma^2$. In the case of the end node (the first node), the total power is supplied only to either one link (the forward link of the first node). In the case of nodes except the end node, the total power is distributed to the forward link and the backward link respectively.

Furthermore, $h_{ij}^{\mathrm{eFF}}, h_{ij}^{\mathrm{eFB}}, h_{ij}^{\mathrm{eBB}}, h_{ij}^{\mathrm{eBF}}$ represent the equivalent channel response and are defined by the following Expression 75, Expression 76, Expression 77 and Expression 78 respectively.

[Expression 75]

$$h_{ij}^{\mathrm{eFF}} = \left( \mathbf{w}_i^{\mathrm{rF}} \right)^H \mathbf{H}_{ij} \mathbf{w}_j^{\mathrm{tF}}$$

[Expression 76]

$$h_{ij}^{\mathrm{eFB}} = \left( \mathbf{w}_i^{\mathrm{rF}} \right)^H \mathbf{H}_{ij} \mathbf{w}_j^{\mathrm{tB}}$$

[Expression 77]

$$h_{ij}^{\mathrm{eBB}} = \left( \mathbf{w}_i^{\mathrm{rB}} \right)^H \mathbf{H}_{ij} \mathbf{w}_j^{\mathrm{tB}}$$

[Expression 78]

$$h_{ij}^{\mathrm{eBF}} = \left( \mathbf{w}_i^{\mathrm{rB}} \right)^H \mathbf{H}_{ij} \mathbf{w}_j^{\mathrm{tF}}$$

Condition 8:

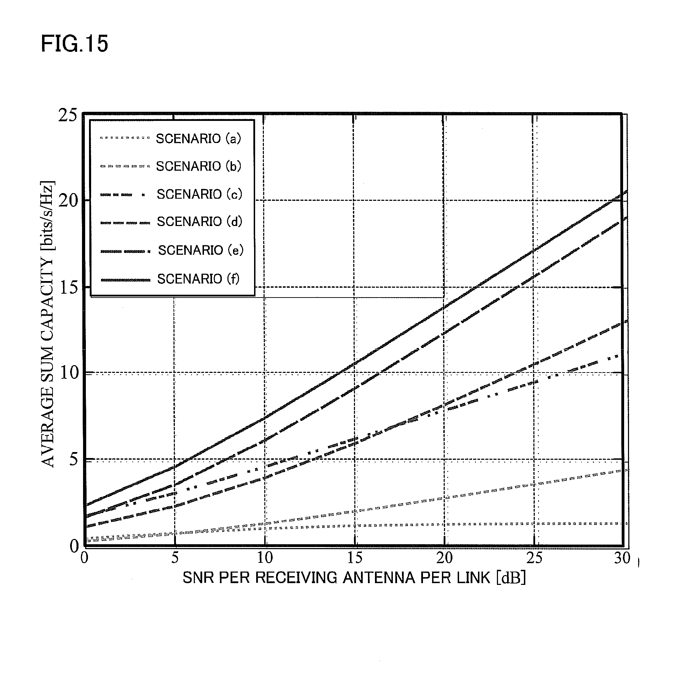

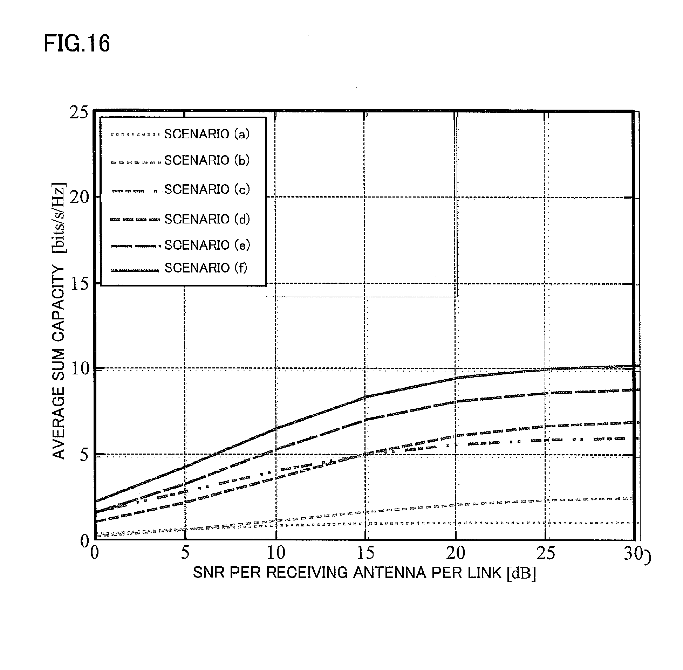

The total transmission power per node is P and the noise power per receiving antenna is $\sigma^2$ Therefore, the Signal to Noise Ratio (SNR) per antenna of link with the unitary channel gain, is provided by $P/\sigma^2$ and becomes the horizontal axis of FIG.15 and FIG.16 that indicate the performance evaluation of the network.

<3-5-2> results of numerical analysis of network capacity

FIG.15 and FIG.16 show the relation between the average sum capacity and the SNR of each scenario computed by Monte Carlo simulation. In order to perform a basic analysis of the MIMO mesh network of the present invention, FIG.15 neglects the interference signals from nodes with the distance greater or equal to 3d.

From FIG.15, it is very clear that the performance of scenario (a), i. e. the performance of the SISO mesh network with single channel is the worst due to the interferences from adj acent nodes. On the other hand, Scenario (b), i.e. the SISO mesh network with dual channel realizes the interference avoidance and improves the performance by bringing in the Media Access Control (MAC) protocol. Furthermore, since the interference avoidance is possible even by single channel, scenario (c), i.e. the smart antenna mesh network has more than twice the characteristic of the SISO mesh network with dual channel. In addition, since there is the multiplexing gain in each link, scenario (d), i.e. the link by link MIMO mesh network has about three times the characteristic of the SISO mesh network with dual channel.

On the other hand, the throughput performance of the MIMO mesh network of the present invention, becomes more than four times the characteristic of the SISO mesh network. This is due to the MIMO mesh networks of the present invention, i.e. scenario (e) : the MIMO mesh network of the present invention that uses the ZF algorithm and scenario (f) : the MIMO mesh network of the present invention that uses the SIC/DPC algorithm, can simultaneously realize the link multiplexing and the interference avoidance by single channel. Furthermore, comparing the MIMO mesh network of the present invention that uses the ZF algorithm with the MIMO mesh network of the present invention that uses the SIC/DPC algorithm, it is clear that the MIMO mesh network of the present invention that uses the SIC/DPC algorithm can improve about 2dB SNR realizing the same network capacity than the MIMO mesh network of the present invention that uses the ZF algorithm. This is due to the MIMO mesh network of the present invention that uses the SIC/DPC algorithm obtaining the array (beamforming) gain and the diversity gain by the maximizing weight.

FIG.16 shows the average sum capacity in which all interference signals within network are considered. Due to the interferences from nodes with the distance greater or equal to 2d, in the area where SNR is high (this case corresponds to about 17dB), the saturation of the performance is seen from FIG. 16. From FIG.16, it is obvious at a glance that even if all the interference signals are considered, the MIMO mesh networks of the present invention (scenario (e) and scenario (f)) are good in all scenarios.

In FIG. 16, in the area where SNR is high, the average sum capacity is superior in order of scenario (f): the MIMO mesh network of the present invention that uses the SIC/DPC algorithm, scenario (e): the MIMO mesh network of the present invention that uses the ZF algorithm, scenario (d) : the link by link MIMO mesh network, scenario (c): the smart antenna mesh network, Scenario (b) : the SISO mesh network with dual channel, scenario (a) : the performance of the SISO mesh network with single channel.

<4> generalization of the MIMO mesh network of the present invention

We explained the MIMO mesh networks according to the first embodiment and the second embodiment of the present invention in detail as described above. According to the above-described MIMO mesh networks of the present invention, it is possible to perform the interference avoidance, and at the same time it is possible to multiplex and transmit multiple stream signals in the bi-directional link (multiple stream signals in the forward link and the backward link), or it is possible to multiplex and transmit multiple stream signals in an unidirectional link (multiple stream signals in different forward links or multiple stream signals in different backward links).

The MIMO mesh network of the present invention is generalized as follows. We illustrate a network model of the generalized MIMO mesh network according to the present invention in which there are multiple relay nodes, each relay node has M MIMO antennas and a wireless network is constructed by setting up wireless links between relay nodes.

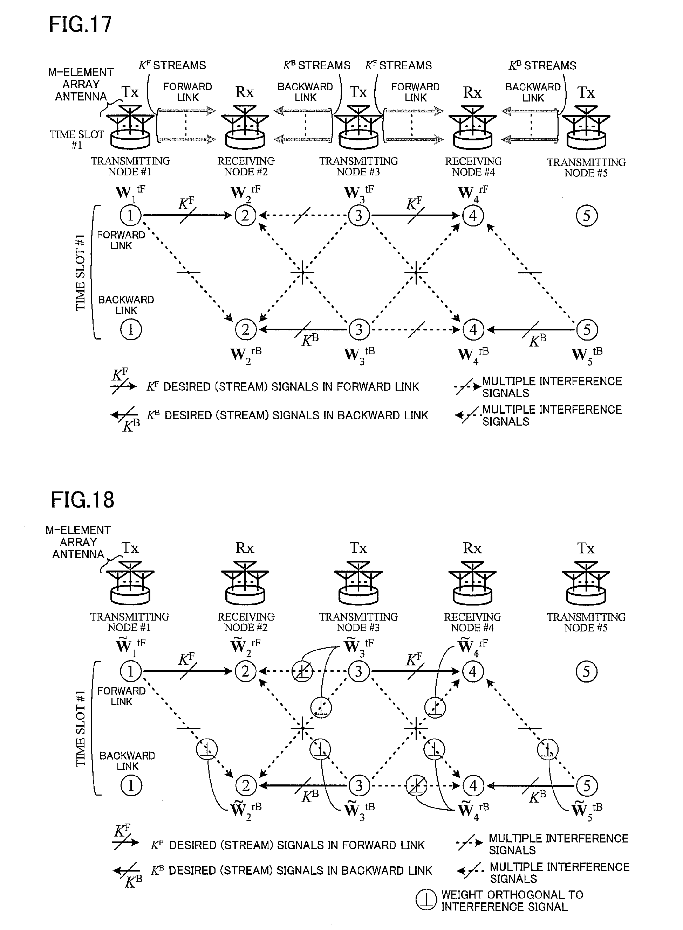

As a result of having considered the viewability of a drawing, we shown a network model of the MIMO mesh network according to the present invention in which there are five relay nodes and each relay node has M MIMO antennas (a M-element array antenna) in FIG.17.

As shown in FIG.17, in the generalized MIMO mesh network according to the present invention, each node has M MIMO antennas (a M-element array antenna), and $K^F$ stream signals (hereinafter referred to as "$K^F$ streams") are multiplexed in the forward link and at the same time $K^B$ stream signals (hereinafter referred to as "$K^B$ streams") are also multiplexed in the backward link.

Therefore, the number of the total streams (K) which a certain node transmits/receives (hereinafter referred to as "the number of the total streams (K) transmitting/receiving"), becomes $K=K^F+K^B$. Where the number of antenna elements (M), the number of streams in the forward link ($K^F$) and the number of streams in the backward link ($K^B$) are assumed to satisfy a condition represented by the following Expression 79.

[Expression 79]

$$M \geq K + \max(K^{\mathrm{F}}, K^{\mathrm{B}})$$

When the condition represented by the above Expression 79 is satisfied, it is possible to apply the above-described the linear algorithm and the nonlinear algorithm to a general topology.

For example, in a bi-directional link signal transmission that multiplexes $K^{\mathrm{F}}$=1 stream in the forward link and $K^{\mathrm{B}}$=1 stream in the backward link, a MIMO antenna having at least M=3 elements is necessary. Furthermore, in the case that the node is equipped with a 4-element (M=4) MIMO antenna, besides a bi-directional link signal transmission of {$K^{\mathrm{F}}$,$K^{\mathrm{B}}$}={1,1}, unidirectional link signal transmissions such as {$K^{\mathrm{F}}$,$K^{\mathrm{B}}$}={2,0} and {$K^{\mathrm{F}}$,$K^{\mathrm{B}}$}={0,2} are also possible.

In other words, in the generalized MIMO mesh network according to the present invention, it is possible to construct an arbitrary topology that multiplexes (M-1) stream signals in each node.

In addition, when the condition represented by the above Expression 79 is satisfied in each node, it is also possible to employ a different multiplexing scheme in every link. In this way, in the MIMO mesh network of the present invention, it is also possible to adaptively control the multiplexing topology of these stream signals depending on the data rate of stream signals in the forward link, the data rate of stream signals in the backward link and the states of channels.

Next, attention is focused on two links adj acent to a certain node and we formulate a signal model of the generalized MIMO mesh network according to the present invention.

Here, the receiving signal vector $\mathbf{y}_i^{\mathrm{F}} \in C^{K^{\mathrm{F}}}$ of the forward link of the i-th node and the receiving signal vector $\mathbf{y}_i^{\mathrm{B}} \in C^{K^{\mathrm{B}}}$ of the backward link of the i-th node, can be modeled by using the following Expression 80 - Expression 85.

[Expression 80]

$$\mathbf{y}_i^{\mathrm{F}} = \mathbf{y}_{i(i-1)}^{\mathrm{F}} + \mathbf{y}_{i(i+1)}^{\mathrm{F}} + \mathbf{n}_i^{\mathrm{F}}$$

[Expression 81]

$$\mathbf{y}_i^{\mathrm{B}} = \mathbf{y}_{i(i-1)}^{\mathrm{B}} + \mathbf{y}_{i(i+1)}^{\mathrm{B}} + \mathbf{n}_i^{\mathrm{B}}$$

[Expression 82]

$$\mathbf{y}_{i(i-1)}^{\mathrm{F}} = \left(\mathbf{W}_i^{\mathrm{rF}}\right)^H \mathbf{H}_{i(i-1)} \mathbf{W}_{(i-1)}^{\mathrm{tF}} \mathbf{s}_{(i-1)}^{\mathrm{F}} + \left(\mathbf{W}_i^{\mathrm{rF}}\right)^H \mathbf{H}_{i(i-1)} \mathbf{W}_{(i-1)}^{\mathrm{tB}} \mathbf{s}_{(i-1)}^{\mathrm{B}}$$

[Expression 83]

$$\mathbf{y}_{i(i+1)}^{\mathrm{F}} = \left(\mathbf{W}_i^{\mathrm{rF}}\right)^H \mathbf{H}_{i(i+1)} \mathbf{W}_{(i+1)}^{\mathrm{tF}} \mathbf{s}_{(i+1)}^{\mathrm{F}} + \left(\mathbf{W}_i^{\mathrm{rF}}\right)^H \mathbf{H}_{i(i+1)} \mathbf{W}_{(i+1)}^{\mathrm{tB}} \mathbf{s}_{(i+1)}^{\mathrm{B}}$$

[Expression 84]

$$\mathbf{y}_{i(i-1)}^{\mathrm{B}} = \left(\mathbf{W}_i^{\mathrm{rB}}\right)^H \mathbf{H}_{i(i-1)} \mathbf{W}_{(i-1)}^{\mathrm{tF}} \mathbf{s}_{(i-1)}^{\mathrm{F}} + \left(\mathbf{W}_i^{\mathrm{rB}}\right)^H \mathbf{H}_{i(i-1)} \mathbf{W}_{(i-1)}^{\mathrm{tB}} \mathbf{s}_{(i-1)}^{\mathrm{B}}$$

[Expression 85]

$$\mathbf{y}_{i(i+1)}^{\mathrm{B}} = \left(\mathbf{W}_i^{\mathrm{rB}}\right)^H \mathbf{H}_{i(i+1)} \mathbf{W}_{(i+1)}^{\mathrm{tF}} \mathbf{s}_{(i+1)}^{\mathrm{F}} + \left(\mathbf{W}_i^{\mathrm{rB}}\right)^H \mathbf{H}_{i(i+1)} \mathbf{W}_{(i+1)}^{\mathrm{tB}} \mathbf{s}_{(i+1)}^{\mathrm{B}}$$

Where $[\cdot]^{\mathrm{H}}$ represents a complex conjugate transposedmatrix of $[\cdot]$. $\mathbf{s}_j^{\mathrm{F}} \in C^{K^{\mathrm{F}}}$ and $\mathbf{s}_j^{\mathrm{B}} \in C^{K^{\mathrm{B}}}$ are the transmitting signal vectors for the forward link and the backward link of the j-th node. $\mathbf{H}_{ij} \in C^{M \times M}$ is a channel matrix from the j-th node to the i-th node. $\mathbf{W}_j^{\mathrm{tF}} \in C^{M \times K^{\mathrm{F}}}$ and $\mathbf{W}_j^{\mathrm{tB}} \in C^{M \times K^{\mathrm{B}}}$ are the transmitting weight matrices for the forward link and the backward link of the j-th node. $\mathbf{W}_i^{\mathrm{rF}} \in C^{M \times K^{\mathrm{F}}}$ and $\mathbf{W}_i^{\mathrm{rB}} \in C^{M \times K^{\mathrm{B}}}$ are the receiving weight matrices for the forward link and the backward link of the i-th node. $\mathbf{n}_i^{\mathrm{F}} \in C^{K^{\mathrm{F}}}$ and $\mathbf{n}_i^{\mathrm{B}} \in C^{K^{\mathrm{B}}}$ are the equivalent additive noise vectors of the forward link and the backward link that are received in the i-th node.

In the generalized MIMO mesh network of the present invention that has the signal model formulated as described above, the obtaining methods (the computing process procedures) of the transmitting/receiving weight matrix for simultaneously realizing the interference avoidance and the spatial multiplexing, are divided into the linear algorithm and the nonlinear algorithm, and concretely described as follows.

<4-1> linear algorithm

In the generalized MIMO mesh network of the present invention, the transmitting weight matrix and the receiving weight matrix are computed (determined) in order from the first node to the last node.

Here, we explain the computing process methods (the computing process procedures) of the transmitting weight matrix and the receiving weight matrix in the generalized MIMO mesh network of the present invention, in the case of using the linear algorithm (the block ZF algorithm or the block MMSE algorithm) as the MIMO transmission scheme.

As shown in FIG.18, in the generalized MIMO mesh network of the present invention that uses the linear algorithm, by the linear interference cancellation based on the block ZF algorithm (or the block MMSE algorithm), the interference avoidance between different links is performed, and at the same time the usual MIMO multi-stream transmission in each link (hereinafter referred to as "a MIMO multiplexing transmission") is also performed.

Here, in the generalized MIMO mesh network of the present invention that utilizes the block ZF algorithm as the linear scheme, firstly, the MIMO multiplexing transmission is performed in every link after avoiding the interferences to the other links by the linear interference cancellation based on the block ZF algorithm. Each transmitting weight matrix and each receiving weight matrix at that time are represented by the following Expression 86 ~ Expression 89.

[Expression 86]

$$\mathbf{W}_j^{\mathrm{tF}} = \widetilde{\mathbf{W}}_j^{\mathrm{tF}} \widetilde{\widetilde{\mathbf{W}}}_j^{\mathrm{tF}}$$

[Expression 87]

$$\mathbf{W}_j^{tB} = \widetilde{\mathbf{W}}_j^{tB}\widetilde{\widetilde{\mathbf{W}}}_j^{tB}$$

[Expression 88]

$$\mathbf{W}_i^{rF} = \widetilde{\mathbf{W}}_i^{rF}\widetilde{\widetilde{\mathbf{W}}}_i^{rF}$$

[Expression 89]

$$\mathbf{W}_i^{rB} = \widetilde{\mathbf{W}}_i^{rB}\widetilde{\widetilde{\mathbf{W}}}_i^{rB}$$

Where $\mathbf{W}_j^{tF}$ and $\mathbf{W}_j^{tB}$ are transmitting weight matrices for the forward link and the backward link of the j-th node. $\mathbf{W}_i^{rF}$ and $\mathbf{W}_i^{rB}$ are receiving weight matrices for the forward link and the backward link of the i-th node. Furthermore, $\widetilde{\mathbf{W}}_j^{tF} \in C^{M\times(M-K)}$ and $\widetilde{\mathbf{W}}_j^{tB} \in C^{M\times(M-K^F)}$ are block ZF transmitting weight matrices for the forward link and the backward link of the j-th node. $\widetilde{\widetilde{\mathbf{W}}}_j^{tF} \in C^{(M-K)\times K^F}$ and $\widetilde{\widetilde{\mathbf{W}}}_j^{tB} \in C^{(M-K^F)\times K^B}$ are MIMO transmitting weight matrices for the forward link and the backward link of the j-th node that avoid the interferences to the other links by the block ZF algorithm. In addition, $\widetilde{\mathbf{W}}_i^{rF} \in C^{M\times(M-K^B)}$ and $\widetilde{\mathbf{W}}_i^{rB} \in C^{M\times(M-K)}$ are block ZF receiving weight matrices for the forward link and the backward link of the i-th node. $\widetilde{\widetilde{\mathbf{W}}}_i^{rF} \in C^{(M-K^B)\times K^F}$ and $\widetilde{\widetilde{\mathbf{W}}}_i^{rB} \in C^{(M-K)\times K^B}$ are MIMO receiving weight matrices for the forward link and the backward link of the i-th node that avoid the interferences from the other links by the block ZF algorithm.

<4-1-1> weight computing process procedure (weight determining method) of the receiving node

When attention is focused on the i-th receiving node, the transmitting weight matrix $\mathbf{W}_{(i-1)}^{tB} \in C^{M\times K^B}$ for the backward link of the (i-1)-th transmitting node is already determined and is known. Further, the block ZF transmitting weight matrix $\widetilde{\mathbf{W}}_{(i-1)}^{tF} \in C^{M\times(M-K)}$ for the forward link of the (i-1)-th transmitting node is already determined and is known.

The i-th receiving node learns the equivalent transmitting channel matrices $\widetilde{\mathbf{H}}_{i(i-1)}^{tF}$ and $\mathbf{H}_{i(i-1)}^{tB}$ by using training signals that are transmitted from the (i-1)-th transmitting node through the transmitting weight matrices $\mathbf{W}_{(i-1)}^{tB} \in C^{M\times K^B}$ and $\widetilde{\mathbf{W}}_{(i-1)}^{tF} \in C^{M\times(M-K)}$.

[Expression 90]

$$\widetilde{\mathbf{H}}_{i(i-1)}^{tF} = \mathbf{H}_{i(i-1)} \widetilde{\mathbf{W}}_{(i-1)}^{tF} \in C^{M \times (M-K)}$$

[Expression 91]

$$\mathbf{H}_{i(i-1)}^{tB} = \mathbf{H}_{i(i-1)} \mathbf{W}_{(i-1)}^{tB} \in C^{M \times K^{B}}$$

The block ZF receiving weight matrices $\widetilde{\mathbf{W}}_{i}^{rF}$ and $\widetilde{\mathbf{W}}_{i}^{rB}$ for the forward link and the backward link of the i-th receiving node, are computed based on the following Expression 92 and Expression 93 by using the learned equivalent transmitting channel matrices $\widetilde{\mathbf{H}}_{i(i-1)}^{tF}$ and $\mathbf{H}_{i(i-1)}^{tB}$ .

[Expression 92]

$$\widetilde{\mathbf{W}}_{i}^{rF} = \left[ \mathbf{H}_{i(i-1)}^{tB} \right]^{\perp} \in C^{M \times (M-K^{B})}$$

[Expression 93]

$$\widetilde{\mathbf{W}}_{i}^{rB} = \left[ \mathbf{H}_{i(i-1)}^{tF}, \mathbf{H}_{i(i-1)}^{tB} \right]^{\perp} \in C^{M \times (M-K)}$$

Where $[\cdot]^{\perp}$ is a basis matrix of the orthonormal complementary space of $[\cdot]$. Further, the equivalent transmitting channel matrix $\mathbf{H}_{i(i-1)}^{tF}$ is computed based on the following Expression 94.

[Expression 94]

$$\mathbf{H}_{i(i-1)}^{tF} = \widetilde{\mathbf{H}}_{i(i-1)}^{tF} \widetilde{\widetilde{\mathbf{W}}}_{(i-1)}^{tF} \in C^{M \times K^{F}}$$

Where $\widetilde{\widetilde{\mathbf{W}}}_{(i-1)}^{tF}$ is computed based on the following Expression 98.

In this time, the above Expression 82 and Expression 84 become the following Expression 95 and Expression 96, and a forward link with the equivalent channel matrix $\widetilde{\mathbf{H}}_{i(i-1)}^{FF}$ that avoids the interferences from different links by the block ZF, is formed between the (i-1) -th transmitting node and the i-th receiving node.

[Expression 95]

$$\mathbf{y}^{F}_{i(i-1)} = \left(\widetilde{\widetilde{\mathbf{W}}}^{rF}_{i}\right)^{H} \widetilde{\widetilde{\mathbf{H}}}^{FF}_{i(i-1)} \widetilde{\widetilde{\mathbf{W}}}^{tF}_{(i-1)} \mathbf{s}^{F}_{(i-1)}$$

[Expression 96]

$$\mathbf{y}^{B}_{i(i-1)} = \mathbf{O}$$

[Expression 97]

$$\widetilde{\widetilde{\mathbf{H}}}^{FF}_{i(i-1)} = \left(\widetilde{\mathbf{W}}^{rF}_{i}\right)^{H} \mathbf{H}_{i(i-1)} \widetilde{\mathbf{W}}^{tF}_{(i-1)} \in C^{(M-K^{B})\times(M-K)}$$

This is equivalent to a usual MIMO system that performs the multiplexing transmission of $K^F$ streams in MIMO channels consisting of a transmitting antenna with (M-K) elements and a receiving antenna with (M-$K^B$) elements. In this equivalent usual MIMO system, it is possible to apply arbitrary MIMO transmission scheme such as any MIMO transmission scheme described in chapter 6 - chapter 8 of Non-Patent Document 11. As concrete examples of the MIMO transmission scheme, there are a closed-loop scheme where the transmitting side uses the channel information and a open-loop scheme where the transmitting side does not use the channel information. As the closed-loop scheme, there are an antenna selection scheme, a SVD-MIMO scheme, a precoding scheme, the DPC scheme and the Tomlinson-Harashima precoding scheme. As the open-loop scheme, there is a spatio-temporal encoding scheme. Further, as the receiving scheme of these MIMO transmission schemes, there are the linear ZF algorithm, the linear MMSE algorithm, the nonlinear SIC algorithm and the nonlinear maximum likelihood estimation algorithm.

In the case that the open-loop scheme is used and the ZF algorithm is used in the receiving side, the transmitting side performs the multiplexing transmission of $K^F$ streams and the receiving side performs the separation of the received $K^F$ streams . In this time, the transmitting side transmits the stream signal by using arbitrary $K^F$ column vectors of the block ZF transmitting weight matrix $\widetilde{\mathbf{W}}^{tF}_{(i-1)}$ of order (M-K). For example, in the case of using the leading $K^F$ column vectors of $\widetilde{\mathbf{W}}^{tF}_{(i-1)}$, the following Expression 98 holds.

[Expression 98]

$$\widetilde{\widetilde{\mathbf{W}}}^{tF}_{(i-1)} = \mathbf{I}_{(M-K)}[1:K^{F}] \in C^{(M-K)\times K^{F}}$$

Where $\widetilde{\widetilde{\mathbf{W}}}^{tF}_{(i-1)}$ is a selection matrix of the orthonormal basis. Further, $\mathbf{I}_{(M-K)}[1:K^F]$ is the first column ~ the $(K^F)$-th column of the identity matrix of order (M-K).

In this time, the transmitting weight matrix for the forward link of the (i-1) -th transmitting node is computed based on the following Expression 99.

[Expression 99]

$$\mathbf{W}_{(i-1)}^{\mathrm{tF}} = \widetilde{\mathbf{W}}_{(i-1)}^{\mathrm{tF}} \widetilde{\widetilde{\mathbf{W}}}_{(i-1)}^{\mathrm{tF}}$$

As the receiving scheme of the open-loop transmission scheme, it is possible to use the ZF algorithm and the MMSE algorithm in the case of the linear algorithm.

For example, in the case of using the ZF algorithm, the MIMO receiving weight matrix $\widetilde{\widetilde{\mathbf{W}}}_i^{\mathrm{rF}}$ for the forward link of the i-th receiving node, is computed based on the following Expression 101 by using the equivalent transmitting channel matrix $\widetilde{\widetilde{\mathbf{H}}}_{i(i-1)}^{\mathrm{tFF}}$ represented by the following Expression 100.

[Expression 100]

$$\widetilde{\widetilde{\mathbf{H}}}_{i(i-1)}^{\mathrm{tFF}} = \widetilde{\mathbf{H}}_{i(i-1)}^{\mathrm{FF}} \widetilde{\widetilde{\mathbf{W}}}_{(i-1)}^{\mathrm{tF}} \in C^{(M-K^{\mathrm{B}}) \times K^{\mathrm{F}}}$$

[Expression 101]

$$\widetilde{\widetilde{\mathbf{W}}}_i^{\mathrm{rF}} = \left( \left[ \widetilde{\widetilde{\mathbf{H}}}_{i(i-1)}^{\mathrm{tFF}} \right]^{-1} \right)^H \in C^{(M-K^{\mathrm{B}}) \times K^{\mathrm{F}}}$$

Where [·]$^{-1}$ is a generalized inverse matrix of [·]. Further, [·]$^H$ is a complex conjugate transposed matrix of [·].
In this time, the receiving weight matrix for the forward link of the i-th receiving node, is computed based on the following Expression 102.

[Expression 102]

$$\mathbf{W}_i^{\mathrm{rF}} = \widetilde{\mathbf{W}}_i^{\mathrm{rF}} \widetilde{\widetilde{\mathbf{W}}}_i^{\mathrm{rF}}$$

<4-1-2> weight computing process procedure (weight determining method) of the transmitting node

Next, when attention is focused on the (i+1)-th transmitting node, the receiving weight matrix $\mathbf{W}_i^{\mathrm{rF}} \in C^{M \times K^{\mathrm{F}}}$ for the forward link of the i-th receiving node is already determined and is known. Further, the block ZF receiving weight matrix $\widetilde{\mathbf{W}}_i^{\mathrm{rB}} \in C^{M \times (M-K)}$ for the backward link of the i-th receiving node is already determined and is known.

The (i+1)-th transmitting node utilizes the channel reciprocity $\left( \mathbf{H}_{i(i+1)}^T = \mathbf{H}_{(i+1)i} \right)$, and when the i-th receiving node is in the transmitting mode, the (i+1)-th transmitting node learns the equivalent receiving channel matrices

$\mathbf{H}_{i(i+1)}^{rF}$ and $\widetilde{\mathbf{H}}_{i(i+1)}^{rB}$ as the following Expression 103 and Expression 104 by transmitting a training signal through a conjugate receiving weight of the i-th receiving node. Or the (i+1) -th transmitting node transmits the training signal, and the i-th receiving node learns $\mathbf{H}_{i(i+1)}^{rF}$ and $\widetilde{\mathbf{H}}_{i(i+1)}^{rB}$ as the following Expression 103 and Expression 104 and then feeds back the learned $\mathbf{H}_{i(i+1)}^{rF}$ and $\widetilde{\mathbf{H}}_{i(i+1)}^{rB}$ to the (i+1)-th transmitting node.

[Expression 103]

$$\mathbf{H}_{i(i+1)}^{rF} = \left(\mathbf{H}_{i(i+1)}\right)^{T}\left(\mathbf{W}_{i}^{rF}\right)^{*} \in C^{M \times K^{F}}$$

[Expression 104]

$$\widetilde{\mathbf{H}}_{i(i+1)}^{rB} = \left(\mathbf{H}_{i(i+1)}\right)^{T}\left(\widetilde{\mathbf{W}}_{i}^{rB}\right)^{*} \in C^{M \times (M-K)}$$

Where $[\cdot]^*$ is a complex conjugate matrix of $[\cdot]$. Further, $[\cdot]^T$ is a transposed matrix of $[\cdot]$.

The block ZF transmitting weight matrices $\widetilde{\mathbf{W}}_{(i+1)}^{tF}$ and $\widetilde{\mathbf{W}}_{(i+1)}^{tB}$ for the forward link and the backward link of the (i+1) transmitting node, are computed (determined) based on the following Expression 105 and Expression 106 by using the learned equivalent receiving channel matrices $\mathbf{H}_{i(i+1)}^{rF}$ and $\widetilde{\mathbf{H}}_{i(i+1)}^{rB}$ .

[Expression 105]

$$\widetilde{\mathbf{W}}_{(i+1)}^{tF} = \left[\left(\mathbf{H}_{i(i+1)}^{rF}\right)^{*},\left(\mathbf{H}_{i(i+1)}^{rB}\right)^{*}\right]^{\perp} \in C^{M \times (M-K)}$$

[Expression 106]

$$\widetilde{\mathbf{W}}_{(i+1)}^{tB} = \left[\left(\mathbf{H}_{i(i+1)}^{rF}\right)^{*}\right]^{\perp} \in C^{M \times (M-K^{F})}$$

Where $[\cdot]^{\perp}$ is a basis matrix of the orthonormal complementary space of $[\cdot]$. Further, the equivalent receiving channel matrix $\mathbf{H}_{i(i+1)}^{rB}$ is computed based on the following Expression 107.

[Expression 107]

$$\mathbf{H}_{i(i+1)}^{rB} = \widetilde{\mathbf{H}}_{i(i+1)}^{rB}\left(\widetilde{\widetilde{\mathbf{W}}}_{i}^{rB}\right)^{*} \in C^{M \times K^{B}}$$

Where $\widetilde{\widetilde{\mathbf{W}}}_i^{\mathrm{rB}}$ is computed based on the following Expression 111.

In this time, the above Expression 83 and Expression 85 become the following Expression 108 and Expression 109, and a backward link with the equivalent channel matrix $\widetilde{\mathbf{H}}_{i(i+1)}^{\mathrm{BB}}$ that avoids the interferences from different links by the block ZF, is formed between the (i+1) -th transmitting node and the i-th receiving node.

$$[\text{Expression } 108]$$

$$\mathbf{y}_{i(i+1)}^{\mathrm{F}} = \mathbf{O}$$

$$[\text{Expression } 109]$$

$$\mathbf{y}_{i(i+1)}^{\mathrm{B}} = \left(\widetilde{\widetilde{\mathbf{W}}}_i^{\mathrm{rB}}\right)^{H} \widetilde{\mathbf{H}}_{i(i+1)}^{\mathrm{BB}} \widetilde{\widetilde{\mathbf{W}}}_{(i+1)}^{\mathrm{tB}} \mathbf{s}_{(i+1)}^{\mathrm{B}}$$

$$[\text{Expression } 110]$$

$$\widetilde{\mathbf{H}}_{i(i+1)}^{\mathrm{BB}} = \left(\widetilde{\widetilde{\mathbf{W}}}_i^{\mathrm{rB}}\right)^{H} \mathbf{H}_{i(i+1)} \widetilde{\widetilde{\mathbf{W}}}_{(i+1)}^{\mathrm{tB}} \in C^{(M-K)\times(M-K^{\mathrm{F}})}$$

This is equivalent to a usual MIMO system that performs the multiplexing transmission of $K^{\mathrm{B}}$ streams in MIMO channels consisting of a transmitting antenna with $(M-K^{\mathrm{F}})$ elements and a receiving antenna with (M-K) elements. In this equivalent usual MIMO system, it is possible to apply arbitrary MIMO transmission scheme such as any MIMO transmission scheme described in chapter 6 - chapter 8 of Non-Patent Document 11. As concrete examples of the MIMO transmission scheme, there are a closed-loop scheme where the transmitting side uses the channel information and a open-loop scheme where the transmitting side does not use the channel information. As the closed-loop scheme, there are an antenna selection scheme, a SVD-MIMO scheme, a precoding scheme, the DPC scheme and the Tomlinson-Harashima precoding scheme. As the open-loop scheme, there is a spatio-temporal encoding scheme. Further, as the receiving scheme of these MIMO transmission schemes, there are the linear ZF algorithm, the linear MMSE algorithm, the nonlinear SIC algorithm and the nonlinear maximum likelihood estimation algorithm.

In the case that the open-loop scheme is used and the ZF algorithm is used in the transmitting side, in the backward link, since the receiving weight is fixed, the transmitting side performs the multiplexing transmission of $K^{\mathrm{B}}$ streams by the weight that performs the stream separation in advance. In this time, the receiving side receives $K^{\mathrm{B}}$ streams by using arbitrary $K^{\mathrm{B}}$ column vectors of the block ZF receiving weight matrix $\widetilde{\mathbf{W}}_i^{\mathrm{rB}}$ of order (M-K). For example, in the case of using the leading $K^{\mathrm{B}}$ column vectors of $\widetilde{\mathbf{W}}_i^{\mathrm{rB}}$, the following Expression 111 holds.

$$[\text{Expression } 111]$$

$$\widetilde{\widetilde{\mathbf{W}}}_i^{\mathrm{rB}} = \mathbf{I}_{(M-K)}[1 : K^{\mathrm{B}}] \in C^{(M-K)\times K^{\mathrm{B}}}$$

Where $\widetilde{\mathbf{W}}_i^{\text{rB}}$ is a selection matrix of the orthonormal basis. Further, $\mathbf{I}_{(M\text{-}K)}[1{:}K^B]$ is the first column ~ the $(K^B)$-th column of the identity matrix of order (M-K).

In this time, the receiving weight matrix for the backward link of the i-th receiving node is computed based on the following Expression 112.

[Expression 112]

$$\mathbf{W}_i^{\text{rB}} = \widetilde{\mathbf{W}}_i^{\text{rB}} \, \widetilde{\widetilde{\mathbf{W}}}_i^{\text{rB}}$$

As the transmitting scheme of the open-loop transmission scheme, it is possible to use the ZF algorithm and the MMSE algorithm in the case of the linear algorithm.

For example, in the case of using the ZF algorithm, the MIMO transmitting weight matrix $\widetilde{\widetilde{\mathbf{W}}}_{(i+1)}^{\text{tB}}$ for the backward link of the (i+1)-th transmitting node, is computed based on the following Expression 114 by using the equivalent receiving channel matrix $\widetilde{\widetilde{\mathbf{H}}}_{i(i+1)}^{\text{rBB}}$ represented by the following Expression 113.

[Expression 113]

$$\widetilde{\widetilde{\mathbf{H}}}_{i(i+1)}^{\text{rBB}} = \left( \widetilde{\mathbf{H}}_{i(i+1)}^{\text{BB}} \right)^{T} \left( \widetilde{\widetilde{\mathbf{W}}}_i^{\text{rB}} \right)^{*} \in C^{(M-K^F) \times K^B}$$

[Expression 114]

$$\widetilde{\widetilde{\mathbf{W}}}_{(i+1)}^{\text{tB}} = \left[ \left( \widetilde{\widetilde{\mathbf{H}}}_{i(i+1)}^{\text{rBB}} \right)^{T} \right]^{-1} \in C^{(M-K^F) \times K^B}$$

Where [-] is a complex conjugate matrix of [·]. [·]$^T$ is a transposed matrix of [·]. Further, [·]$^{-1}$ is a generalized inverse matrix of [·].

In this time, the transmitting weight matrix for the backward link of the (i+1)-th transmitting node, is computed based on the following Expression 115.

[Expression 115]

$$\mathbf{W}_{(i+1)}^{\text{tB}} = \widetilde{\mathbf{W}}_{(i+1)}^{\text{tB}} \, \widetilde{\widetilde{\mathbf{W}}}_{(i+1)}^{\text{tB}}$$

Finally, when Expression 95, Expression 96, Expression 108 and Expression 109 are combined, the receiving signal vector $\mathbf{y}_i^{\text{F}}$ of the forward link of the i-th receiving node that is represented by the above Expression 80, becomes the following Expression 116, and the receiving signal vector $\mathbf{y}_i^{\text{B}}$ of the backward link of the i-th receiving node that is represented by the above Expression 81, becomes the following Expression 117.

[Expression 116]

$$\mathbf{y}_i^{\mathrm{F}} = \mathbf{H}_{i(i-1)}^{\mathrm{eFF}} \mathbf{s}_{(i-1)}^{\mathrm{F}} + \mathbf{n}_i^{\mathrm{F}}$$

[Expression 117]

$$\mathbf{y}_i^{\mathrm{B}} = \mathbf{H}_{i(i+1)}^{\mathrm{eBB}} \mathbf{s}_{(i-1)}^{\mathrm{B}} + \mathbf{n}_i^{\mathrm{B}}$$

Where $\mathbf{H}_{i(i-1)}^{\mathrm{eFF}}$ is a matrix whose diagonal elements are the equivalent channel responses of $K^{\mathrm{F}}$ streams of the forward link between the (i-1) -th transmitting node and the i-th receiving node and is computed based on the following Expression 118. Further, $\mathbf{H}_{i(i+1)}^{\mathrm{eBB}}$ is a matrix whose diagonal elements are the equivalent channel responses of $K^{\mathrm{B}}$ streams of the backward link between the (i+1)-th transmitting node and the i-th receiving node and is computed based on the following Expression 119.

[Expression 118]

$$\mathbf{H}_{i(i-1)}^{\mathrm{eFF}} = \left( \widetilde{\widetilde{\mathbf{W}}}_i^{\mathrm{rF}} \right)^H \mathbf{H}_{i(i-1)}^{\mathrm{FF}} \widetilde{\widetilde{\mathbf{W}}}_{(i-1)}^{\mathrm{tF}} \in C^{K^{\mathrm{F}} \times K^{\mathrm{F}}}$$

[Expression 119]

$$\mathbf{H}_{i(i+1)}^{\mathrm{eBB}} = \left( \widetilde{\widetilde{\mathbf{W}}}_i^{\mathrm{rB}} \right)^H \mathbf{H}_{i(i+1)}^{\mathrm{BB}} \widetilde{\widetilde{\mathbf{W}}}_{(i+1)}^{\mathrm{tB}} \in C^{K^{\mathrm{B}} \times K^{\mathrm{B}}}$$

From the above Expression 116, Expression 117, Expression 118 and Expression 119, it is clear that in the generalized MIMO mesh network of the present invention that uses the linear scheme as the MIMO transmission scheme, it is possible to perform the MIMO transmissions of $K^{\mathrm{F}}$ streams and $K^{\mathrm{B}}$ streams without the interferences from adjacent nodes in the forward link and the backward link respectively.

In the present invention, it is possible to compute (determine) the transmitting weight matrices and the receiving weight matrices of all nodes by performing the above-described computing process procedures of the transmitting/receiving weight matrix in order from the first node to the last node.

We explained the computing process methods of transmitting/receiving weight in the generalized MIMO mesh network of the present invention, in the case of using the linear block ZF algorithm as the MIMO transmission scheme in detail as described above. However, it is not necessary to be limited to the block ZF algorithm as the linear scheme used in the present invention, for example, of course it is possible to use the block MMSE algorithm.

<4-2> nonlinear algorithm

Here, we explain the computing process methods (the computing process procedures) of the transmitting weight matrix and the receiving weight matrix in the generalized MIMO mesh network of the present invention, in the case of using the nonlinear algorithm as the MIMO transmission scheme.

In the present invention, in the case of using the nonlinear algorithm as the MIMO transmission scheme, in addition to the block ZF algorithm (or the block MMSE algorithm), the transmitting side uses the block DPC algorithm and the receiving side uses the block SIC algorithm.

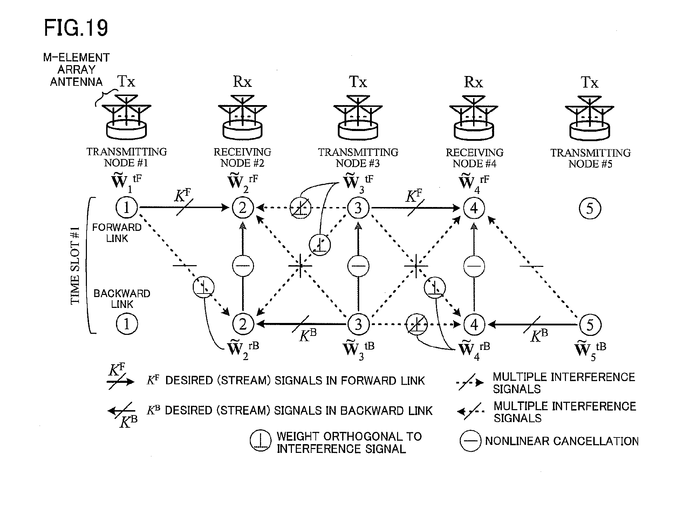

As shown in FIG.19, in the generalized MIMO mesh network of the present invention that uses the nonlinear algorithm, by the combination of the linear interference cancellation based on the block ZF algorithm (or the block MMSE algorithm) and the nonlinear interference cancellation based on the block SIC algorithm/the block DPC algorithm, the usual MIMO multiplexing transmission is performed in each link after avoiding the interferences to the other links. Each transmitting weight matrix and each receiving weight matrix at that time are represented by the following Expression 120 - Expression 123.

[Expression 120]

$$\mathbf{W}_j^{tF} = \widetilde{\mathbf{W}}_j^{tF} \widetilde{\widetilde{\mathbf{W}}}_j^{tF} \in C^{M \times K^F}$$

[Expression 121]

$$\mathbf{W}_j^{tB} = \widetilde{\mathbf{W}}_j^{tB} \widetilde{\widetilde{\mathbf{W}}}_j^{tB} \in C^{M \times K^B}$$

[Expression 122]

$$\mathbf{W}_i^{rF} = \widetilde{\mathbf{W}}_i^{rF} \widetilde{\widetilde{\mathbf{W}}}_i^{rF} \in C^{M \times K^F}$$

[Expression 123]

$$\mathbf{W}_i^{rB} = \widetilde{\mathbf{W}}_i^{rB} \widetilde{\widetilde{\mathbf{W}}}_i^{rB} \in C^{M \times K^B}$$

Here the dimensions of each weight matrix become

$$\widetilde{\mathbf{W}}_j^{tF} \in C^{M \times (M-K)} \; , \; \widetilde{\mathbf{W}}_j^{tB} \in C^{M \times M} \; , \; \widetilde{\widetilde{\mathbf{W}}}_j^{tF} \in C^{(M-K) \times K^F} \; , \; \widetilde{\widetilde{\mathbf{W}}}_j^{tB} \in C^{M \times K^B} \; ,$$

$$\widetilde{\mathbf{W}}_i^{rF} \in C^{M \times M} \; , \; \widetilde{\mathbf{W}}_i^{rB} \in C^{M \times (M-K)} \; , \; \widetilde{\widetilde{\mathbf{W}}}_i^{rF} \in C^{M \times K^F} \text{ and } \widetilde{\widetilde{\mathbf{W}}}_i^{rB} \in C^{(M-K) \times K^B} \; .$$

Where $\mathbf{W}_j^{tF}$ and $\mathbf{W}_j^{tB}$ are transmitting weight matrices for the forward link and the backward link of the j-th node. $\mathbf{W}_i^{rF}$ and $\mathbf{W}_i^{rB}$ are receiving weight matrices for the forward link and the backward link of the i-th node. $\widetilde{\mathbf{W}}_j^{tF}$ and $\widetilde{\mathbf{W}}_j^{tB}$ are the block ZF transmitting weight matrices for the forward link and the backward link of the j-th node. $\widetilde{\widetilde{\mathbf{W}}}_j^{tF}$ and $\widetilde{\widetilde{\mathbf{W}}}_j^{tB}$ are the MIMO transmitting weight matrices for the forward link and the backward link of the j-th node that avoid the interferences to the other links by the block ZF. Further, $\widetilde{\mathbf{W}}_i^{rF}$ and $\widetilde{\mathbf{W}}_i^{rB}$ are the block ZF receiving weight matrices for the forward link and the backward link of the i-th node. $\widetilde{\widetilde{\mathbf{W}}}_i^{rF}$ and $\widetilde{\widetilde{\mathbf{W}}}_i^{rB}$ are the MIMO receiving weight matrices for the forward link and the backward link of the i-th node that avoid the interferences from the other links by the block ZF.

The details will be described later. Since the orthogonal constraint conditions to the transmitting weight for the backward link and the receiving weight for the forward link are reduced due to the effect of the nonlinear interference cancellation, the ranks of the matrices $\widetilde{\mathbf{W}}_j^{tB}$ and $\widetilde{\mathbf{W}}_i^{rF}$ are expanded to M. According to this, it is possible to realize high diversity gain in each link by using $\widetilde{\widetilde{\mathbf{W}}}_j^{tB}$ and $\widetilde{\widetilde{\mathbf{W}}}_i^{rF}$ .

<4-2-1> weight computing process procedure (weight determining method) of the receiving node

When attention is focused on the i-th receiving node, the transmitting weight matrix $\mathbf{W}_{(i-1)}^{tB} \in C^{M \times K^B}$ for the backward link of the (i-1)-th transmitting node is already determined and is known. Further, the block ZF transmitting weight matrix $\widetilde{\mathbf{W}}_{(i-1)}^{tF} \in C^{M \times (M-K)}$ for the forward link of the (i-1)-th transmitting node is already determined and is known.

As the generalized MIMO mesh network of the present invention that uses the linear algorithm, in the generalized MIMO mesh network of the present invention that uses the nonlinear algorithm, firstly, as shown in the above Expression 90 and Expression 91, the i-th receiving node learns the equivalent transmitting channel matrices $\widetilde{\mathbf{H}}_{i(i-1)}^{tF} \in C^{M \times (M-K)}$ and $\mathbf{H}_{i(i-1)}^{tB} \in C^{M \times K^B}$ by using training signals that are transmitted from the (i-1)-th transmitting node through the transmitting weight matrices $\mathbf{W}_{(i-1)}^{tB} \in C^{M \times K^B}$ and $\widetilde{\mathbf{W}}_{(i-1)}^{tF} \in C^{M \times (M-K)}$ .

The block ZF receiving weight matrices $\widetilde{\mathbf{W}}_i^{rF}$ and $\widetilde{\mathbf{W}}_i^{rB}$ for the forward link and the backward link of the i-th receiving node, are computed based on the following Expression 124 and Expression 125 by using the learned equivalent transmitting channel matrices $\widetilde{\mathbf{H}}_{i(i-1)}^{tF}$ and $\mathbf{H}_{i(i-1)}^{tB}$ .

[Expression 124]

$$\widetilde{\mathbf{W}}_i^{rF} = \mathbf{I}_M \in C^{M \times M}$$

[Expression 125]

$$\widetilde{\mathbf{W}}_i^{rB} = \left[ \mathbf{H}_{i(i-1)}^{tF}, \mathbf{H}_{i(i-1)}^{tB} \right]^{\perp} \in C^{M \times (M-K)}$$

Where $\mathbf{I}_M$ is the identity matrix of order M. $[\cdot]^{\perp}$ is a basis matrix of the orthonormal complementary space of $[\cdot]$. Further, the equivalent transmitting channel matrix $\mathbf{H}_{i(i-1)}^{tF}$ is computed based on the following Expression 126.

[Expression 126]

$$\mathbf{H}_{i(i-1)}^{tF} = \widetilde{\mathbf{H}}_{i(i-1)}^{tF} \widetilde{\widetilde{\mathbf{W}}}_{(i-1)}^{tF} \in C^{M \times K^F}$$

In this time, as the generalized MIMO mesh network of the present invention that uses the linear algorithm, it is possible to regard the forward link of the i-th receiving node as a MIMO link with the equivalent channel matrix $\widetilde{\mathbf{H}}_{i(i-1)}^{FF}$ that is represented by the following Expression 127.

[Expression 127]

$$\widetilde{\mathbf{H}}_{i(i-1)}^{FF} = \left( \widetilde{\mathbf{W}}_i^{rF} \right)^H \mathbf{H}_{i(i-1)} \widetilde{\mathbf{W}}_{(i-1)}^{tF} \in C^{M \times (M-K)}$$

This is equivalent to a usual MIMO system that performs the multiplexing transmission of $K^F$ streams in MIMO channels consisting of a transmitting antenna with (M-K) elements and a receiving antenna with M elements. In this equivalent usual MIMO system, it is possible to apply arbitrary MIMO transmission scheme such as any MIMO transmission scheme described in chapter 6 - chapter 8 of Non-Patent Document 11. As concrete examples of the MIMO transmission scheme, there are a closed-loop scheme where the transmitting side uses the channel information and a open-loop scheme where the transmitting side does not use the channel information. As the closed-loop scheme, there are an antenna selection scheme, a SVD-MIMO scheme, a precoding scheme, the DPC scheme and the Tomlinson-Harashima precoding scheme. As the open-loop scheme, there is a spatio-temporal encoding scheme. Further, as the receiving scheme of these MIMO transmission schemes, there are the linear ZF algorithm, the linear MMSE algorithm, the nonlinear SIC algorithm and the nonlinear maximum likelihood estimation algorithm. In this time, $\widetilde{\widetilde{\mathbf{W}}}_{(i-1)}^{tF} \in C^{(M-K) \times K^F}$ and $\widetilde{\widetilde{\mathbf{W}}}_i^{rF} \in C^{M \times K^F}$ are obtained as the MIMO transmitting weight matrix and the MIMO receiving weight matrix of the adopted MIMO transmission scheme.

Furthermore, comparing to the generalized MIMO mesh network of the present invention that uses the linear algorithm, in the generalized MIMO mesh network of the present invention that uses the nonlinear algorithm, since the number of the equivalent receiving antenna elements increases from $(M-K^B)$ to M, it is possible to obtain high diversity gain.

Next, when the block ZF receiving weight matrices $\widetilde{\mathbf{W}}_i^{rF}$ and $\widetilde{\mathbf{W}}_i^{rB}$ are given, the above Expression 82 and Expression 84 can be rewritten as the following Expression 128 and Expression 129.

[Expression 128]

$$\mathbf{y}_{i(i-1)}^{F} = \mathbf{H}_{i(i-1)}^{eFF} \mathbf{s}_{(i-1)}^{F} + \mathbf{H}_{i(i-1)}^{eFB} \mathbf{s}_{(i-1)}^{B}$$

[Expression 129]

$$\mathbf{y}_{i(i-1)}^{B} = \mathbf{O}$$

Where $\mathbf{H}_{i(i-1)}^{eFF}$ is the equivalent channel matrix of the forward link from the (i-1)-th transmitting node to the i-th receiving node and is computed based on the following Expression 130. Further, $\mathbf{H}^{\mathrm{eFB}}_{i(i-1)}$ is the equivalent channel matrix that corresponds to the interferences from the backward link of the (i-1)-th transmitting node to the forward link of the i-th receiving node and is computed based on the following Expression 131.

[Expression 130]

$$\mathbf{H}^{\mathrm{eFF}}_{i(i-1)} = \left(\widetilde{\widetilde{\mathbf{W}}}^{\mathrm{rF}}_{i}\right)^{H} \widetilde{\widetilde{\mathbf{H}}}^{\mathrm{FF}}_{i(i-1)} \widetilde{\widetilde{\mathbf{W}}}^{\mathrm{tF}}_{(i-1)} \in C^{K^{\mathrm{F}} \times K^{\mathrm{F}}}$$

[Expression 131]

$$\mathbf{H}^{\mathrm{eFB}}_{i(i-1)} = \left(\widetilde{\widetilde{\mathbf{W}}}^{\mathrm{rF}}_{i}\right)^{H} \widetilde{\widetilde{\mathbf{H}}}^{\mathrm{FB}}_{i(i-1)} \widetilde{\widetilde{\mathbf{W}}}^{\mathrm{tB}}_{(i-1)} \in C^{K^{\mathrm{F}} \times K^{\mathrm{B}}}$$

Further, $\widetilde{\mathbf{H}}^{\mathrm{FB}}_{i(i-1)}$ is the equivalent channel matrix that corresponds to the interference signal from the backward link of the (i-1)-th transmitting node formed by the block ZF to the forward link of the i-th receiving node and is computed based on the following Expression 132.

[Expression 132]

$$\widetilde{\mathbf{H}}^{\mathrm{FB}}_{i(i-1)} = \left(\widetilde{\mathbf{W}}^{\mathrm{rF}}_{i}\right)^{H} \mathbf{H}_{i(i-1)} \widetilde{\mathbf{W}}^{\mathrm{tB}}_{(i-1)} \in C^{M \times M}$$

Here, since the (i-1)-th transmitting node knows both $\mathbf{s}^{\mathrm{F}}_{(i-1)}$ and $\mathbf{s}^{\mathrm{B}}_{(i-1)}$ in advance, it is possible to cancel the interference signal as follows by using the block DPC algorithm. In addition, in the present invention, it is not necessary to be limited to using the block DPC algorithm, for example, of course it is possible to use the nonlinear algorithms such as the block Tomlinson-Harashima precoding algorithm and the block lattice precoding algorithm.

In this regard, the (i-1)-th transmitting node utilizes the channel reciprocity $\left(\mathbf{H}^{T}_{i(i-1)} = \mathbf{H}_{(i-1)i}\right)$, and when the i-th receiving node is in the transmitting mode, the (i-1)-th transmitting node learns the equivalent channel matrices $\mathbf{H}^{\mathrm{eFF}}_{i(i-1)}$ and $\mathbf{H}^{\mathrm{eFB}}_{i(i-1)}$ by transmitting a training signal through $\left(\mathbf{W}^{\mathrm{rF}}_{i}\right)^{*}$. Or the (i-1)-th transmitting node transmits the training signal through $\mathbf{W}^{\mathrm{tF}}_{(i-1)}$ and $\mathbf{W}^{\mathrm{tB}}_{(i-1)}$, and the i-th receiving node learns $\mathbf{H}^{\mathrm{eFF}}_{i(i-1)}$ and $\mathbf{H}^{\mathrm{eFB}}_{i(i-1)}$ and then feeds back the learned $\mathbf{H}^{\mathrm{eFF}}_{i(i-1)}$ and $\mathbf{H}^{\mathrm{eFB}}_{i(i-1)}$ to the (i-1)-th transmitting node.

In the case of using the block DPC algorithm, the transmitting signal $\mathbf{s}^{\mathrm{FDPC}}_{(i-1)}$ of the forward link of the (i-1)-th transmitting node is represented by the following Expression 133.

[Expression 133]

$$\mathbf{s}^{\mathrm{FDPC}}_{(i-1)} = \mathbf{s}^{\mathrm{F}}_{(i-1)} - \left[\mathbf{H}^{\mathrm{eFF}}_{i(i-1)}\right]^{-1} \mathbf{H}^{\mathrm{eFB}}_{i(i-1)} \mathbf{s}^{\mathrm{B}}_{(i-1)}$$

In this time, the receiving signal $\mathbf{y}_{i(i-1)}^{\text{FDPC}}$ of the forward link of the i-th receiving node can be represented by the following Expression 134. From Expression 134, it is very clear that it is possible to avoid the interferences from the backward link of the (i-1) -th transmitting node and perform the multiplexing transmission of multi-stream.

[Expression 134]

$$\mathbf{y}_{i(i-1)}^{\text{FDPC}} = \mathbf{H}_{i(i-1)}^{\text{eFF}}\mathbf{s}_{(i-1)}^{\text{FDPC}} + \mathbf{H}_{i(i-1)}^{\text{eFB}}\mathbf{s}_{(i-1)}^{\text{B}} = \mathbf{H}_{i(i-1)}^{\text{eFF}}\mathbf{s}_{(i-1)}^{\text{F}}$$

<4-2-2> weight computing process procedure (weight determining method) of the transmitting node

Next, when attention is focused on the (i+1) -th transmitting node, the receiving weight matrix $\mathbf{W}_{i}^{\text{rF}} \in C^{M \times K^{\text{F}}}$ for the forward link of the i-th receiving node is already determined and is known. Further, the block ZF receiving weight matrix $\widetilde{\mathbf{W}}_{i}^{\text{rB}} \in C^{M \times (M-K)}$ for the backward link of the i-th receiving node is already determined and is known.

As the generalized MIMO mesh network of the present invention that uses the linear algorithm, in the generalized MIMO mesh network of the present invention that uses the nonlinear algorithm, firstly, as shown in the above Expression 103 and Expression 104, the (i+1)-th transmitting node utilizes the channel reciprocity $\left(\mathbf{H}_{i(i+1)}^{T} = \mathbf{H}_{(i+1)i}\right)$, and when the i-th receiving node is in the transmitting mode, the (i+1) -th transmitting node learns the equivalent receiving channel matrices $\mathbf{H}_{i(i+1)}^{\text{rF}} \in C^{M \times K^{\text{F}}}$ and $\widetilde{\mathbf{H}}_{i(i+1)}^{\text{rB}} \in C^{M \times (M-K)}$ by transmitting a training signal through a conjugate receiving weight of the i-th receiving node. Or the (i+1)-th transmitting node transmits the training signal, and the i-th receiving node learns $\mathbf{H}_{i(i+1)}^{\text{rF}}$ and $\widetilde{\mathbf{H}}_{i(i+1)}^{\text{rB}}$ as the following Expressions and then feeds back the learned $\mathbf{H}_{i(i+1)}^{\text{rF}}$ and $\widetilde{\mathbf{H}}_{i(i+1)}^{\text{rB}}$ to the (i+1)-th transmitting node.

The block ZF transmitting weight matrices $\widetilde{\mathbf{W}}_{(i+1)}^{\text{tF}}$ and $\widetilde{\mathbf{W}}_{(i+1)}^{\text{tB}}$ for the forward link and the backward link of the (i+1) transmitting node, are computed (determined) based on the following Expression 135 and Expression 136 by using the learned equivalent receiving channel matrices $\mathbf{H}_{i(i+1)}^{\text{rF}}$ and $\widetilde{\mathbf{H}}_{i(i+1)}^{\text{rB}}$.

[Expression 135]

$$\widetilde{\mathbf{W}}_{(i+1)}^{\text{tF}} = \left[\left(\mathbf{H}_{i(i+1)}^{\text{rF}}\right)^{*}, \left(\mathbf{H}_{i(i+1)}^{\text{rB}}\right)^{*}\right]^{\perp} \in C^{M \times (M-K)}$$

[Expression 136]

$$\widetilde{\mathbf{W}}_{(i+1)}^{\text{tB}} = \mathbf{I}_{M} \in C^{M \times M}$$

Where $\mathbf{I}_M$ is the identity matrix of order M. $[\cdot]^{\perp}$ is a basis matrix of the orthonormal complementary space of $[\cdot]$.

Further, the equivalent receiving channel matrix $\mathbf{H}_{i(i+1)}^{rB}$ is computed based on the following Expression 137.

[Expression 137]

$$\mathbf{H}_{i(i+1)}^{rB} = \widetilde{\mathbf{H}}_{i(i+1)}^{rB}\left(\widetilde{\widetilde{\mathbf{W}}}_{i}^{rB}\right)^{*} \in C^{M \times K^{B}}$$

In this time, as the generalized MIMO mesh network of the present invention that uses the linear algorithm, it is possible to regard the backward link of the (i+1)-th transmitting node as a MIMO link with the equivalent channel matrix $\widetilde{\mathbf{H}}_{i(i+1)}^{BB}$ that is represented by the following Expression 138.

[Expression 138]

$$\widetilde{\mathbf{H}}_{i(i+1)}^{BB} = \left(\widetilde{\mathbf{W}}_{i}^{rB}\right)^{H}\mathbf{H}_{i(i+1)}\widetilde{\mathbf{W}}_{(i+1)}^{tB} \in C^{(M-K) \times M}$$

This is equivalent to a usual MIMO system that performs the multiplexing transmission of $K^{B}$ streams in MIMO channels consisting of a transmitting antenna with M elements and a receiving antenna with (M-K) elements. In this equivalent usual MIMO system, it is possible to apply arbitrary MIMO transmission scheme such as any MIMO transmission scheme described in chapter 6 - chapter 8 of Non-Patent Document 11. As concrete examples of the MIMO transmission scheme, there are a closed-loop scheme where the transmitting side uses the channel information and a open-loop scheme where the transmitting side does not use the channel information. As the closed-loop scheme, there are an antenna selection scheme, a SVD-MIMO scheme, a precoding scheme, the DPC scheme and the Tomlinson-Harashima precoding scheme. As the open-loop scheme, there is a spatio-temporal encoding scheme. Further, as the receiving scheme of these MIMO transmission schemes, there are the linear ZF algorithm, the linear MMSE algorithm, the nonlinear SIC algorithm and the nonlinear maximum likelihood estimation algorithm. In this time, $\widetilde{\widetilde{\mathbf{W}}}_{i}^{rB} \in C^{(M-K) \times K^{B}}$ and $\widetilde{\widetilde{\mathbf{W}}}_{(i+1)}^{tB} \in C^{M \times K^{B}}$ are obtained as the MIMO receiving weight matrix and the MIMO transmitting weight matrix of the adopted MIMO transmission scheme.

Furthermore, comparing to the generalized MIMO mesh network of the present invention that uses the linear algorithm, in the generalized MIMO mesh network of the present invention that uses the nonlinear algorithm, since the number of the equivalent transmitting antenna elements increases from (M-K$^{F}$) to M, it is possible to obtain high diversity gain.

Next, when the block ZF transmitting weight matrices $\widetilde{\mathbf{W}}_{(i+1)}^{tF}$ and $\widetilde{\mathbf{W}}_{(i+1)}^{tB}$ are given, the above Expression 83 and Expression 85 can be rewritten as the following Expression 139 and Expression 140.

[Expression 139]

$$\mathbf{y}_{i(i+1)}^{F} = \mathbf{H}_{i(i+1)}^{eFB}\mathbf{s}_{(i+1)}^{B}$$

[Expression 140]

$$\mathbf{y}_{i(i+1)}^{B} = \mathbf{H}_{i(i+1)}^{eBB}\mathbf{s}_{(i+1)}^{B}$$

Where $\mathbf{H}_{i(i+1)}^{eBB}$ is the equivalent channel matrix of the backward link from the (i+1)-th transmitting node to the i-th receiving node and is computed based on the following Expression 141. Further, $\mathbf{H}_{i(i+1)}^{eFB}$ is the equivalent channel matrix that corresponds to the interferences from the backward link of the (i+1)-th transmitting node to the forward link of the i-th receiving node and is computed based on the following Expression 142.

[Expression 141]

$$\mathbf{H}_{i(i+1)}^{eBB} = \left(\widetilde{\widetilde{\mathbf{W}}}_{i}^{rB}\right)^{H} \widetilde{\mathbf{H}}_{i(i+1)}^{BB} \widetilde{\widetilde{\mathbf{W}}}_{(i+1)}^{tB} \in C^{K^{B} \times K^{B}}$$

[Expression 142]

$$\mathbf{H}_{i(i+1)}^{eFB} = \left(\widetilde{\widetilde{\mathbf{W}}}_{i}^{rF}\right)^{H} \widetilde{\mathbf{H}}_{i(i+1)}^{FB} \widetilde{\widetilde{\mathbf{W}}}_{(i+1)}^{tB} \in C^{K^{F} \times K^{B}}$$

Further, $\widetilde{\mathbf{H}}_{i(i+1)}^{FB}$ is the equivalent channel matrix that corresponds to the interference signal from the backward link of the (i+1)-th transmitting node formed by the block ZF to the forward link of the i-th receiving node and is computed based on the following Expression 143.

[Expression 143]

$$\widetilde{\mathbf{H}}_{i(i+1)}^{FB} = \left(\widetilde{\mathbf{W}}_{i}^{rF}\right)^{H} \mathbf{H}_{i(i+1)} \widetilde{\mathbf{W}}_{(i+1)}^{tB} \in C^{M \times M}$$

The i-th receiving node learns the equivalent channel matrices $\mathbf{H}_{i(i+1)}^{eFF}$ and $\mathbf{H}_{i(i+1)}^{eFB}$ by using the training signal that is transmitted from the (i+1)-th transmitting node through the transmitting weight vector $\mathbf{W}_{(i+1)}^{tB}$.

Here, in the receiving signal vector $\mathbf{y}_{i}^{B}$ of the backward link of the i-th receiving node, as shown in the following Expression 144, since the desired signal vector $\mathbf{s}_{(i+1)}^{B}$ is received without the interferences from the other links, it is possible to cancel the interference signal by using the nonlinear process based on the block SIC algorithm.

[Expression 144]

$$\mathbf{y}_{i}^{B} = \mathbf{y}_{i(i-1)}^{B} + \mathbf{y}_{i(i+1)}^{B} + \mathbf{n}_{i}^{B} = \mathbf{H}_{i(i+1)}^{eBB} \mathbf{s}_{(i+1)}^{B} + \mathbf{n}_{i}^{B}$$

In this regard, the i-th receiving node learns the equivalent channel matrices $\mathbf{H}_{i(i+1)}^{eBB}$ and $\mathbf{H}_{i(i+1)}^{eFB}$ by

using the training signal that is transmitted from the (i+1)-th transmitting node through $\mathbf{W}_{(i+1)}^{tB}$ .

In the case of using the block SIC algorithm, firstly, the i-th receiving node detects $\mathbf{s}_{(i+1)}^{B}$ depending on the adopted MIMO transmission scheme.

Then, the i-th receiving node assumes that $\hat{\mathbf{s}}_{(i+1)}^{B}$ is detected accurately and realizes the interference cancellation by subtracting the replica signal from the receiving signal vector $\mathbf{y}_i^F$ of the forward link of the i-th receiving node.

[Expression 145]

$$\mathbf{y}_i^{FSIC} = \mathbf{y}_i^F - \mathbf{H}_{i(i+1)}^{eFB} \hat{\mathbf{s}}_{(i+1)}^B = \mathbf{y}_{i(i-1)}^{FDPC} + \mathbf{y}_{i(i+1)}^F - \mathbf{H}_{i(i+1)}^{eFB} \hat{\mathbf{s}}_{(i+1)}^B + \mathbf{n}_i^F = \mathbf{H}_{i(i-1)}^{eFF} \mathbf{s}_{(i-1)}^F + \mathbf{n}_i^F$$

where $\mathbf{H}_{i(i-1)}^{eFF}$ is an equivalent channel matrix of the forward link from the (i-1)-th transmitting node to the i-th receiving node. Further, $\mathbf{s}_{(i-1)}^F$ is an interference signal vector.

Finally, from the above Expression 144 and Expression 145, it is clear that according to the generalized MIMO mesh network of the present invention that uses the nonlinear algorithm (the block SIC/DPC algorithm), it is possible to realize the multiplexing transmission of multi-stream in the forward link and the backward without the interferences from adjacent nodes.

Furthermore, comparing to the generalized MIMO mesh network of the present invention that uses the linear algorithm, the generalized MIMO mesh network of the present invention that uses the nonlinear algorithm, reduces orthogonal constraint conditions and realizes high diversity gain with redundant degrees of freedom of array by using the block SIC/DPC algorithm.

In the present invention, it is possible to compute (determine) the transmitting weight matrices and the receiving weight matrices of all nodes by performing the above-described computing process procedures of the transmitting/receiving weight matrix in order from the first node to the last node.

By using FIG.17, FIG.18 and FIG.19, we explained the generalized MIMO mesh networks according to embodiments of the present invention in detail as described above. However, the present invention is not limited to the one-dimensional (1D) MIMO mesh networks (the relay MIMO networks) shown in those figures. In the present invention, of course it is possible to arrange each relay node in two dimensions or an arbitrary shape.

Then, in the present invention, it is possible to use both the linear scheme and the nonlinear scheme as the MIMO transmission scheme. In the above-described embodiments of the present invention, in the case of using the linear scheme, although we explained the ZF algorithm and the block ZF algorithm as specific examples, the present invention is not limited to those specific examples. In the present invention, for example, of course it is possible to use the linear schemes such as the MMSE algorithm and the block MMSE algorithm.

Further, in the above-described embodiments of the present invention, in the case of using the nonlinear scheme, although we explained the SIC/DPC algorithm and the block SIC/DPC algorithm as specific examples, the present invention is not limited to those specific examples. In the present invention, for example, of course it is possible to use the nonlinear schemes such as the Tomlinson-Harashima precoding algorithm, the lattice precoding algorithm, the block Tomlinson-Harashima precoding algorithm and the block lattice precoding algorithm.

<4-3> MIMO-OFDM mesh network

By combining orthogonal frequency division multiplexing (OFDM), the above-described generalized MIMO mesh networks of the present invention can operate as broadband wireless networks (MIMO-OFDM mesh networks).

That is to say, a MIMO-OFDM mesh network constructed by a combination of the generalized MIMO mesh network of the present invention and the OFDM (hereinafter referred to as "a MIMO-OFDM mesh network of the present invention"), applies the MIMO algorithm used in the above-described MIMO mesh networks of the present invention to each sub-carrier of the OFDM. Therefore, in the *l*-th sub-carrier of the OFDM, $K^F(l)$ stream signals are multiplexed in the forward link, and $K^B(l)$ stream signals are multiplexed in the backward link.

We formulate a signal model of the MIMO-OFDM mesh network of the present invention as follows.

Here, the receiving signal vector $\mathbf{y}_i^{\mathrm{F}}(l) \in C^{K^{\mathrm{F}}(l)}$ of the forward link of the *l*-th sub-carrier and the receiving signal vector $\mathbf{y}_i^{\mathrm{B}}(l) \in C^{K^{\mathrm{B}}(l)}$ of the backward link of the *l*-th sub-carrier in the i-th receiving node, can be modeled by using the following Expression 146 - Expression 151.

[Expression 146]

$$\mathbf{y}_i^{\mathrm{F}}(l) = \mathbf{y}_{i(i-1)}^{\mathrm{F}}(l) + \mathbf{y}_{i(i+1)}^{\mathrm{F}}(l) + \mathbf{n}_i^{\mathrm{F}}(l)$$

[Expression 147]

$$\mathbf{y}_i^{\mathrm{B}}(l) = \mathbf{y}_{i(i-1)}^{\mathrm{B}}(l) + \mathbf{y}_{i(i+1)}^{\mathrm{B}}(l) + \mathbf{n}_i^{\mathrm{B}}(l)$$

[Expression 148]

$$\mathbf{y}_{i(i-1)}^{\mathrm{F}}(l) = \left(\mathbf{W}_i^{\mathrm{rF}}(l)\right)^H \mathbf{H}_{i(i-1)}(l)\mathbf{W}_{(i-1)}^{\mathrm{tF}}(l)\mathbf{s}_{(i-1)}^{\mathrm{F}}(l)$$
$$+ \left(\mathbf{W}_i^{\mathrm{rF}}(l)\right)^H \mathbf{H}_{i(i-1)}(l)\mathbf{W}_{(i-1)}^{\mathrm{tB}}(l)\mathbf{s}_{(i-1)}^{\mathrm{B}}(l)$$

[Expression 149]

$$\mathbf{y}_{i(i+1)}^{\mathrm{F}}(l) = \left(\mathbf{W}_i^{\mathrm{rF}}(l)\right)^H \mathbf{H}_{i(i+1)}(l)\mathbf{W}_{(i+1)}^{\mathrm{tF}}(l)\mathbf{s}_{(i+1)}^{\mathrm{F}}(l)$$
$$+ \left(\mathbf{W}_i^{\mathrm{rF}}(l)\right)^H \mathbf{H}_{i(i+1)}(l)\mathbf{W}_{(i+1)}^{\mathrm{tB}}(l)\mathbf{s}_{(i+1)}^{\mathrm{B}}(l)$$

[Expression 150]

$$\mathbf{y}_{i(i-1)}^{\mathrm{B}}(l) = \left(\mathbf{W}_i^{\mathrm{rB}}(l)\right)^H \mathbf{H}_{i(i-1)}(l)\mathbf{W}_{(i-1)}^{\mathrm{tF}}(l)\mathbf{s}_{(i-1)}^{\mathrm{F}}(l)$$
$$+ \left(\mathbf{W}_i^{\mathrm{rB}}(l)\right)^H \mathbf{H}_{i(i-1)}(l)\mathbf{W}_{(i-1)}^{\mathrm{tB}}(l)\mathbf{s}_{(i-1)}^{\mathrm{B}}(l)$$

[Expression 151]

$$\mathbf{y}^{\mathrm{B}}_{i(i+1)}(l) = \left(\mathbf{W}^{\mathrm{rB}}_i(l)\right)^H \mathbf{H}_{i(i+1)}(l)\mathbf{W}^{\mathrm{tF}}_{(i+1)}(l)\mathbf{s}^{\mathrm{F}}_{(i+1)}(l)$$

$$+ \left(\mathbf{W}^{\mathrm{rB}}_i(l)\right)^H \mathbf{H}_{i(i+1)}(l)\mathbf{W}^{\mathrm{tB}}_{(i+1)}(l)\mathbf{s}^{\mathrm{B}}_{(i+1)}(l)$$

Where $[\cdot]^H$ represents a complex conjugate transposed matrix of $[\cdot]$. Further, $\mathbf{s}^{\mathrm{F}}_j(l) \in C^{K^{\mathrm{F}}(l)}$ and $\mathbf{s}^{\mathrm{B}}_j(l) \in C^{K^{\mathrm{B}}(l)}$ are the transmitting signal vectors for the forward link and the backward link of the *l*-th sub-carrier in the j-th node. $\mathbf{H}_{ij}(l) \in C^{M \times M}$ is a channel matrix of the *l*-th sub-carrier from the j-th node to the i-th node. $\mathbf{W}^{\mathrm{tF}}_j(l) \in C^{M \times K^{\mathrm{F}}(l)}$ and $\mathbf{W}^{\mathrm{tB}}_j(l) \in C^{M \times K^{\mathrm{B}}(l)}$ are the transmitting weight matrices for the forward link and the backward link of the *l*-th sub-carrier in the j-th node. $\mathbf{W}^{\mathrm{rF}}_i(l) \in C^{M \times K^{\mathrm{F}}(l)}$ and $\mathbf{W}^{\mathrm{rB}}_i(l) \in C^{M \times K^{\mathrm{B}}(l)}$ are the receiving weight matrices for the forward link and the backward link of the *l*-th sub-carrier in the i-th node. $\mathbf{n}^{\mathrm{F}}_i(l) \in C^{K^{\mathrm{F}}(l)}$ and $\mathbf{n}^{\mathrm{B}}_i(l) \in C^{K^{\mathrm{B}}(l)}$ are the equivalent additive noise vectors of the forward link and the backward link of the *l*-th sub-carrier that are received in the i-th node.

For the systemmodel that is formulated as above, by applying the MIMO algorithms of the present invention to every sub-carrier, that is to say, by applying the computing process algorithms of the transmitting weight matrix and the receiving weight matrix of MIMO mesh networks of the present invention that are described in the above <4-1> and <4-2> to every sub-carrier, it is possible to realize the MIMO-OFDM mesh network of the present invention as a broadband wireless network.

INDUSTRIAL APPLICABILITY

The MIMO mesh networks of the present invention are networks that are obtained by applying technologies of the receiving-interference/transmitting-interference avoidance and the multiplexing in the MIMO multiple access and the MIMO broadcast to mesh networks.

According to the present invention, it is possible to solve the problem of the interference distance and the problem of the spectrum efficiency that existed in the conventional mesh networks simultaneously, and construct wireless networks with fast transmission rate and high reliability.

Further, the MIMO mesh networks of the present invention realize the spatial multiplexing of the forward link and the backward link while performing the interference avoidance by the combination of the transmitting weight and the receiving weight.

According to the present invention, it is possible to solve the co-channel interference problem that existed in the conventional mesh networks while realizing the link multiplexing and improve the capacity of the entire network.

Moreover, in the generalized MIMO mesh network of the present invention, each node is equipped with the MIMO antenna having M elements, and $K^{\mathrm{F}}$ stream signals are multiplexed in the forward link while $K^{\mathrm{B}}$ stream signals are multiplexed in the backward link.

According to the generalized MIMO mesh network of the present invention that uses the linear scheme as the MIMO transmission scheme, it is possible to perform the interference avoidance between different links and at the same time also perform the usual MIMO multi-stream transmission in each link, by the linear interference cancellation based on the block ZF algorithm (or the block MMSE algorithm).

Furthermore, according to the generalized MIMO mesh network of the present invention that uses the nonlinear scheme as the MIMO transmission scheme, it is possible to perform the usual MIMO multiplexing transmission in each link after avoiding the interferences to the other links, by the combination of the linear interference cancellation based on the block ZF algorithm (or the block MMSE algorithm) and the nonlinear interference cancellation based on the block SIC algorithm/the block DPC algorithm.

In addition, by combining orthogonal frequency division multiplexing (OFDM), the generalized MIMO mesh networks of the present invention can operate as broadband wireless networks (MIMO-OFDM mesh networks).

<The List of References>

Non-Patent Document 1:
I.F. Akyildiz and X. Wang, "A survey on wireless mesh networks", IEEE Commu. Mag., Vol.43, No.9, p.523-530, 2005.

Non-Patent Document 2:
K. Yamamoto and S. Yoshida, "Tradeoff between area spectral efficiency and end-to-end throughput in rate-adaptive multihop radio networks", IEICE Trans. Commu., Vol.E88-B, No.9, p.3532-3540, 2005.

Non-Patent Document 3:
J. Mitra III and G.Q. Maguire JR., "Cognitive radio: making software radios more personal", IEEE Personal Commu., p.13-18, Aug. 1999.

Non-Patent Document 4:
S. Haykin, "Cognitive radio: brain-empowered wireless communications", IEEE J. Slect. Areas. Commun., Vol.23, No.2, p.201-220, 2005.

Non-Patent Document 5:
M. Noda, G.K. Tran, N.D. Dao, F. Ono, K. Sakaguchi and K. Araki, "Performance analysis of multi-user MIMO system by using indoor wideband MIMO channel measurement data", IEICE Tech. Rep., Vol.RCS2006-140, Oct. 2006.

Non-Patent Document 6:
G.J. Foschini, "Layered space-time architecture for wireless communication in a fading environment when using multi-element antennas", Bell Labs Tech. J., Vol.1, No.2, p.41-59, 1996.

Non-Patent Document 7:
M. Costa, "Writing on dirty paper", IEEE Trans. Inf. Theory, Vol.29, No.3, p.439-441, 1983.

Non-Patent Document 8:
R.D. Wesel and J.M. Cioffi, "Achievable rates for Tomlinson-Harashima precoding", IEEE Trans. Infor. Theory, Vol. 44, No.2, p.824-830, Mar. 1998.

Non-Patent Document 9:
U. Erez and S.T. Brink, "A Close-to-Capacity Dirty Paper Coding Scheme", IEEE Trans. Infor. Theory, Vol.51, No. 10, p.3417-3432, Oct. 2005.

Non-Patent Document 10:
I.E. Telatar, "Capacity of multi-antenna Gaussain channels", Euro. Trans. Telecommun., Vol.1, No.6, p.585-595, 1999.

Non-Patent Document 11:
A. Paulraj, R. Nabar and D. Gore, "Introduction to Space-Time Wireless Communications", Cambridge University Press, 2003.

**Claims**

**1.** A MIMO mesh network having multiple relay nodes in which said each relay node has multiple antennas and a wireless network is constructed by setting up wireless links between said relay nodes,
said MIMO mesh network **characterized in that** the MIMO multiple access and the MIMO broadcast are alternately linked,

the receiving-interference avoidance and the transmitting interference avoidance are performed,
and at the same time the spectrum efficiency of the whole network is improved by multiplex transmitting a second wireless link as well as a first wireless link in said each relay node.

2. The MIMO mesh network according to Claim 1, wherein
said MIMO mesh network uses the linear ZF algorithm,
among said relay nodes, with respect to a receiving node, a first transmitting node and a second transmitting node that are adjacent to said receiving node via said first wireless link and said second wireless link are regarded as a MIMO multiple access system with multiple antennas,
the purpose of the MIMO algorithm in said receiving node is to receive the signal from said second transmitting node while avoiding the receiving-interference from said first transmitting node, and receive the signal from said first transmitting node while avoiding the receiving-interference from said second transmitting node,
when transmitting weights of said first transmitting node and said second transmitting node are given in

$$\mathbf{w}_{10}^{t} \in C^{M}, \mathbf{w}_{12}^{t} \in C^{M}$$ respectively, a receiving signal vector $\mathbf{y}_1 \in C^M$ of said receiving node can be represented by the following Expression,

$$\mathbf{y}_1 = \mathbf{H}_{10}\mathbf{w}_{10}^{t}s_{10} + \mathbf{H}_{12}\mathbf{w}_{12}^{t}s_{12} + \mathbf{n}_1 = \begin{bmatrix} \mathbf{h}_{10}^{t} & \mathbf{h}_{12}^{t} \end{bmatrix} \mathbf{s}_1 + \mathbf{n}_1$$

where, M is the number of antennas of said each relay node, $s_{10}$ and $s_{12}$ are the transmitting signals of said first transmitting node and said second transmitting node, $\mathbf{s}_1 = [s_{10}\ s_{12}]^T \in C^2$ represents a vector notation, $\mathbf{H}_{ij} \in C^{M \times M}$ is a channel matrix from a node #j to a node #i, $\mathbf{h}_{ij}^{t} = \mathbf{H}_{ij}\mathbf{w}_{ij}^{t} \in C^{M}$ represents a channel vector,

it is possible to receive the signal from said first transmitting node while avoiding the receiving-interference from said second transmitting node by using $\mathbf{w}_{10}^{r} = \left(\mathbf{h}_{12}^{t}\right)^{\perp} \in C^{M}$ that is orthogonal to a channel vector $\mathbf{h}_{12}^{t}$ as the receiving weight of said receiving node,
at the same time, it is possible to realize a FB multiplexing of said first wireless link and said second wireless link by using $\mathbf{w}_{12}^{r} = \left(\mathbf{h}_{10}^{t}\right)^{\perp} \in C^{M}$ that is orthogonal to a channel vector $\mathbf{h}_{10}^{t}$ as the receiving weight of said receiving node.

3. The MIMO mesh network according to Claim 1, wherein
said MIMO mesh network uses the linear ZF algorithm,
among said relay nodes, with respect to a transmitting node, a first receiving node and a second receiving node that are adjacent to said transmitting node via said first wireless link and said second wireless link are regarded as a MIMO broadcast system with multiple antennas,
the purpose of the MIMO algorithm in said transmitting node is to transmit the signal to said second receiving node while avoiding the transmitting-interference to said first receiving node, and transmit the signal to said first receiving node while avoiding the transmitting-interference to said second receiving node,
when receiving weights of said first receiving node and said second receiving node are given in

$$\mathbf{w}_{12}^{r} \in C^{M}, \mathbf{w}_{32}^{r} \in C^{M}$$ respectively,

a receiving signal of said first receiving node can be represented by the following Expression,

$$y_1 = \mathbf{w}_{12}^{r\ H}\mathbf{H}_{12}\mathbf{x}_2 + n_1$$

a receiving signal of said second receiving node can be represented by the following Expression,

$$y_3 = \mathbf{w}_{32}^{r\;H} \mathbf{H}_{32} \mathbf{x}_2 + n_3$$

where, $\mathbf{x}_2 \in C^M$ is a transmitting signal vector of said transmitting node,
when the vector notation is adopted by using $\mathbf{y}_2 = [y_1\ y_3]^T \in C^2$, the following Expression holds,

$$\mathbf{y}_2 = \begin{bmatrix} \mathbf{h}_{12}^{r} & \mathbf{h}_{32}^{r} \end{bmatrix}^T \mathbf{x}_2 + \mathbf{n}_2$$

where, $\mathbf{h}_{ij}^{r\;T} = \mathbf{w}_{ij}^{r\;H} \mathbf{H}_{ij} \in C^{1 \times M}$ represents a vector notation,

it is possible to transmit the signal to said second receiving node while avoiding the transmitting-interference to said first receiving node by using $\mathbf{w}_{32}^{t} = \left( \mathbf{h}_{12}^{r\;*} \right)^{\perp} \in C^M$ that is orthogonal to a channel vector $\mathbf{h}_{12}^{r\;*}$ as the transmitting weight of said transmitting node,
at the same time, it is possible to realize a FB multiplexing of said first wireless link and said second wireless link

by using $\mathbf{w}_{12}^{t} = \left( \mathbf{h}_{32}^{r\;*} \right)^{\perp} \in C^M$ that is orthogonal to a channel vector $\mathbf{h}_{32}^{r\;*}$ as the transmitting weight of said transmitting node.

4. The MIMO mesh network according to Claim 1, wherein
   saidMIMOmeshnetworkuses the nonlinear SIC/DPC algorithm,
   among said relay nodes, with respect to a receiving node, a first transmitting node and a second transmitting node
   that are adjacent to said receiving node via said first wireless link and said second wireless link are regarded as a
   MIMO multiple access system with multiple antennas,
   the purpose of the MIMO algorithm in said receiving node is to multiplex and receive the signals from said first
   transmitting node and said second transmitting node while avoiding the receiving-interference by using the SIC
   algorithm that is a nonlinear receiving scheme,
   in the SIC algorithm, in a receiving signal of said receiving node, firstly, a signal $s_{12}$ from said second transmitting
   node is detected, and then a signal $s_{10}$ from said first transmitting node is received while avoiding the receiving-
   interference by subtracting said detected signal $s_{12}$ from said receiving signal,
   here, when the receiving weight for said signal $s_{12}$ from said second transmitting node is represented by

$$\mathbf{w}_{12}^{r} = \left( \mathbf{h}_{10}^{t} \right)^{\perp} , \quad \text{and the receiving weight for said signal } s_{10} \text{ from said first transmitting node is represented}$$

by $\mathbf{w}_{10}^{r} = \left( \mathbf{h}_{10}^{t} \right)^{\parallel} ,$ an output signal vector $\tilde{\mathbf{y}}_1$ of this time can be represented by the following Expression,

$$\tilde{\mathbf{y}}_1 = \begin{bmatrix} \mathbf{w}_{10}^{r} & \mathbf{w}_{12}^{r} \end{bmatrix}^H \mathbf{y}_1 = \begin{bmatrix} \mathbf{h}_{10}^{e} & \mathbf{h}_{12}^{i} \\ 0 & \mathbf{h}_{12}^{e} \end{bmatrix} \mathbf{s}_1 + \tilde{\mathbf{n}}_1$$

where $\mathbf{h}_{12}^{i}$ represents the interference from said second transmitting node,

therefore, firstly $\hat{s}_{12}$ represented by the following Expression is detected,

$$\hat{s}_{12} = \frac{1}{h_{12}^e}[\tilde{\mathbf{y}}_1]_2$$

and then it is possible to detect $\hat{s}_{10}$ by performing the receiving-interference avoidance basing on the following Expression,

$$\hat{s}_{10} = \frac{1}{h_{10}^e}\left([\tilde{\mathbf{y}}_1]_1 - h_{12}^i \hat{s}_{12}\right)$$

this can realize the receiving-interference avoidance and a FB multiplexing of said first wireless link and said second wireless link.

**5.** The MIMO mesh network according to Claim 1, wherein
said MIMO mesh network uses the nonlinear SIC/DPC algorithm,
among said relay nodes, with respect to a transmitting node, a first receiving node and a second receiving node that are adjacent to said transmitting node via said first wireless link and said second wireless link are regarded as a MIMO broadcast system with multiple antennas,
the purpose of the MIMO algorithm in said transmitting node is to multiplex and transmit the signals to said first receiving node and said second receiving node while avoiding the transmitting-interference by using the DPC algorithm that is a nonlinear transmitting scheme,
when receiving weights of said first receiving node and said second receiving node are given in

$$\mathbf{w}_{12}^r \in \mathbf{C}^M, \mathbf{w}_{32}^r \in \mathbf{C}^M \quad \text{respectively,}$$

a receiving signal of said first receiving node can be represented by the following Expression,

$$y_1 = \mathbf{w}_{12}^{r\,H}\mathbf{H}_{12}\mathbf{x}_2 + n_1$$

a receiving signal of said second receiving node can be represented by the following Expression,

$$y_3 = \mathbf{w}_{32}^{r\,H}\mathbf{H}_{32}\mathbf{x}_2 + n_3$$

where, $\mathbf{x}_2 \in C^M$ is a transmitting signal vector of said transmitting node,
when the vector notation is adopted by using $\mathbf{y}_2 = [y_1\ y_3]^T \in C^2$, the following Expression holds,

$$\mathbf{y}_2 = \begin{bmatrix} \mathbf{h}_{12}^r & \mathbf{h}_{32}^r \end{bmatrix}^T \mathbf{x}_2 + \mathbf{n}_2$$

where, $\mathbf{h}_{ij}^{r\,T} = \mathbf{w}_{ij}^{r\,H}\mathbf{H}_{ij} \in C^{1 \times M}$ is a channel vector,

in the DPC algorithm, a transmitting weight $\mathbf{w}_{32}^t = \left(\mathbf{h}_{12}^{r\,*}\right)^\perp$ that is orthogonal to a channel vector $\mathbf{h}_{12}^{r\,*}$ is

used for $y_3$ i.e. $s_{32}$, and a transmitting weight $\mathbf{w}_{12}^{t}=\left(\mathbf{h}_{12}^{r\,*}\right)^{\|}$ that is parallel to said channel vector $\mathbf{h}_{12}^{r\,*}$ is used for $y_1$ i.e. $s_{12}$,

an output signal vector $\tilde{\mathbf{y}}_2$ of this time can be represented by the following Expression,

$$\tilde{\mathbf{y}}_2 = \begin{bmatrix} \mathbf{h}_{12}^{r} & \mathbf{h}_{32}^{r} \end{bmatrix}^{T} \begin{bmatrix} \mathbf{w}_{12}^{t} & \mathbf{w}_{32}^{t} \end{bmatrix} \mathbf{s}_2 + \mathbf{n}_2 = \begin{bmatrix} \mathbf{h}_{12}^{e} & 0 \\ \mathbf{h}_{12}^{i} & \mathbf{h}_{32}^{e} \end{bmatrix} \mathbf{s}_2 + \mathbf{n}_2$$

where, $\mathbf{s}_2 = [s_{12}\ s_{32}]^T \in C^2$ is a vector notation, $\mathbf{h}_{12}^{i}$ represents the interference for $y_3$ of $s_{12}$,

based on the following Expression, it is possible to avoid the transmitting-interference by subtracting this interference component from the transmitting signal of $s'_{32}$,

$$s_{32} = s'_{32} - \frac{\mathbf{h}_{12}^{i}}{\mathbf{h}_{32}^{e}} s_{12}$$

this can realize the transmitting-interference avoidance and a FB multiplexing of said first wireless link and said second wireless link.

6. A MIMO mesh network having multiple nodes with the relay function in which said each node has MMIMO antennas and a wireless network is constructed by setting up wireless links between said nodes,
said MIMO mesh network **characterized in that** the interference avoidance is performed by a combination of a transmitting weight and a receiving weight,
and at the same time the capacity of the entire network is improved by multiplexing and transmitting stream signals of a forward link and a backward link in said each node.

7. The MIMO mesh network according to Claim 6, wherein
a signal model of said MIMO mesh network is formulated as follows,

$$y_i^{F} = y_{i(i-1)}^{F} + y_{i(i+1)}^{F} + n_i^{F}$$

$$y_i^{B} = y_{i(i-1)}^{B} + y_{i(i+1)}^{B} + n_i^{B}$$

where $y_i^{F}, y_i^{B}$ are receiving signals of the forward link and the backward link of the i-th node,

$$y_{i(i-1)}^{F} = \left(\mathbf{w}_i^{rF}\right)^{H} \mathbf{H}_{i(i-1)} \mathbf{w}_{(i-1)}^{tF} s_{(i-1)}^{F} + \left(\mathbf{w}_i^{rF}\right)^{H} \mathbf{H}_{i(i-1)} \mathbf{w}_{(i-1)}^{tB} s_{(i-1)}^{B}$$

$$y_{i(i+1)}^{F} = \left(\mathbf{w}_i^{rF}\right)^{H} \mathbf{H}_{i(i+1)} \mathbf{w}_{(i+1)}^{tF} s_{(i+1)}^{F} + \left(\mathbf{w}_i^{rF}\right)^{H} \mathbf{H}_{i(i+1)} \mathbf{w}_{(i+1)}^{tB} s_{(i+1)}^{B}$$

$$y_{i(i-1)}^{B} = \left(\mathbf{w}_i^{rB}\right)^H \mathbf{H}_{i(i-1)}\mathbf{w}_{(i-1)}^{tF}s_{(i-1)}^{F} + \left(\mathbf{w}_i^{rB}\right)^H \mathbf{H}_{i(i-1)}\mathbf{w}_{(i-1)}^{tB}s_{(i-1)}^{B}$$

$$y_{i(i+1)}^{B} = \left(\mathbf{w}_i^{rB}\right)^H \mathbf{H}_{i(i+1)}\mathbf{w}_{(i+1)}^{tF}s_{(i+1)}^{F} + \left(\mathbf{w}_i^{rB}\right)^H \mathbf{H}_{i(i+1)}\mathbf{w}_{(i+1)}^{tB}s_{(i+1)}^{B}$$

where $[\cdot]^H$ represents a complex conjugate transposedmatrix of $[\cdot]$, $s_j^F$ and $s_j^B$ are transmitting signals for the forward link and the backward link of the j-th node, $\mathbf{H}_{ij} \in C^{M \times M}$ is a channel matrix from the j-th node to the i-th node, $\mathbf{w}_j^{tF} \in C^M$ and $\mathbf{w}_j^{tB} \in C^M$ are transmitting weight vectors for the forward link and the backward link of the j-th node, $\mathbf{w}_i^{rF} \in C^M$ and $\mathbf{w}_i^{rB} \in C^M$ are receiving weight vectors for the forward link and the backward link of the i-th node, $n_i^F$ and $n_i^B$ are equivalent additive noises of the forward link and the backward link that are received in the i-th node,

in the forward link, $s_{(i-1)}^F$ is a desired signal, on the other hand in the backward link, $s_{(i+1)}^B$ is a desired signal.

**8.** The MIMO mesh network according to Claim 7, wherein
said MIMO mesh network uses the linear ZF algorithm,
the transmitting weight and the receiving weight are computed in order from the first node to the last node, when attention is focused on the i-th receiving node, transmitting weights $\mathbf{w}_{(i-1)}^{tF}$ and $\mathbf{w}_{(i-1)}^{tB}$ of the (i-1)-th transmitting node are already computed,
a system model between the (i-1)-th transmitting node and the i-th receiving node, is represented by the following Expressions by using an equivalent transmitting channel vector $\mathbf{h}_{i(i-1)}^{tF} = \mathbf{H}_{i(i-1)}\mathbf{w}_{i-1}^{tF} \in C^M$ and an equivalent transmitting channel vector $\mathbf{h}_{i(i-1)}^{tB} = \mathbf{H}_{i(i-1)}\mathbf{w}_{(i-1)}^{tB} \in C^M$,

$$y_{i(i-1)}^{F} = \left(\mathbf{w}_i^{rF}\right)^H \mathbf{h}_{i(i-1)}^{tF}s_{(i-1)}^{F} + \left(\mathbf{w}_i^{rF}\right)^H \mathbf{h}_{i(i-1)}^{tB}s_{(i-1)}^{B}$$

$$y_{i(i-1)}^{B} = \left(\mathbf{w}_i^{rB}\right)^H \mathbf{h}_{i(i-1)}^{tF}s_{(i-1)}^{F} + \left(\mathbf{w}_i^{rB}\right)^H \mathbf{h}_{i(i-1)}^{tB}s_{(i-1)}^{B}$$

the i-th receiving node learns equivalent transmitting channel vectors $\mathbf{h}_{i(i-1)}^{tB}$ and $\mathbf{h}_{i(i-1)}^{tF}$ by using training signals that are transmitted from the (i-1)-th transmitting node through said transmitting weights $\mathbf{w}_{(i-1)}^{tF}$ and

$$\mathbf{w}_{(i-1)}^{\mathrm{tB}} ,$$

receiving weights $\mathbf{w}_i^{\mathrm{rF}}, \mathbf{w}_i^{\mathrm{rB}}$ of the i-th receiving node are computed based on the following Expressions,

$$\mathbf{w}_i^{\mathrm{rF}} = \left( \mathbf{h}_{i(i-1)}^{\mathrm{tF}}{}^{\|}, \mathbf{h}_{i(i-1)}^{\mathrm{tB}}{}^{\perp} \right)$$

$$\mathbf{w}_i^{\mathrm{rB}} = \left( \mathbf{h}_{i(i-1)}^{\mathrm{tF}}{}^{\perp}, \mathbf{h}_{i(i-1)}^{\mathrm{tB}}{}^{\perp} \right)$$

where $(\mathbf{x}^\perp, \mathbf{y}^\perp)$ is a basis vector that is orthogonal to both $\mathbf{x}$ and $\mathbf{y}$, $(\mathbf{x}^\|, \mathbf{y}^\perp)$ is a basis vector that is most parallel to $\mathbf{x}$ in a space that is orthogonal to $\mathbf{y}$,
said system between the (i-1) -th transmitting node and the i-th receiving node, is modeled by the following Expressions by using said computed receiving weights $\mathbf{w}_i^{\mathrm{rF}}, \mathbf{w}_i^{\mathrm{rB}}$ of the i-th receiving node,

$$y_{i(i-1)}^{\mathrm{F}} = h_{i(i-1)}^{\mathrm{eFF}} s_{(i-1)}^{\mathrm{F}}$$

$$y_{i(i-1)}^{\mathrm{B}} = 0$$

where $h_{i(i-1)}^{\mathrm{eFF}} = \left( \mathbf{w}_i^{\mathrm{rF}} \right)^H \mathbf{H}_{i(i-1)} \mathbf{w}_{(i-1)}^{\mathrm{tF}}$ is an equivalent channel coefficient of the forward link between the (i-1) -th transmitting node and the i-th receiving node.

9. The MIMO mesh network according to Claim 8, wherein
a system between the i-th receiving node and the (i+1)-th transmitting node, is modeled by the following Expressions by using said computed receiving weights $\mathbf{w}_i^{\mathrm{rF}}, \mathbf{w}_i^{\mathrm{rB}}$ of the i-th receiving node,

$$y_{i(i+1)}^{\mathrm{F}} = \left( \mathbf{h}_{i(i+1)}^{\mathrm{rF}} \right)^T \mathbf{w}_{(i+1)}^{\mathrm{tF}} s_{(i+1)}^{\mathrm{F}} + \left( \mathbf{h}_{i(i+1)}^{\mathrm{rF}} \right)^T \mathbf{w}_{(i+1)}^{\mathrm{tB}} s_{(i+1)}^{\mathrm{B}}$$

$$y_{i(i+1)}^{\mathrm{B}} = \left( \mathbf{h}_{i(i+1)}^{\mathrm{rB}} \right)^T \mathbf{w}_{(i+1)}^{\mathrm{tF}} s_{(i+1)}^{\mathrm{F}} + \left( \mathbf{h}_{i(i+1)}^{\mathrm{rB}} \right)^T \mathbf{w}_{(i+1)}^{\mathrm{tB}} s_{(i+1)}^{\mathrm{B}}$$

where $\mathbf{h}_{i(i+1)}^{\mathrm{rF}} = \left( \mathbf{H}_{i(i+1)} \right)^T \left( \mathbf{w}_i^{\mathrm{rF}} \right)^* \in C^M$ and $\mathbf{h}_{i(i+1)}^{\mathrm{rB}} = \left( \mathbf{H}_{i(i+1)} \right)^T \left( \mathbf{w}_i^{\mathrm{rB}} \right)^* \in C^M$ are equivalent receiving channel vectors of the forward link and the backward link,

the (i+1)-th transmitting node utilizes the channel reciprocity $\left(\mathbf{H}_{i(i+1)}^{T} = \mathbf{H}_{(i+1)i}\right)$, and when the i-th receiving node is in the transmitting mode, the (i+1)-th transmitting node learns equivalent receiving channel vectors $\mathbf{h}_{i(i+1)}^{rF}$ and $\mathbf{h}_{i(i+1)}^{rB}$ by transmitting a training signal through a conjugate receiving weight of the i-th receiving node, or the (i+1)-th transmitting node transmits the training signal, and the i-th receiving node learns $\mathbf{h}_{i(i+1)}^{rF}$ and $\mathbf{h}_{i(i+1)}^{rB}$ and then feeds back said learned $\mathbf{h}_{i(i+1)}^{rF}$ and $\mathbf{h}_{i(i+1)}^{rB}$ to the (i+1)-th transmitting node,

transmitting weights $\mathbf{w}_{(i+1)}^{tF}, \mathbf{w}_{(i+1)}^{tB}$ of the (i+1)-th transmitting node are computed based on the following Expressions,

$$\mathbf{w}_{(i+1)}^{tF} = \left( \left( \mathbf{h}_{i(i+1)}^{rF} \right)^{*\perp}, \left( \mathbf{h}_{i(i+1)}^{rB} \right)^{*\perp} \right)$$

$$\mathbf{w}_{(i+1)}^{tB} = \left( \left( \mathbf{h}_{i(i+1)}^{rF} \right)^{*\perp}, \left( \mathbf{h}_{i(i+1)}^{rB} \right)^{*\|} \right)$$

said system between the i-th receiving node and the (i+1)-th transmitting node, is modeled by the following Expressions by using said computed transmitting weights $\mathbf{w}_{(i+1)}^{tF}, \mathbf{w}_{(i+1)}^{tB}$ of the (i+1)-th transmitting node,

$$y_{i(i+1)}^{F} = 0$$

$$y_{i(i+1)}^{B} = h_{i(i+1)}^{eBB} s_{(i+1)}^{B}$$

where $h_{i(i+1)}^{eBB} = \left( \mathbf{w}_{i}^{rB} \right)^{H} \mathbf{H}_{i(i+1)} \mathbf{w}_{(i+1)}^{tB}$ is an equivalent channel coefficient of the backward link between the i-th receiving node and the (i+1)-th transmitting node.

**10.** The MIMO mesh network according to Claim 9, wherein

said receiving signals $y_{i}^{F}, y_{i}^{B}$ of the forward link and the backward link of the i-th receiving node is represented by the following Expressions,

$$y_{i}^{F} = h_{i(i-1)}^{eFF} s_{(i-1)}^{F} + n_{i}^{F}$$

$$y_i^{\mathrm{B}} = h_{i(i+1)}^{\mathrm{eBB}} s_{(i+1)}^{\mathrm{B}} + n_i^{\mathrm{B}}$$

the i-th receiving node simultaneously receives signals of the forward link and the backward link without interferences from the (i-1)-th transmitting node and the (i+1)-th transmitting node.

11. The MIMO mesh network according to Claim 7, wherein
said MIMO mesh network uses the nonlinear SIC/DPC algorithm,
the transmitting weight and the receiving weight are computed in order from the first node to the last node, when attention is focused on the i-th receiving node, transmitting weights $\mathbf{w}_{(i-1)}^{\mathrm{tF}}$ and $\mathbf{w}_{(i-1)}^{\mathrm{tB}}$ of the (i-1)-th transmitting node are already computed, receiving weights $\mathbf{w}_i^{\mathrm{rF}}, \mathbf{w}_i^{\mathrm{rB}}$ of the i-th receiving node are computed based on the following Expressions,

$$\mathbf{w}_i^{\mathrm{rF}} = \mathbf{h}_{i(i-1)}^{\mathrm{tF}\,\|}$$

$$\mathbf{w}_i^{\mathrm{rB}} = \left( \mathbf{h}_{i(i-1)}^{\mathrm{tF}\,\perp}, \mathbf{h}_{i(i-1)}^{\mathrm{tB}\,\perp} \right)$$

where $\mathbf{x}^{\|}$ is a basis vector that is parallel to $\mathbf{x}$, $(\mathbf{x}^{\perp}\mathbf{y}^{\perp})$ is a basis vector that is orthogonal to both $\mathbf{x}$ and $\mathbf{y}$,
a system between the (i-1)-th transmitting node and the i-th receiving node, is modeled by the following Expressions by using said computed receiving weights $\mathbf{w}_i^{\mathrm{rF}}, \mathbf{w}_i^{\mathrm{rB}}$ of the i-th receiving node,

$$y_{i(i-1)}^{\mathrm{F}} = h_{i(i-1)}^{\mathrm{eFF}} s_{(i-1)}^{\mathrm{F}} + h_{i(i-1)}^{\mathrm{eFB}} s_{(i-1)}^{\mathrm{B}}$$

$$y_{i(i-1)}^{\mathrm{B}} = 0$$

where $h_{i(i-1)}^{\mathrm{eFF}} = \left( \mathbf{w}_i^{\mathrm{rF}} \right)^{H} \mathbf{H}_{i(i-1)} \mathbf{w}_{(i-1)}^{\mathrm{tF}}$ is an equivalent channel coefficient of the forward link between the (i-1)-th transmitting node and the i-th receiving node, $h_{i(i-1)}^{\mathrm{eFB}} = \left( \mathbf{w}_i^{\mathrm{rF}} \right)^{H} \mathbf{H}_{i(i-1)} \mathbf{w}_{(i-1)}^{\mathrm{tB}}$ is an equivalent channel coefficient equivalent to an interference signal from the backward link of the (i-1)-th transmitting node to the forward link of the i-th receiving node,

here, since both $s_{(i-1)}^{\mathrm{F}}$ and $s_{(i-1)}^{\mathrm{B}}$ are known, the (i-1)-th transmitting node utilizes the channel reciprocity

$\left( \mathbf{H}_{i(i-1)} = \mathbf{H}_{(i-1)i}^{T} \right)$, and when the i-th receiving node is in the transmitting mode, the (i-1)-th transmitting node learns equivalent channel coefficient $h_{i(i-1)}^{\mathrm{eFF}}$ and $h_{i(i-1)}^{\mathrm{eFB}}$ by transmitting a training signal through

$$\left(\mathbf{w}_i^{\mathrm{rF}}\right)^*,$$

or the (i-1)-th transmitting node transmits the training signal through $\mathbf{w}_{(i-1)}^{\mathrm{tF}}$ and $\mathbf{w}_{(i-1)}^{\mathrm{tB}}$, and the i-th receiving node learns $h_{i(i-1)}^{\mathrm{eFF}}$ and $h_{i(i-1)}^{\mathrm{eFB}}$ and then feeds back said learned $h_{i(i-1)}^{\mathrm{eFF}}$ and $h_{i(i-1)}^{\mathrm{eFB}}$ to the (i-1)-th transmitting node,

the (i-1)-th transmitting node cancels the interference signal by using the DPC algorithm as the following Expressions,

$$s_{(i-1)}^{\mathrm{FDPC}} = s_{(i-1)}^{\mathrm{F}} - \frac{h_{i(i-1)}^{\mathrm{eFB}}}{h_{i(i-1)}^{\mathrm{eFF}}} s_{(i-1)}^{B}$$

$$y_{i(i-1)}^{\mathrm{FDPC}} = h_{i(i-1)}^{\mathrm{eFF}} s_{(i-1)}^{\mathrm{FDPC}} + h_{i(i-1)}^{\mathrm{eFB}} s_{(i-1)}^{B} = h_{i(i-1)}^{\mathrm{eFF}} s_{(i-1)}^{\mathrm{F}}$$

where $s_{(i-1)}^{B}$ is an interference signal, $s_{(i-1)}^{\mathrm{F}}$ is a desired signal.

**12.** The MIMO mesh network according to Claim 11, wherein

based on said computed receiving weights $\mathbf{w}_i^{\mathrm{rF}}, \mathbf{w}_i^{\mathrm{rB}}$ of the i-th receiving node, transmitting weights $\mathbf{w}_{(i+1)}^{\mathrm{tF}}, \mathbf{w}_{(i+1)}^{\mathrm{tB}}$ of the (i+1)-th transmitting node are computed by the following Expressions,

$$\mathbf{w}_{(i+1)}^{\mathrm{tF}} = \left(\left(\mathbf{h}_{i(i+1)}^{\mathrm{rF}}\right)^{*\perp}, \left(\mathbf{h}_{i(i+1)}^{\mathrm{rB}}\right)^{*\perp}\right)$$

$$\mathbf{w}_{(i+1)}^{\mathrm{tB}} = \left(\mathbf{h}_{i(i+1)}^{\mathrm{rB}}\right)^{*\|}$$

a system between the i-th receiving node and the (i+1)-th transmitting node, is modeled by the following Expressions by using said computed transmitting weights $\mathbf{w}_{(i+1)}^{\mathrm{tF}}, \mathbf{w}_{(i+1)}^{\mathrm{tB}}$ of the (i+1)-th transmitting node,

$$y_{i(i+1)}^{\mathrm{F}} = h_{i(i+1)}^{\mathrm{eFB}} s_{(i+1)}^{B}$$

$$y_{i(i+1)}^{B} = h_{i(i+1)}^{\mathrm{eBB}} s_{(i+1)}^{B}$$

where $h_{i(i+1)}^{\mathrm{eFB}} = \left(\mathbf{w}_i^{\mathrm{rF}}\right)^H \mathbf{H}_{i(i+1)} \mathbf{w}_{(i+1)}^{\mathrm{tB}}$ is an equivalent channel coefficient equivalent to an interference signal from the backward link of the (i+1)-th transmitting node to the forward link of the i-th receiving node,

$$h_{i(i+1)}^{\mathrm{eBB}} = \left(\mathbf{w}_i^{\mathrm{rB}}\right)^H \mathbf{H}_{i(i+1)} \mathbf{w}_{(i+1)}^{\mathrm{tB}}$$ is an equivalent channel coefficient of the backward link between the i-th receiving node and the (i+1)-th transmitting node,

the i-th receiving node learns equivalent channel coefficients $h_{i(i+1)}^{\mathrm{eFF}}$ and $h_{i(i+1)}^{\mathrm{eFB}}$ by using a training signal that is transmitted from the (i+1)-th transmitting node through the transmitting weight vector $\mathbf{w}_{(i+1)}^{\mathrm{tB}}$,

in the receiving signal $y_i^{\mathrm{B}}$ of the backward link of the i-th receiving node, the desired signal $s_{(i+1)}^{\mathrm{B}}$ is received without interferences as the following Expression,

$$y_i^{\mathrm{B}} = y_{i(i-1)}^{\mathrm{B}} + y_{i(i+1)}^{\mathrm{B}} + n_i^{\mathrm{B}} = h_{i(i+1)}^{\mathrm{eBB}} s_{(i+1)}^{\mathrm{B}} + n_i^{\mathrm{B}}$$

firstly, the i-th receiving node detects $s_{(i+1)}^{\mathrm{B}}$ as the following Expression by using the SIC algorithm,

$$\hat{s}_{(i+1)}^{\mathrm{B}} = \frac{1}{h_{i(i+1)}^{\mathrm{eBB}}} y_i^{\mathrm{B}}$$

then, as shown in the following Expression, the i-th receiving node assumes that $\hat{s}_{(i+1)}^{\mathrm{B}}$ is detected accurately and realizes the interference cancellation by subtracting the replica signal from the receiving signal $y_i^{\mathrm{F}}$ of the forward link of the i-th receiving node,

$$y_i^{\mathrm{FSIC}} = y_i^{\mathrm{F}} - h_{i(i+1)}^{\mathrm{eFB}} \hat{s}_{(i+1)}^{\mathrm{B}} = y_{i(i-1)}^{\mathrm{FDPC}} + y_{i(i+1)}^{\mathrm{F}} - h_{i(i+1)}^{\mathrm{eFB}} \hat{s}_{(i+1)}^{\mathrm{B}} + n_i^{\mathrm{F}} = h_{i(i-1)}^{\mathrm{eFF}} s_{(i-1)}^{\mathrm{F}} + n_i^{\mathrm{F}}$$

where $h_{i(i-1)}^{\mathrm{eFF}} = \left(\mathbf{w}_i^{\mathrm{rF}}\right)^H \mathbf{H}_{i(i-1)} \mathbf{w}_{(i-1)}^{\mathrm{tF}}$ is an equivalent channel coefficient of the forward link between the (i-1)-th transmitting node and the i-th receiving node, $s_{(i-1)}^{\mathrm{F}}$ is a desired signal.

13. The MIMO mesh network according to any one of Claims 8, 9, 11 and 12 wherein
the transmitting weight and the receiving weight are computed in order from the first node to the last node,

the i-th node is a receiving node, when attention is focused on the i-th receiving node, transmitting weights $\mathbf{w}_{(i-1)}^{\mathrm{tF}}$

and $\mathbf{w}_{(i-1)}^{\mathrm{tB}}$ of the (i-1)-th transmitting node are already computed,

the reciprocity $\mathbf{H}_{i(i-1)} = \mathbf{H}_{(i-1)i}^{T}$ holds, where $[\cdot]^{\mathrm{T}}$ represents a transposed matrix of $[\cdot]$,

as shown in the following Expressions, training signals $\tilde{s}^{F}_{(i-1)}(t)$ and $\tilde{s}^{B}_{(i-1)}(t)$ that are mutually orthogonal, are transmitted from the (i-1)-th transmitting node to the i-th receiving node through the transmitting weights $\mathbf{w}^{tF}_{(i-1)}$ and $\mathbf{w}^{tB}_{(i-1)}$ of the (i-1)-th transmitting node,

$$\tilde{\mathbf{y}}_{i(i-1)}(t) = \mathbf{H}_{i(i-1)}\mathbf{w}^{tF}_{(i-1)}\tilde{s}^{F}_{(i-1)}(t) + \mathbf{H}_{i(i-1)}\mathbf{w}^{tB}_{(i-1)}\tilde{s}^{B}_{(i-1)}(t) + \mathbf{n}_i$$

$$\tilde{\mathbf{y}}_{i(i-1)}(t) = \mathbf{h}^{tF}_{i(i-1)}\tilde{s}^{F}_{(i-1)}(t) + \mathbf{h}^{tB}_{i(i-1)}\tilde{s}^{B}_{(i-1)}(t) + \mathbf{n}_i$$

where $\tilde{y}_{i(i-1)}(t) \in C^M$ is a receiving signal vector of the i-th receiving node equivalent to the training signals $\tilde{s}^{F}_{(i-1)}(t), \tilde{s}^{B}_{(i-1)}(t)$ transmitted from the (i-1)-th transmitting node, $\mathbf{n}_i \in C^M$ is an additive noise vector of the i-th receiving node,

then, equivalent transmitting channel vectors $\left\{\mathbf{h}^{tF}_{i(i-1)}, \mathbf{h}^{tB}_{i(i-1)}\right\}$ are estimated based on the following Expressions,

$$\hat{\mathbf{h}}^{tF}_{i(i-1)} = \frac{1}{T}\int_0^T \tilde{\mathbf{y}}_{i(i-1)}(t)\tilde{s}^{F*}_{(i-1)}(t)\mathrm{d}t$$

$$\hat{\mathbf{h}}^{tB}_{i(i-1)} = \frac{1}{T}\int_0^T \tilde{\mathbf{y}}_{i(i-1)}(t)\tilde{s}^{B*}_{(i-1)}(t)\mathrm{d}t$$

where $\hat{\mathbf{h}}^{tF}_{i(i-1)}, \hat{\mathbf{h}}^{tB}_{i(i-1)}$ are estimated values of the equivalent transmitting channel vectors $\left\{\mathbf{h}^{tF}_{i(i-1)}, \mathbf{h}^{tB}_{i(i-1)}\right\}$.

14. The MIMO mesh network according to any one of Claims 8 to 12 wherein
the transmitting weight and the receiving weight are computed in order from the first node to the last node,
the i-th node is a transmitting node, when attention is focused on the i-th transmitting node, receiving weights $\mathbf{w}^{rF}_{(i-1)}$ and $\mathbf{w}^{rB}_{(i-1)}$ of the (i-1)-th receiving node are already computed,

in the case that the channel reciprocity represented by $\mathbf{H}_{i(i-1)} = \mathbf{H}^{T}_{(i-1)i}$ holds, the following Expression,

$$h^{eBB}_{(i-1)i} = \left(\mathbf{w}^{rB}_{(i-1)}\right)^{H}\mathbf{H}_{(i-1)i}\mathbf{w}^{tB}_{i} = \left(h^{eFF}_{i(i-1)}\right)^{T} = \left(\mathbf{w}^{tF}_{(i-1)}\right)^{T}\mathbf{H}_{(i-1)i}\left(\mathbf{w}^{rF}_{i}\right)^{*}$$

comes into effect,
where [·]* represents a complex conjugate matrix of [.], [·]ᵀ represents a transposed matrix of [·], [·]ᴴ represents a complex conjugate transposed matrix of [·],

$$\mathbf{w}_{(i-1)}^{tF} = \left(\mathbf{w}_{(i-1)}^{rB}\right)^{*} \ \text{and} \ \mathbf{w}_{i}^{tB} = \left(\mathbf{w}_{i}^{rF}\right)^{*}$$

hold,

for the equivalent receiving channel vectors $\mathbf{h}_{(i-1)i}^{rB}, \mathbf{h}_{(i-1)i}^{rF}$, the property of the channel reciprocity represented by the following Expressions, comes into effect,

$$\mathbf{h}_{(i-1)i}^{rB} = \mathbf{H}_{(i-1)i}^{T}\left(\mathbf{w}_{(i-1)}^{rB}\right)^{*} = \mathbf{H}_{i(i-1)}\mathbf{w}_{(i-1)}^{tF} = \mathbf{h}_{i(i-1)}^{tF}$$

$$\mathbf{h}_{(i-1)i}^{rF} = \mathbf{H}_{(i-1)i}^{T}\left(\mathbf{w}_{(i-1)}^{rF}\right)^{*} = \mathbf{H}_{i(i-1)}\mathbf{w}_{(i-1)}^{tB} = \mathbf{h}_{i(i-1)}^{tB}$$

the learned equivalent transmitting channel vector $\mathbf{h}_{i(i-1)}^{tF}$ is used as the equivalent receiving channel vector $\mathbf{h}_{(i-1)i}^{rB}$, and the learned equivalent transmitting channel vector $\mathbf{h}_{i(i-1)}^{tB}$ is used as the equivalent receiving channel vector $\mathbf{h}_{(i-1)i}^{rF}$.

**15.** A MIMO mesh network having multiple nodes with the relay function in which said each node has multiple MIMO antennas and a wireless network is constructed by setting up forward links and backward links between said nodes, said MIMO mesh network **characterized in that** $K^F$ stream signals ($K^F$ streams) are multiplexed in said forward link and at the same time $K^B$ stream signals ($K^B$ streams) are also multiplexed in said backward link, a condition represented by the following Expression is satisfied,

$$M \geq K + \max(K^{F}, K^{B})$$

where M is the number of MIMO antennas which said each node has, K is the number of the total streams which a certain node transmits/receives, $K=K^F+K^B$ holds,
a signal model of said MIMO mesh network is formulated as follows,

$$\mathbf{y}_{i}^{F} = \mathbf{y}_{i(i-1)}^{F} + \mathbf{y}_{i(i+1)}^{F} + \mathbf{n}_{i}^{F}$$

$$\mathbf{y}_{i}^{B} = \mathbf{y}_{i(i-1)}^{B} + \mathbf{y}_{i(i+1)}^{B} + \mathbf{n}_{i}^{B}$$

where $\mathbf{y}_{i}^{F} \in C^{K^{F}}$ is a receiving signal vector of the forward link of the i-th node and $\mathbf{y}_{i}^{B} \in C^{K^{B}}$ is a receiving signal vector of the backward link of the i-th node,

$$\mathbf{y}_{i(i-1)}^{\mathrm{F}} = \left(\mathbf{W}_i^{\mathrm{rF}}\right)^H \mathbf{H}_{i(i-1)} \mathbf{W}_{(i-1)}^{\mathrm{tF}} \mathbf{s}_{(i-1)}^{\mathrm{F}} + \left(\mathbf{W}_i^{\mathrm{rF}}\right)^H \mathbf{H}_{i(i-1)} \mathbf{W}_{(i-1)}^{\mathrm{tB}} \mathbf{s}_{(i-1)}^{\mathrm{B}}$$

$$\mathbf{y}_{i(i+1)}^{\mathrm{F}} = \left(\mathbf{W}_i^{\mathrm{rF}}\right)^H \mathbf{H}_{i(i+1)} \mathbf{W}_{(i+1)}^{\mathrm{tF}} \mathbf{s}_{(i+1)}^{\mathrm{F}} + \left(\mathbf{W}_i^{\mathrm{rF}}\right)^H \mathbf{H}_{i(i+1)} \mathbf{W}_{(i+1)}^{\mathrm{tB}} \mathbf{s}_{(i+1)}^{\mathrm{B}}$$

$$\mathbf{y}_{i(i-1)}^{\mathrm{B}} = \left(\mathbf{W}_i^{\mathrm{rB}}\right)^H \mathbf{H}_{i(i-1)} \mathbf{W}_{(i-1)}^{\mathrm{tF}} \mathbf{s}_{(i-1)}^{\mathrm{F}} + \left(\mathbf{W}_i^{\mathrm{rB}}\right)^H \mathbf{H}_{i(i-1)} \mathbf{W}_{(i-1)}^{\mathrm{tB}} \mathbf{s}_{(i-1)}^{\mathrm{B}}$$

$$\mathbf{y}_{i(i+1)}^{\mathrm{B}} = \left(\mathbf{W}_i^{\mathrm{rB}}\right)^H \mathbf{H}_{i(i+1)} \mathbf{W}_{(i+1)}^{\mathrm{tF}} \mathbf{s}_{(i+1)}^{\mathrm{F}} + \left(\mathbf{W}_i^{\mathrm{rB}}\right)^H \mathbf{H}_{i(i+1)} \mathbf{W}_{(i+1)}^{\mathrm{tB}} \mathbf{s}_{(i+1)}^{\mathrm{B}}$$

where $[\cdot]^H$ represents a complex conjugate transposed matrix of $[\cdot]$, $\mathbf{s}_j^{\mathrm{F}} \in C^{K^{\mathrm{F}}}$ and $\mathbf{s}_j^{\mathrm{B}} \in C^{K^{\mathrm{B}}}$ are transmitting

signal vectors for the forward link and the backward link of the j-th node, $\mathbf{H}_{ij} \in C^{M \times M}$ is a channel matrix from the j-th node to the i-th node, $\mathbf{W}_j^{\mathrm{tF}} \in C^{M \times K^{\mathrm{F}}}$ and $\mathbf{W}_j^{\mathrm{tB}} \in C^{M \times K^{\mathrm{B}}}$ are transmitting weight matrices for the forward link and the backward link of the j-th node, $\mathbf{W}_i^{\mathrm{rF}} \in C^{M \times K^{\mathrm{F}}}$ and $\mathbf{W}_i^{\mathrm{rB}} \in C^{M \times K^{\mathrm{B}}}$ are

receiving weight matrices for the forward link and the backward link of the i-th node, $\mathbf{n}_i^{\mathrm{F}} \in C^{K^{\mathrm{F}}}$ and

$\mathbf{n}_i^{\mathrm{B}} \in C^{K^{\mathrm{B}}}$ are equivalent additive noise vectors of the forward link and the backward link that are received in the i-th node.

**16.** The MIMO mesh network according to Claim 15, wherein
said MIMO mesh network uses the block ZF algorithm that is a linear scheme,
a MIMO multiplexing transmission is performed in every link after avoiding the interferences to the other links by
the linear interference cancellation based on the block ZF algorithm, each transmitting weight matrix and each
receiving weight matrix at that time are computed based on the following Expressions,

$$\mathbf{W}_j^{\mathrm{tF}} = \widetilde{\mathbf{W}}_j^{\mathrm{tF}} \widetilde{\widetilde{\mathbf{W}}}_j^{\mathrm{tF}}$$

$$\mathbf{W}_j^{\mathrm{tB}} = \widetilde{\mathbf{W}}_j^{\mathrm{tB}} \widetilde{\widetilde{\mathbf{W}}}_j^{\mathrm{tB}}$$

$$\mathbf{W}_i^{\mathrm{rF}} = \widetilde{\mathbf{W}}_i^{\mathrm{rF}} \widetilde{\widetilde{\mathbf{W}}}_i^{\mathrm{rF}}$$

$$\mathbf{W}_i^{\mathrm{rB}} = \widetilde{\mathbf{W}}_i^{\mathrm{rB}} \widetilde{\widetilde{\mathbf{W}}}_i^{\mathrm{rB}}$$

where $\mathbf{W}_j^{\mathrm{tF}}$ and $\mathbf{W}_j^{\mathrm{tB}}$ are transmitting weight matrices for the forward link and the backward link of the j-th node, $\mathbf{W}_i^{\mathrm{rF}}$ and $\mathbf{W}_i^{\mathrm{rB}}$ are receiving weight matrices for the forward link and the backward link of the i-th node, $\widetilde{\mathbf{W}}_j^{\mathrm{tF}} \in C^{M \times (M-K)}$ and $\widetilde{\mathbf{W}}_j^{\mathrm{tB}} \in C^{M \times (M-K^{\mathrm{F}})}$ are block ZF transmitting weight matrices for the forward link and the backward link of the j-th node, $\widetilde{\widetilde{\mathbf{W}}}_j^{\mathrm{tF}} \in C^{(M-K) \times K^{\mathrm{F}}}$ and $\widetilde{\widetilde{\mathbf{W}}}_j^{\mathrm{tB}} \in C^{(M-K^{\mathrm{F}}) \times K^{\mathrm{B}}}$ are MIMO transmitting weight matrices for the forward link and the backward link of the j-th node that avoid the interferences to the other links by the block ZF algorithm, $\widetilde{\mathbf{W}}_i^{\mathrm{rF}} \in C^{M \times (M-K^{\mathrm{B}})}$ and $\widetilde{\mathbf{W}}_i^{\mathrm{rB}} \in C^{M \times (M-K)}$ are block ZF receiving weight matrices for the forward link and the backward link of the i-th node, $\widetilde{\widetilde{\mathbf{W}}}_i^{\mathrm{rF}} \in C^{(M-K^{\mathrm{B}}) \times K^{\mathrm{F}}}$ and $\widetilde{\widetilde{\mathbf{W}}}_i^{\mathrm{rB}} \in C^{(M-K) \times K^{\mathrm{B}}}$ are MIMO receiving weight matrices for the forward link and the backward link of the i-th node that avoid the interferences from the other links by the block ZF algorithm.

17. The MIMO mesh network according to Claim 16, wherein
the transmitting weight and the receiving weight are computed in order from the first node to the last node,
when attention is focused on the i-th receiving node, a transmitting weight matrix $\mathbf{W}_{(i-1)}^{\mathrm{tB}} \in C^{M \times K^{\mathrm{B}}}$ for the backward link of the (i-1)-th transmitting node is known, a block ZF transmitting weight matrix $\widetilde{\mathbf{W}}_{(i-1)}^{\mathrm{tF}} \in C^{M \times (M-K)}$ for the forward link of the (i-1)-th transmitting node is known,
as shown in the following Expressions, the i-th receiving node learns equivalent transmitting channel matrices $\widetilde{\mathbf{H}}_{i(i-1)}^{\mathrm{tF}}$ and $\mathbf{H}_{i(i-1)}^{\mathrm{tB}}$ by using training signals that are transmitted from the (i-1)-th transmitting node through transmitting weight matrices

$$\mathbf{W}_{(i-1)}^{\mathrm{tB}} \in C^{M \times K^{\mathrm{B}}} \quad \text{and} \quad \widetilde{\mathbf{W}}_{(i-1)}^{\mathrm{tF}} \in C^{M \times (M-K)},$$

$$\widetilde{\mathbf{H}}_{i(i-1)}^{\mathrm{tF}} = \mathbf{H}_{i(i-1)} \widetilde{\mathbf{W}}_{(i-1)}^{\mathrm{tF}} \in C^{M \times (M-K)}$$

$$\mathbf{H}_{i(i-1)}^{\mathrm{tB}} = \mathbf{H}_{i(i-1)} \mathbf{W}_{(i-1)}^{\mathrm{tB}} \in C^{M \times K^{\mathrm{B}}}$$

the block ZF receiving weight matrices $\widetilde{\mathbf{W}}_i^{\mathrm{rF}}$ and $\widetilde{\mathbf{W}}_i^{\mathrm{rB}}$ for the forward link and the backward link of the i-th receiving node, are computed based on the following Expressions by using the learned $\widetilde{\mathbf{H}}_{i(i-1)}^{\mathrm{tF}}$ and $\mathbf{H}_{i(i-1)}^{\mathrm{tB}}$,

$$\widetilde{\mathbf{W}}_i^{\mathrm{rF}} = \left[\mathbf{H}_{i(i-1)}^{\mathrm{tB}}\right]^{\perp} \in C^{M\times(M-K^{\mathrm{B}})}$$

$$\widetilde{\mathbf{W}}_i^{\mathrm{rB}} = \left[\mathbf{H}_{i(i-1)}^{\mathrm{tF}}, \mathbf{H}_{i(i-1)}^{\mathrm{tB}}\right]^{\perp} \in C^{M\times(M-K)}$$

where $[\cdot]^{\perp}$ is a basis matrix of the orthonormal complementary space of $[\cdot]$, $\mathbf{H}_{i(i-1)}^{\mathrm{tF}}$ is computed based on the following Expression,

$$\mathbf{H}_{i(i-1)}^{\mathrm{tF}} = \widetilde{\mathbf{H}}_{i(i-1)}^{\mathrm{tF}} \widetilde{\widetilde{\mathbf{W}}}_{(i-1)}^{\mathrm{tF}} \in C^{M\times K^{\mathrm{F}}}$$

in this time, as shown in the following Expressions, a forward link with an equivalent channel matrix $\widetilde{\mathbf{H}}_{i(i-1)}^{\mathrm{FF}}$ that avoids the interferences from different links by the block ZF, is formed between the (i-1)-th transmitting node and the i-th receiving node,

$$\mathbf{y}_{i(i-1)}^{\mathrm{F}} = \left(\widetilde{\widetilde{\mathbf{W}}}_i^{\mathrm{rF}}\right)^{H} \widetilde{\mathbf{H}}_{i(i-1)}^{\mathrm{FF}} \widetilde{\widetilde{\mathbf{W}}}_{(i-1)}^{\mathrm{tF}} \mathbf{s}_{(i-1)}^{\mathrm{F}}$$

$$\mathbf{y}_{i(i-1)}^{\mathrm{B}} = \mathbf{O}$$

$$\widetilde{\mathbf{H}}_{i(i-1)}^{\mathrm{FF}} = \left(\widetilde{\mathbf{W}}_i^{\mathrm{rF}}\right)^{H} \mathbf{H}_{i(i-1)} \widetilde{\mathbf{W}}_{(i-1)}^{\mathrm{tF}} \in C^{(M-K^{\mathrm{B}})\times(M-K)}$$

for the equivalent channel matrix $\widetilde{\mathbf{H}}_{i(i-1)}^{\mathrm{FF}}$, it is possible to apply arbitrary MIMO transmission scheme.

**18.** The MIMO mesh network according to Claim 17, wherein
in the case that the open-loop transmission scheme is used as a MIMO transmission scheme and the ZF algorithm is used in the receiving side, the (i-1)-th transmitting node performs the multiplexing transmission of $K^{\mathrm{F}}$ streams by

using arbitrary $K^{\mathrm{F}}$ column vectors of the block ZF transmitting weight matrix $\widetilde{\mathbf{W}}_{(i-1)}^{\mathrm{tF}}$ of order (M-K), when the leading $K^F$ column vectors of $\widetilde{\mathbf{W}}_{(i-1)}^{tF}$ is used, the following Expression holds,

$$\widetilde{\widetilde{\mathbf{W}}}_{(i-1)}^{tF} = \mathbf{I}_{(M-K)}[1:K^F] \in C^{(M-K) \times K^F}$$

where $\widetilde{\widetilde{\mathbf{W}}}_{(i-1)}^{tF}$ is a selection matrix of the orthonormal basis, $\mathbf{I}_{(M-K)}[1:K^F]$ is the first column - the $(K^F)$-th column of the identity matrix of order (M-K),
the i-th receiving node performs the separation of the received $K^F$ streams,
in this time, a transmitting weight matrix for the forward link of the (i-1) -th transmitting node is computed based on the following Expression,

$$\mathbf{W}_{(i-1)}^{tF} = \widetilde{\mathbf{W}}_{(i-1)}^{tF} \widetilde{\widetilde{\mathbf{W}}}_{(i-1)}^{tF}$$

in the case of using the ZF algorithm as the receiving scheme of the open-loop transmission scheme, by using the equivalent transmitting channel matrix $\widetilde{\widetilde{\mathbf{H}}}_{i(i-1)}^{tFF}$ represented by

$$\widetilde{\widetilde{\mathbf{H}}}_{i(i-1)}^{tFF} = \widetilde{\mathbf{H}}_{i(i-1)}^{FF} \widetilde{\widetilde{\mathbf{W}}}_{(i-1)}^{tF} \in C^{(M-K^B) \times K^F}$$ , the MIMO receiving weight matrix $\widetilde{\widetilde{\mathbf{W}}}_{i \cdot}^{rF}$ for the forward link of the i-th receiving node, is computed based on the following Expression,

$$\widetilde{\widetilde{\mathbf{W}}}_i^{rF} = \left( \left[ \widetilde{\widetilde{\mathbf{H}}}_{i(i-1)}^{tFF} \right]^{-1} \right)^H \in C^{(M-K^B) \times K^F}$$

where $[\cdot]^{-1}$ is a generalized inverse matrix of $[\cdot]$, $[\cdot]^H$ is a complex conjugate transposed matrix of $[\cdot]$,
in this time, the receiving weight matrix for the forward link of the i-th receiving node is computed based on

$$\mathbf{W}_i^{rF} = \widetilde{\mathbf{W}}_i^{rF} \widetilde{\widetilde{\mathbf{W}}}_i^{rF} \ .$$

**19.** The MIMO mesh network according to Claim 17 or Claim 18, wherein

whenattentionisfocusedonthe (i+1)-th transmitting node, a receiving weight matrix $\mathbf{W}_i^{rF} \in C^{M \times K^F}$ for the forward link of the i-th receiving node is known, a block ZF receiving weight matrix $\widetilde{\mathbf{W}}_i^{rB} \in C^{M \times (M-K)}$ for the backward link of the i-th receiving node is known,

the (i+1)-th transmitting node utilizes the channel reciprocity $\left( \mathbf{H}_{i(i+1)}^{T} = \mathbf{H}_{(i+1)i} \right)$ , and when the i-th receiving node is in the transmitting mode, the (i+1)-th transmitting node learns equivalent receiving channel matrices $\mathbf{H}_{i(i+1)}^{rF}$ and $\widetilde{\mathbf{H}}_{i(i+1)}^{rB}$ as the following Expressions by transmitting a training signal through a conjugate receiving weight of the i-th receiving node, or the (i+1) -th transmitting node transmits the training signal, and the i-th receiving

node learns $\mathbf{H}_{i(i+1)}^{\mathrm{rF}}$ and $\widetilde{\mathbf{H}}_{i(i+1)}^{\mathrm{rB}}$ as the following Expressions and then feeds back the learned $\mathbf{H}_{i(i+1)}^{\mathrm{rF}}$ and $\widetilde{\mathbf{H}}_{i(i+1)}^{\mathrm{rB}}$ to the (i+1)-th transmitting node,

$$\mathbf{H}_{i(i+1)}^{\mathrm{rF}} = \left(\mathbf{H}_{i(i+1)}\right)^{T}\left(\mathbf{W}_{i}^{\mathrm{rF}}\right)^{*} \in C^{M \times K^{\mathrm{F}}}$$

$$\widetilde{\mathbf{H}}_{i(i+1)}^{\mathrm{rB}} = \left(\mathbf{H}_{i(i+1)}\right)^{T}\left(\widetilde{\mathbf{W}}_{i}^{\mathrm{rB}}\right)^{*} \in C^{M \times (M-K)}$$

where [·]* is a complex conjugate matrix of [·], [·]$^{T}$ is a transposed matrix of [·],

by using the learned $\mathbf{H}_{i(i+1)}^{\mathrm{rF}}$ and $\widetilde{\mathbf{H}}_{i(i+1)}^{\mathrm{rB}}$ , the block ZF transmitting weight matrices $\widetilde{\mathbf{W}}_{(i+1)}^{\mathrm{tF}}$ and $\widetilde{\mathbf{W}}_{(i+1)}^{\mathrm{tB}}$ for the forward link and the backward link of the (i+1) transmitting node, are computed based on the following Expressions,

$$\widetilde{\mathbf{W}}_{(i+1)}^{\mathrm{tF}} = \left[\left(\mathbf{H}_{i(i+1)}^{\mathrm{rF}}\right)^{*}, \left(\mathbf{H}_{i(i+1)}^{\mathrm{rB}}\right)^{*}\right]^{\perp} \in C^{M \times (M-K)}$$

$$\widetilde{\mathbf{W}}_{(i+1)}^{\mathrm{tB}} = \left[\left(\mathbf{H}_{i(i+1)}^{\mathrm{rF}}\right)^{*}\right]^{\perp} \in C^{M \times (M-K^{\mathrm{F}})}$$

where [·]$^{\perp}$ is a basis matrix of the orthonormal complementary space of [·], $\mathbf{H}_{i(i+1)}^{\mathrm{rB}}$ is computed based on the following Expression,

$$\mathbf{H}_{i(i+1)}^{\mathrm{rB}} = \widetilde{\mathbf{H}}_{i(i+1)}^{\mathrm{rB}}\left(\widetilde{\widetilde{\mathbf{W}}}_{i}^{\mathrm{rB}}\right)^{*} \in C^{M \times K^{\mathrm{B}}}$$

in this time, as shown in the following Expressions, a backward link with an equivalent channel matrix $\widetilde{\mathbf{H}}_{i(i+1)}^{\mathrm{BB}}$ that avoids the interferences from different links by the block ZF, is formed between the (i+1)-th transmitting node and the i-th receiving node,

$$\mathbf{y}_{i(i+1)}^{\mathrm{F}} = \mathbf{O}$$

$$\mathbf{y}_{i(i+1)}^{\mathrm{B}} = \left(\widetilde{\widetilde{\mathbf{W}}}_{i}^{\mathrm{rB}}\right)^{H}\widetilde{\mathbf{H}}_{i(i+1)}^{\mathrm{BB}}\widetilde{\widetilde{\mathbf{W}}}_{(i+1)}^{\mathrm{tB}}\mathbf{S}_{(i+1)}^{\mathrm{B}}$$

$$\widetilde{\mathbf{H}}_{i(i+1)}^{\mathrm{BB}} = \left( \widetilde{\mathbf{W}}_i^{\mathrm{rB}} \right)^H \mathbf{H}_{i(i+1)} \widetilde{\mathbf{W}}_{(i+1)}^{\mathrm{tB}} \in C^{(M-K)\times(M-K^{\mathrm{F}})}$$

for the equivalent channel matrix $\widetilde{\mathbf{H}}_{i(i+1)}^{\mathrm{BB}}$, it is possible to apply arbitrary MIMO transmission scheme.

**20.** The MIMO mesh network according to Claim 19, wherein
in the case that the open-loop transmission scheme is used as a MIMO transmission scheme and the ZF algorithm is used in the transmitting side, the (i+1) -th transmitting node performs the multiplexing transmission of $K^{\mathrm{B}}$ streams by the weight that performs the stream separation in advance, in this time, the i-th receiving node receives $K^{\mathrm{B}}$ streams by using arbitrary $K^{\mathrm{B}}$ column vectors of the block ZF receiving weight matrix $\widetilde{\mathbf{W}}_i^{\mathrm{rB}}$ of order (M-K), when the leading $K^{\mathrm{B}}$ column vectors of $\widetilde{\mathbf{W}}_i^{\mathrm{rB}}$ is used, the following Expression holds,

$$\widetilde{\widetilde{\mathbf{W}}}_i^{\mathrm{rB}} = \mathbf{I}_{(M-K)}[1:K^{\mathrm{B}}] \in C^{(M-K)\times K^{\mathrm{B}}}$$

where $\widetilde{\widetilde{\mathbf{W}}}_i^{\mathrm{rB}}$ is a selection matrix of the orthonormal basis, $\mathbf{I}_{(M-K)}[1:K^{\mathrm{B}}]$ is the first column - the $(K^{\mathrm{B}})$-th column of the identity matrix of order (M-K),
in this time, a receiving weight matrix for the backward link of the i-th receiving node is computed based on the following Expression,

$$\mathbf{W}_i^{\mathrm{rB}} = \widetilde{\mathbf{W}}_i^{\mathrm{rB}} \widetilde{\widetilde{\mathbf{W}}}_i^{\mathrm{rB}}$$

in the case of using the ZF algorithm as the transmitting scheme of the open-loop transmission scheme, by using the equivalent receiving channel matrix $\widetilde{\widetilde{\mathbf{H}}}_{i(i+1)}^{\mathrm{rBB}}$ represented by

$$\widetilde{\widetilde{\mathbf{H}}}_{i(i+1)}^{\mathrm{rBB}} = \left( \widetilde{\mathbf{H}}_{i(i+1)}^{\mathrm{BB}} \right)^T \left( \widetilde{\widetilde{\mathbf{W}}}_i^{\mathrm{rB}} \right)^* \in C^{(M-K^{\mathrm{F}})\times K^{\mathrm{B}}}$$, the MIMO transmitting weight matrix $\widetilde{\widetilde{\mathbf{W}}}_{(i+1)}^{\mathrm{tB}}$ for the backward link of the (i+1)-th transmitting node, is computed based on the following Expression,

$$\widetilde{\widetilde{\mathbf{W}}}_{(i+1)}^{\mathrm{tB}} = \left[ \left( \widetilde{\widetilde{\mathbf{H}}}_{i(i+1)}^{\mathrm{rBB}} \right)^T \right]^{-1} \in C^{(M-K^{\mathrm{F}})\times K^{\mathrm{B}}}$$

where $[\cdot]^*$ is a complex conjugate matrix of $[\cdot]$, $[\cdot]^T$ is a transposed matrix of $[\cdot]$, $[\cdot]^{-1}$ is a generalized inverse matrix of $[\cdot]$, in this time, the transmitting weight matrix for the backward link of the (i+1) -th transmitting node is computed based

on $\mathbf{W}_{(i+1)}^{\mathrm{tB}} = \widetilde{\mathbf{W}}_{(i+1)}^{\mathrm{tB}} \widetilde{\widetilde{\mathbf{W}}}_{(i+1)}^{\mathrm{tB}}$.

**21.** The MIMO mesh network according to Claim 20, wherein
the receiving signal vector $\mathbf{y}_i^{\mathrm{F}}$ of the forward link of the i-th receiving node becomes the following Expression,

$$\mathbf{y}_i^{\mathrm{F}} = \mathbf{H}_{i(i-1)}^{\mathrm{eFF}}\mathbf{s}_{(i-1)}^{\mathrm{F}} + \mathbf{n}_i^{\mathrm{F}}$$

the receiving signal vector $\mathbf{y}_i^{\mathrm{B}}$ of the backward link of the i-th receiving node becomes the following Expression,

$$\mathbf{y}_i^{\mathrm{B}} = \mathbf{H}_{i(i+1)}^{\mathrm{eBB}}\mathbf{s}_{(i-1)}^{\mathrm{B}} + \mathbf{n}_i^{\mathrm{B}}$$

where $\mathbf{H}_{i(i-1)}^{\mathrm{eFF}}$ is a matrix whose diagonal elements are equivalent channel responses of $K^{\mathrm{F}}$ streams of the forward link between the (i-1)-th transmitting node and the i-th receiving node and is computed based on the following Expression,

$$\mathbf{H}_{i(i-1)}^{\mathrm{eFF}} = \left(\widetilde{\widetilde{\mathbf{W}}}_i^{\mathrm{rF}}\right)^H \mathbf{H}_{i(i-1)}^{\mathrm{FF}} \widetilde{\widetilde{\mathbf{W}}}_{(i-1)}^{\mathrm{tF}} \in C^{K^{\mathrm{F}} \times K^{\mathrm{F}}}$$

$\mathbf{H}_{i(i+1)}^{\mathrm{eBB}}$ is a matrix whose diagonal elements are equivalent channel responses of $K^{\mathrm{B}}$ streams of the backward link between the (i+1)-th transmitting node and the i-th receiving node and is computed based on

$$\mathbf{H}_{i(i+1)}^{\mathrm{eBB}} = \left(\widetilde{\widetilde{\mathbf{W}}}_i^{\mathrm{rB}}\right)^H \mathbf{H}_{i(i+1)}^{\mathrm{BB}} \widetilde{\widetilde{\mathbf{W}}}_{(i+1)}^{\mathrm{tB}} \in C^{K^{\mathrm{B}} \times K^{\mathrm{B}}} \quad .$$

**22.** The MIMO mesh network according to Claim 15, wherein
in addition to the block ZF algorithm, the transmitting side uses the block DPC algorithm and the receiving side uses the block SIC algorithm,
by a combination of the linear interference cancellation based on the block ZF algorithm and the nonlinear interference cancellation based on the block SIC algorithm/the block DPC algorithm, the MIMO multiplexing transmission is performed in each link after avoiding the interferences to the other links, each transmitting weight matrix and each receiving weight matrix at that time are computed by the following Expressions,

$$\mathbf{W}_j^{\mathrm{tF}} = \widetilde{\mathbf{W}}_j^{\mathrm{tF}}\widetilde{\widetilde{\mathbf{W}}}_j^{\mathrm{tF}} \in C^{M \times K^{\mathrm{F}}}$$

$$\mathbf{W}_j^{\mathrm{tB}} = \widetilde{\mathbf{W}}_j^{\mathrm{tB}}\widetilde{\widetilde{\mathbf{W}}}_j^{\mathrm{tB}} \in C^{M \times K^{\mathrm{B}}}$$

$$\mathbf{W}_i^{\mathrm{rF}} = \widetilde{\mathbf{W}}_i^{\mathrm{rF}}\widetilde{\widetilde{\mathbf{W}}}_i^{\mathrm{rF}} \in C^{M \times K^{\mathrm{F}}}$$

$$\mathbf{W}_i^{\mathrm{rB}} = \widetilde{\mathbf{W}}_i^{\mathrm{rB}}\widetilde{\widetilde{\mathbf{W}}}_i^{\mathrm{rB}} \in C^{M \times K^{\mathrm{B}}}$$

where the dimensions of each weight matrix become

$$\widetilde{\mathbf{W}}_j^{\text{tF}} \in C^{M\times(M-K)} \ , \ \widetilde{\mathbf{W}}_j^{\text{tB}} \in C^{M\times M} \ , \ \widetilde{\widetilde{\mathbf{W}}}_j^{\text{tF}} \in C^{(M-K)\times K^{\text{F}}} \ , \ \widetilde{\widetilde{\mathbf{W}}}_j^{\text{tB}} \in C^{M\times K^{\text{B}}} \ ,$$

$$\widetilde{\mathbf{W}}_i^{\text{rF}} \in C^{M\times M} \ , \ \widetilde{\mathbf{W}}_i^{\text{rB}} \in C^{M\times(M-K)} \ , \ \widetilde{\widetilde{\mathbf{W}}}_i^{\text{rF}} \in C^{M\times K^{\text{F}}} \quad \text{and} \quad \widetilde{\widetilde{\mathbf{W}}}_i^{\text{rB}} \in C^{(M-K)\times K^{\text{B}}} \ ,$$

$\mathbf{W}_j^{\text{tF}}$ and $\mathbf{W}_j^{\text{tB}}$ are transmitting weight matrices for the forward link and the backward link of the j-th node,

$\mathbf{W}_i^{\text{rF}}$ and $\mathbf{W}_i^{\text{rB}}$ are receiving weight matrices for the forward link and the backward link of the i-th node,

$\widetilde{\mathbf{W}}_j^{\text{tF}}$ and $\widetilde{\mathbf{W}}_j^{\text{tB}}$ are the block ZF transmitting weight matrices for the forward link and the backward link of the j-th node, $\widetilde{\widetilde{\mathbf{W}}}_j^{\text{tF}}$ and $\widetilde{\widetilde{\mathbf{W}}}_j^{\text{tB}}$ are the MIMO transmitting weight matrices for the forward link and the backward link of the j-th node that avoid the interferences to the other links by the block ZF, $\widetilde{\mathbf{W}}_i^{\text{rF}}$ and $\widetilde{\mathbf{W}}_i^{\text{rB}}$ are the block ZF receiving weight matrices for the forward link and the backward link of the i-th node, $\widetilde{\widetilde{\mathbf{W}}}_i^{\text{rF}}$ and $\widetilde{\widetilde{\mathbf{W}}}_i^{\text{rB}}$ are

the MIMO receiving weight matrices for the forward link and the backward link of the i-th node that avoid the interferences from the other links by the block ZF.

23. The MIMO mesh network according to Claim 22, wherein
the transmitting weight and the receiving weight are computed in order from the first node to the last node,

when attention is focused on the i-th receiving node, a transmitting weight matrix $\mathbf{W}_{(i-1)}^{\text{tB}} \in C^{M\times K^{\text{B}}}$ for the

backward link of the (i-1)-th transmitting node is known, a block ZF transmitting weight matrix

$\widetilde{\mathbf{W}}_{(i-1)}^{\text{tF}} \in C^{M\times(M-K)}$ for the forward link of the (i-1)-th transmitting node is known,

as shown in the following Expressions, the i-th receiving node learns equivalent transmitting channel matrices

$\widetilde{\mathbf{H}}_{i(i-1)}^{\text{tF}} \in C^{M\times(M-K)}$ and $\mathbf{H}_{i(i-1)}^{\text{tB}} \in C^{M\times K^{B}}$ by using training signals that are transmitted from the (i-

1)-th transmitting node through transmitting weight matrices $\mathbf{W}_{(i-1)}^{\text{tB}} \in C^{M\times K^{B}}$ and

$$\widetilde{\mathbf{W}}_{(i-1)}^{\text{tF}} \in C^{M\times(M-K)} \ ,$$

$$\widetilde{\mathbf{H}}_{i(i-1)}^{\text{tF}} = \mathbf{H}_{i(i-1)}\widetilde{\mathbf{W}}_{(i-1)}^{\text{tF}} \in C^{M\times(M-K)}$$

$$\mathbf{H}_{i(i-1)}^{\text{tB}} = \mathbf{H}_{i(i-1)}\mathbf{W}_{(i-1)}^{\text{tB}} \in C^{M\times K^{B}}$$

the block ZF receiving weight matrices $\widetilde{\mathbf{W}}_i^{rF}$ and $\widetilde{\mathbf{W}}_i^{rB}$ for the forward link and the backward link of the i-th receiving node, are computed based on the following Expressions by using the learned $\widetilde{\mathbf{H}}_{i(i-1)}^{tF}$ and $\mathbf{H}_{i(i-1)}^{tB}$ ,

$$\widetilde{\mathbf{W}}_i^{rF} = \mathbf{I}_M \in C^{M \times M}$$

$$\widetilde{\mathbf{W}}_i^{rB} = \left[ \mathbf{H}_{i(i-1)}^{tF}, \mathbf{H}_{i(i-1)}^{tB} \right]^{\perp} \in C^{M \times (M-K)}$$

where $\mathbf{I}_M$ is the identity matrix of order M, $[\cdot]^{\perp}$ is a basis matrix of the orthonormal complementary space of $[\cdot]$, $\mathbf{H}_{i(i-1)}^{tF}$ is computed based on the following Expression,

$$\mathbf{H}_{i(i-1)}^{tF} = \widetilde{\mathbf{H}}_{i(i-1)}^{tF} \, \widetilde{\widetilde{\mathbf{W}}}_{(i-1)}^{tF} \in C^{M \times K^F}$$

in this time, the forward link of the i-th receiving node is regarded as a MIMO link with an equivalent channel matrix $\widetilde{\mathbf{H}}_{i(i-1)}^{FF}$ that is represented by the following Expression,

$$\widetilde{\mathbf{H}}_{i(i-1)}^{FF} = \left( \widetilde{\mathbf{W}}_i^{rF} \right)^H \mathbf{H}_{i(i-1)} \widetilde{\mathbf{W}}_{(i-1)}^{tF} \in C^{M \times (M-K)}$$

in this time, $\widetilde{\widetilde{\mathbf{W}}}_{(i-1)}^{tF} \in C^{(M-K) \times K^F}$ and $\widetilde{\widetilde{\mathbf{W}}}_i^{tF} \in C^{M \times K^F}$ are obtained as the MIMO transmitting weight matrix and the MIMO receiving weight matrix of the adopted MIMO transmission scheme,

when the block ZF receiving weight matrices $\widetilde{\mathbf{W}}_i^{rF}$ and $\widetilde{\mathbf{W}}_i^{rB}$ are given, the following Expressions hold,

$$\mathbf{y}_{i(i-1)}^F = \mathbf{H}_{i(i-1)}^{eFF} \mathbf{s}_{(i-1)}^F + \mathbf{H}_{i(i-1)}^{eFB} \mathbf{s}_{(i-1)}^B$$

$$\mathbf{y}_{i(i-1)}^B = \mathbf{O}$$

where $\mathbf{H}_{i(i-1)}^{eFF}$ is an equivalent channel matrix of the forward link from the (i-1)-th transmitting node to the i-th receiving node and is computed based on the following Expression,

$$\mathbf{H}_{i(i-1)}^{\mathrm{eFF}} = \left(\widetilde{\widetilde{\mathbf{W}}}_{i}^{\mathrm{rF}}\right)^{H} \widetilde{\mathbf{H}}_{i(i-1)}^{\mathrm{FF}} \widetilde{\widetilde{\mathbf{W}}}_{(i-1)}^{\mathrm{tF}} \in C^{K^{\mathrm{F}} \times K^{\mathrm{F}}}$$

$\mathbf{H}_{i(i-1)}^{\mathrm{eFB}}$ is an equivalent channel matrix that corresponds to the interferences from the backward link of the (i-1)-th transmitting node to the forward link of the i-th receiving node and is computed based on the following Expression,

$$\mathbf{H}_{i(i-1)}^{\mathrm{eFB}} = \left(\widetilde{\widetilde{\mathbf{W}}}_{i}^{\mathrm{rF}}\right)^{H} \widetilde{\mathbf{H}}_{i(i-1)}^{\mathrm{FB}} \widetilde{\widetilde{\mathbf{W}}}_{(i-1)}^{\mathrm{tB}} \in C^{K^{\mathrm{F}} \times K^{\mathrm{B}}}$$

$\widetilde{\mathbf{H}}_{i(i-1)}^{\mathrm{FB}}$ is an equivalent channel matrix that corresponds to the interference signal from the backward link of the (i-1) -th transmitting node formed by the block ZF to the forward link of the i-th receiving node and is computed based on the following Expression,

$$\widetilde{\mathbf{H}}_{i(i-1)}^{\mathrm{FB}} = \left(\widetilde{\mathbf{W}}_{i}^{\mathrm{rF}}\right)^{H} \mathbf{H}_{i(i-1)} \widetilde{\mathbf{W}}_{(i-1)}^{\mathrm{tB}} \in C^{M \times M}$$

in this regard, both $\mathbf{S}_{(i-1)}^{\mathrm{F}}$ and $\mathbf{S}_{(i-1)}^{\mathrm{B}}$ are known, the (i-1)-th transmitting node utilizes the channel reciprocity $\left(\mathbf{H}_{i(i-1)}^{T} = \mathbf{H}_{(i-1)i}\right)$, and when the i-th receiving node is in the transmitting mode, the (i-1)-th transmitting node learns equivalent channel matrices $\mathbf{H}_{i(i-1)}^{\mathrm{eFF}}$ and $\mathbf{H}_{i(i-1)}^{\mathrm{eFB}}$ by transmitting a training signal $\left(\mathbf{W}_{i}^{\mathrm{rF}}\right)^{*}$, or the (i-1)-th transmitting node transmits the training signal through $\mathbf{W}_{(i-1)}^{\mathrm{tF}}$ and $\mathbf{W}_{(i-1)}^{\mathrm{tB}}$, the i-th receiving node learns $\mathbf{H}_{i(i-1)}^{\mathrm{eFF}}$ and $\mathbf{H}_{i(i-1)}^{\mathrm{eFB}}$ then feeds back the learned $\mathbf{H}_{i(i-1)}^{\mathrm{eFF}}$ and $\mathbf{H}_{i(i-1)}^{\mathrm{eFB}}$ to the (i-1)-th transmitting node,

the transmitting signal $\mathbf{S}_{(i-1)}^{\mathrm{FDPC}}$ of the forward link of the (i-1)-th transmitting node is represented by the following Expression,

$$\mathbf{S}_{(i-1)}^{\mathrm{FDPC}} = \mathbf{S}_{(i-1)}^{\mathrm{F}} - \left[\mathbf{H}_{i(i-1)}^{\mathrm{eFF}}\right]^{-1} \mathbf{H}_{i(i-1)}^{\mathrm{eFB}} \mathbf{S}_{(i-1)}^{\mathrm{B}}$$

in this time, the receiving signal $\mathbf{y}_{i(i-1)}^{\mathrm{FDPC}}$ of the forward link of the i-th receiving node is represented by

$$\mathbf{y}_{i(i-1)}^{\mathrm{FDPC}} = \mathbf{H}_{i(i-1)}^{\mathrm{eFF}} \mathbf{S}_{(i-1)}^{\mathrm{FDPC}} + \mathbf{H}_{i(i-1)}^{\mathrm{eFB}} \mathbf{S}_{(i-1)}^{\mathrm{B}} = \mathbf{H}_{i(i-1)}^{\mathrm{eFF}} \mathbf{S}_{(i-1)}^{\mathrm{F}} .$$

**24.** The MIMO mesh network according to Claim 23, wherein

when attention is focused on the (i+1)-th transmitting node, a receiving weight matrix $\mathbf{W}_i^{\mathrm{rF}} \in C^{M \times K^{\mathrm{F}}}$ for the

forward link of the i-th receiving node is known, a block ZF receiving weight matrix $\widetilde{\mathbf{W}}_i^{\mathrm{rB}} \in C^{M \times (M-K)}$ for

the backward link of the i-th receiving node is known,

the (i+1)-th transmitting node utilizes the channel reciprocity $\left( \mathbf{H}_{i(i+1)}^{T} = \mathbf{H}_{(i+1)i} \right)$, and when the i-th receiving node is in the transmitting mode, the (i+1)-th transmitting node learns equivalent receiving channel matrices

$\mathbf{H}_{i(i+1)}^{\mathrm{rF}} \in C^{M \times K^{\mathrm{F}}}$ and $\widetilde{\mathbf{H}}_{i(i+1)}^{\mathrm{rB}} \in C^{M \times (M-K)}$ as the following Expressions by transmitting a training signal through a conjugate receiving weight of the i-th receiving node, or the (i+1)-th transmitting node transmits the training signal, and the i-th receiving node learns $\mathbf{H}_{i(i+1)}^{\mathrm{rF}}$ and $\widetilde{\mathbf{H}}_{i(i+1)}^{\mathrm{rB}}$ as the following Expressions and then feeds back the learned $\mathbf{H}_{i(i+1)}^{\mathrm{rF}}$ and $\widetilde{\mathbf{H}}_{i(i+1)}^{\mathrm{rB}}$ to the (i+1)-th transmitting node,

$$\mathbf{H}_{i(i+1)}^{\mathrm{rF}} = \left( \mathbf{H}_{i(i+1)} \right)^{T} \left( \mathbf{W}_i^{\mathrm{rF}} \right)^{*} \in C^{M \times K^{\mathrm{F}}}$$

$$\widetilde{\mathbf{H}}_{i(i+1)}^{\mathrm{rB}} = \left( \mathbf{H}_{i(i+1)} \right)^{T} \left( \widetilde{\mathbf{W}}_i^{\mathrm{rB}} \right)^{*} \in C^{M \times (M-K)}$$

where $[\cdot]^*$ is a complex conjugate matrix of $[\cdot]$, $[\cdot]^\mathrm{T}$ is a transposed matrix of $[\cdot]$,

by using the learned $\mathbf{H}_{i(i+1)}^{\mathrm{rF}}$ and $\widetilde{\mathbf{H}}_{i(i+1)}^{\mathrm{rB}}$, the block ZF transmitting weight matrices $\widetilde{\mathbf{W}}_{(i+1)}^{\mathrm{tF}}$ and

$\widetilde{\mathbf{W}}_{(i+1)}^{\mathrm{tB}}$ for the forward link and the backward link of the (i+1) transmitting node, are computed based on the

following Expressions,

$$\widetilde{\mathbf{W}}_{(i+1)}^{\mathrm{tF}} = \left[ \left( \mathbf{H}_{i(i+1)}^{\mathrm{rF}} \right)^{*}, \left( \mathbf{H}_{i(i+1)}^{\mathrm{rB}} \right)^{*} \right]^{\perp} \in C^{M \times (M-K)}$$

$$\widetilde{\mathbf{W}}_{(i+1)}^{\mathrm{tB}} = \mathbf{I}_M \in C^{M \times M}$$

where $\mathbf{I}_M$ is the identity matrix of order M, $[\cdot]^\perp$ is a basis matrix of the orthonormal complementary space of $[\cdot]$,

$\mathbf{H}_{i(i+1)}^{\mathrm{rB}}$ is computed based on the following Expression,

$$\mathbf{H}_{i(i+1)}^{\mathrm{rB}} = \widetilde{\mathbf{H}}_{i(i+1)}^{\mathrm{rB}} \left( \widetilde{\widetilde{\mathbf{W}}}_i^{\mathrm{rB}} \right)^{*} \in C^{M \times K^{\mathrm{B}}}$$

in this time, the backward link of the (i+1)-th transmitting node is regarded as a MIMO link with an equivalent channel matrix $\widetilde{\mathbf{H}}_{i(i+1)}^{\mathrm{BB}}$ that is represented by the following Expression,

$$\widetilde{\mathbf{H}}_{i(i+1)}^{\mathrm{BB}} = \left(\widetilde{\mathbf{W}}_{i}^{\mathrm{rB}}\right)^{H} \mathbf{H}_{i(i+1)} \widetilde{\mathbf{W}}_{(i+1)}^{\mathrm{tB}} \in C^{(M-K) \times M}$$

in this time, $\widetilde{\widetilde{\mathbf{W}}}_{i}^{\mathrm{rB}} \in C^{(M-K) \times K^{\mathrm{B}}}$ and $\widetilde{\widetilde{\mathbf{W}}}_{(i+1)}^{\mathrm{tB}} \in C^{M \times K^{\mathrm{B}}}$ are obtained as the MIMO transmitting weight matrix and the MIMO receiving weight matrix of the adopted MIMO transmission scheme,

when the block ZF transmitting weight matrices $\widetilde{\mathbf{W}}_{(i+1)}^{\mathrm{tF}}$ and $\widetilde{\mathbf{W}}_{(i+1)}^{\mathrm{tB}}$ are given, the following Expressions hold,

$$\mathbf{y}_{i(i+1)}^{\mathrm{F}} = \mathbf{H}_{i(i+1)}^{\mathrm{eFB}} \mathbf{s}_{(i+1)}^{\mathrm{B}}$$

$$\mathbf{y}_{i(i+1)}^{\mathrm{B}} = \mathbf{H}_{i(i+1)}^{\mathrm{eBB}} \mathbf{s}_{(i+1)}^{\mathrm{B}}$$

where $\mathbf{H}_{i(i+1)}^{\mathrm{eBB}}$ is an equivalent channel matrix of the backward link from the (i+1)-th transmitting node to the i-th receiving node and is computed based on the following Expression,

$$\mathbf{H}_{i(i+1)}^{\mathrm{eBB}} = \left(\widetilde{\widetilde{\mathbf{W}}}_{i}^{\mathrm{rB}}\right)^{H} \widetilde{\mathbf{H}}_{i(i+1)}^{\mathrm{BB}} \widetilde{\widetilde{\mathbf{W}}}_{(i+1)}^{\mathrm{tB}} \in C^{K^{\mathrm{B}} \times K^{\mathrm{B}}}$$

$\mathbf{H}_{i(i+1)}^{\mathrm{eFB}}$ is an equivalent channel matrix that corresponds to the interferences from the backward link of the (i+1)-th transmitting node to the forward link of the i-th receiving node and is computed based on the following Expression,

$$\mathbf{H}_{i(i+1)}^{\mathrm{eFB}} = \left(\widetilde{\widetilde{\mathbf{W}}}_{i}^{\mathrm{rF}}\right)^{H} \widetilde{\mathbf{H}}_{i(i+1)}^{\mathrm{FB}} \widetilde{\widetilde{\mathbf{W}}}_{(i+1)}^{\mathrm{tB}} \in C^{K^{\mathrm{F}} \times K^{\mathrm{B}}}$$

$\widetilde{\mathbf{H}}_{i(i+1)}^{\mathrm{FB}}$ is an equivalent channel matrix that corresponds to the interference signal from the backward link of the (i+1) -th transmitting node formed by the block ZF to the forward link of the i-th receiving node and is computed based on the following Expression,

$$\widetilde{\mathbf{H}}_{i(i+1)}^{\mathrm{FB}} = \left(\widetilde{\mathbf{W}}_{i}^{\mathrm{rF}}\right)^{H} \mathbf{H}_{i(i+1)} \widetilde{\mathbf{W}}_{(i+1)}^{\mathrm{tB}} \in C^{M \times M}$$

the i-th receiving node learns equivalent channel matrices $\mathbf{H}_{i(i+1)}^{\mathrm{eFF}}$ and $\mathbf{H}_{i(i+1)}^{\mathrm{eFB}}$ by using the training signal that is transmitted from the (i+1)-th transmitting node through the transmitting weight vector $\mathbf{W}_{(i+1)}^{\mathrm{tB}}$ ,

here, in the receiving signal vector $\mathbf{y}_{i}^{\mathrm{B}}$ of the backward link of the i-th receiving node, as shown in the following Expression, the desired signal vector $\mathbf{s}_{(i+1)}^{\mathrm{B}}$ is received without the interferences from the other links,

$$\mathbf{y}_{i}^{\mathrm{B}} = \mathbf{y}_{i(i-1)}^{\mathrm{B}} + \mathbf{y}_{i(i+1)}^{\mathrm{B}} + \mathbf{n}_{i}^{\mathrm{B}} = \mathbf{H}_{i(i+1)}^{\mathrm{eBB}}\mathbf{s}_{(i+1)}^{\mathrm{B}} + \mathbf{n}_{i}^{\mathrm{B}}$$

in this regard, the i-th receiving node learns equivalent channel matrices $\mathbf{H}_{i(i+1)}^{\mathrm{eBB}}$ and $\mathbf{H}_{i(i+1)}^{\mathrm{eFB}}$ by using the training signal that is transmitted from the (i+1)-th transmitting node through $\mathbf{W}_{(i+1)}^{\mathrm{tB}}$ ,

firstly the i-th receiving node detects $\mathbf{s}_{(i+1)}^{\mathrm{B}}$ depending on the adoptedMIMO transmission scheme, and then the i-th receiving node assumes that $\hat{\mathbf{s}}_{(i+1)}^{\mathrm{B}}$ is detected accurately and realizes the interference cancellation by subtracting the replica signal from the receiving signal vector $\mathbf{y}_{i}^{\mathrm{F}}$ of the forward link of the i-th receiving node as shown in the following Expression,

$$\mathbf{y}_{i}^{\mathrm{FSIC}} = \mathbf{y}_{i}^{\mathrm{F}} - \mathbf{H}_{i(i+1)}^{\mathrm{eFB}}\hat{\mathbf{s}}_{(i+1)}^{\mathrm{B}} = \mathbf{y}_{i(i-1)}^{\mathrm{FDPC}} + \mathbf{y}_{i(i+1)}^{\mathrm{F}} - \mathbf{H}_{i(i+1)}^{\mathrm{eFB}}\hat{\mathbf{s}}_{(i+1)}^{\mathrm{B}} + \mathbf{n}_{i}^{\mathrm{F}} = \mathbf{H}_{i(i-1)}^{\mathrm{eFF}}\mathbf{s}_{(i-1)}^{\mathrm{F}} + \mathbf{n}_{i}^{\mathrm{F}}$$

where $\mathbf{H}_{i(i-1)}^{\mathrm{eFF}}$ is an equivalent channel matrix of the forward link from the (i-1)-th transmitting node to the i-th receiving node, $\mathbf{s}_{(i-1)}^{\mathrm{F}}$ is an interference signal vector.

25. A MIMO-OFDM mesh network which operates as a broadband wireless network and is constructed by combining the MIMO mesh network according to any one of Claims 15 to 24 and the orthogonal frequency division multiplexing (OFDM),
said MIMO-OFDM mesh network **characterized in that**
the MIMO algorithm used in said MIMO mesh network is applied to each sub-carrier of the OFDM, in the *l*-th sub-carrier of the OFDM, $K^{\mathrm{F}}(l)$ stream signals are multiplexed in the forward link, and at the same time $K^{\mathrm{B}}(l)$ stream signals are multiplexed in the backward link,
a signal model of said MIMO-OFDM mesh network is formulated as follows,

$$\mathbf{y}_{i}^{\mathrm{F}}(l) = \mathbf{y}_{i(i-1)}^{\mathrm{F}}(l) + \mathbf{y}_{i(i+1)}^{\mathrm{F}}(l) + \mathbf{n}_{i}^{\mathrm{F}}(l)$$

$$\mathbf{y}_{i}^{\mathrm{B}}(l) = \mathbf{y}_{i(i-1)}^{\mathrm{B}}(l) + \mathbf{y}_{i(i+1)}^{\mathrm{B}}(l) + \mathbf{n}_{i}^{\mathrm{B}}(l)$$

where $\mathbf{y}_i^F(l) \in C^{K^F(l)}$ is a receiving signal vector of the forward link of the *l*-th sub-carrier in the i-th receiving node, $\mathbf{y}_i^B(l) \in C^{K^B(l)}$ is a receiving signal vector of the backward link of the *l*-th sub-carrier in the i-th receiving node,

$$\mathbf{y}_{i(i-1)}^F(l) = \left(\mathbf{W}_i^{rF}(l)\right)^H \mathbf{H}_{i(i-1)}(l)\mathbf{W}_{(i-1)}^{tF}(l)\mathbf{s}_{(i-1)}^F(l)$$
$$+ \left(\mathbf{W}_i^{rF}(l)\right)^H \mathbf{H}_{i(i-1)}(l)\mathbf{W}_{(i-1)}^{tB}(l)\mathbf{s}_{(i-1)}^B(l)$$

$$\mathbf{y}_{i(i+1)}^F(l) = \left(\mathbf{W}_i^{rF}(l)\right)^H \mathbf{H}_{i(i+1)}(l)\mathbf{W}_{(i+1)}^{tF}(l)\mathbf{s}_{(i+1)}^F(l)$$
$$+ \left(\mathbf{W}_i^{rF}(l)\right)^H \mathbf{H}_{i(i+1)}(l)\mathbf{W}_{(i+1)}^{tB}(l)\mathbf{s}_{(i+1)}^B(l)$$

$$\mathbf{y}_{i(i-1)}^B(l) = \left(\mathbf{W}_i^{rB}(l)\right)^H \mathbf{H}_{i(i-1)}(l)\mathbf{W}_{(i-1)}^{tF}(l)\mathbf{s}_{(i-1)}^F(l)$$
$$+ \left(\mathbf{W}_i^{rB}(l)\right)^H \mathbf{H}_{i(i-1)}(l)\mathbf{W}_{(i-1)}^{tB}(l)\mathbf{s}_{(i-1)}^B(l)$$

$$\mathbf{y}_{i(i+1)}^B(l) = \left(\mathbf{W}_i^{rB}(l)\right)^H \mathbf{H}_{i(i+1)}(l)\mathbf{W}_{(i+1)}^{tF}(l)\mathbf{s}_{(i+1)}^F(l)$$
$$+ \left(\mathbf{W}_i^{rB}(l)\right)^H \mathbf{H}_{i(i+1)}(l)\mathbf{W}_{(i+1)}^{tB}(l)\mathbf{s}_{(i+1)}^B(l)$$

where $[\cdot]^H$ represents a complex conjugate transposed matrix of $[\cdot]$, $\mathbf{s}_j^F(l) \in C^{K^F(l)}$ and $\mathbf{s}_j^B(l) \in C^{K^B(l)}$ are transmitting signal vectors for the forward link and the backward link of the *l*-th sub-carrier in the j-th node, $\mathbf{H}_{ij}(l) \in C^{M \times M}$ is a channel matrix of the *l*-th sub-carrier from the j-th node to the i-th node, $\mathbf{W}_j^{tF}(l) \in C^{M \times K^F(l)}$ and $\mathbf{W}_j^{tB}(l) \in C^{M \times K^B(l)}$ are transmitting weight matrices for the forward link and the backward link of the *l*-th sub-carrier in the j-th node, $\mathbf{W}_i^{rF}(l) \in C^{M \times K^F(l)}$ and $\mathbf{W}_i^{rB}(l) \in C^{M \times K^B(l)}$ are receiving weight matrices for the forward link and the backward link of the *l*-th sub-carrier in the i-th node, $\mathbf{n}_i^F(l) \in C^{K^F(l)}$ and $\mathbf{n}_i^B(l) \in C^{K^B(l)}$ are equivalent additive noise vectors of the forward link and the backward link of the *l*-th sub-carrier that are received in the i-th node,

for said formulated signal model, the computing process algorithms of the transmitting weight matrix and the receiving weight matrix of said MIMO mesh network is applied to every sub-carrier of the OFDM.

# FIG.1

(A)

A MESH NETWORK CONSTRUCTED BY
A SINGLE FREQUENCY CHANNEL

```
← ---------  : INTERFERENCE
               SIGNAL
← ───────    : DESIRED SIGNAL
```

Tx — RECEIVING NODE #1 ← ... TRANSMITTING NODE #2 → RECEIVING NODE #3 ← ... TRANSMITTING NODE #4

TRANSMITTING NODE #0    RECEIVING NODE #1    TRANSMITTING NODE #2    RECEIVING NODE #3    TRANSMITTING NODE #4

d

INTERFERENCE DISTANCE

(B)

A MESH NETWORK CONSTRUCTED BY
TWO FREQUENCY CHANNELS

Tx — CHANNEL A → Rx    Tx — CHANNEL B → Rx    Tx

TRANSMITTING NODE #0    RECEIVING NODE #1    TRANSMITTING NODE #2    RECEIVING NODE #3    TRANSMITTING NODE #4

3d

INTERFERENCE DISTANCE

# FIG.2

INTERNET

DESTINATION (GATEWAY)

COOPERATIVE RELAY AND NETWORK CODING

COOPERATIVE SENSING

PRIMARY WIRELESS SYSTEM

SOURCE

MESH ROUTER

ADAPTIVE RADIO RESOURCES MANAGEMENT

ADAPTIVE ROUTING AND ADAPTIVE POWER CONTROL

MIMO INTERFERENCE CANCELLATION AND MULTIPLEXING OF A FORWARD LINK AND A BACKWARD LINK

EP 2 096 781 A1

FIG.3

$S_1$

$\mathbf{h}_1$

$y_1$

$\mathbf{W}^r$

$\hat{S}_1$

SECONDARY WIRELESS SYSTEM

$S_2$

$\mathbf{h}_2$

$y_M$

$\hat{S}_2$

PRIMARY WIRELESS SYSTEM
(SECONDARY WIRELESS SYSTEM)

FIG.4

$S_1$

$\mathbf{W}^t$

$\mathbf{x}_1$

$\mathbf{h}_1^T$

$y_1$

SECONDARY WIRELESS SYSTEM

$S_2$

$\mathbf{x}_M$

$\mathbf{h}_2^T$

$y_2$

PRIMARY WIRELESS SYSTEM
(SECONDARY WIRELESS SYSTEM)

# FIG.5

CONCEPTUAL VIEW OF TRANSMITTING DIRECTIVITY THAT $w^t_{10}$ FORMS

CONCEPTUAL VIEW OF TRANSMITTING DIRECTIVITY THAT $w^t_{21}$ FORMS

CONCEPTUAL VIEW OF TRANSMITTING DIRECTIVITY THAT $w^t_{32}$ FORMS

CONCEPTUAL VIEW OF TRANSMITTING DIRECTIVITY THAT $w^t_{43}$ FORMS

CONCEPTUAL VIEW OF RECEIVING DIRECTIVITY THAT $w^r_{10}$ FORMS

CONCEPTUAL VIEW OF RECEIVING DIRECTIVITY THAT $w^r_{21}$ FORMS

CONCEPTUAL VIEW OF RECEIVING DIRECTIVITY THAT $w^r_{32}$ FORMS

CONCEPTUAL VIEW OF RECEIVING DIRECTIVITY THAT $w^r_{43}$ FORMS

MIMO MULTIPLE ACCESS

MIMO BROADCAST

MIMO MULTIPLE ACCESS

Tx

Rx

Tx

Rx

Tx

FORWARD LINK

BACKWARD LINK

FORWARD LINK

BACKWARD LINK

TRANSMITTING NODE #0

RECEIVING NODE #1

TRANSMITTING NODE #2

RECEIVING NODE #3

TRANSMITTING NODE #4

3d

INTERFERENCE DISTANCE

# FIG.6

RELATION BETWEEN TRANSMITTING WEIGHT AND RECEIVING WEIGHT
IN THE MIMO MESH NETWORK OF THE PRESENT INVENTION

(A)

ZF

ORTHOGONAL
PARALLEL

$\mathbf{W}_{10}^{t}$  $\mathbf{W}_{10}^{r}$  $\mathbf{W}_{12}^{r}$  $\mathbf{W}_{12}^{t}$  $\mathbf{W}_{32}^{t}$  $\mathbf{W}_{32}^{r}$  $\mathbf{W}_{34}^{r}$  $\mathbf{W}_{34}^{t}$

$\mathbf{H}_{01}$  $\mathbf{H}_{12}$  $\mathbf{H}_{32}$  $\mathbf{H}_{43}$

NODE #0  NODE #1  NODE #2  NODE #3  NODE #4

(B)

SIC/DPC

$\mathbf{W}_{10}^{t}$  $\mathbf{W}_{10}^{r}$  $\mathbf{W}_{12}^{r}$  $\mathbf{W}_{12}^{t}$  $\mathbf{W}_{32}^{t}$  $\mathbf{W}_{32}^{r}$  $\mathbf{W}_{34}^{r}$  $\mathbf{W}_{34}^{t}$

$\mathbf{H}_{01}$  $\mathbf{H}_{12}$  $\mathbf{H}_{32}$  $\mathbf{H}_{43}$

NODE #0  NODE #1  NODE #2  NODE #3  NODE #4

EP 2 096 781 A1

FIG.7

INTERFERENCE DISTANCE $\sqrt{5}d$

TRANSMITTING NODE

RECEIVING NODE

# FIG.8

(A) SISO MESH NETWORK WITHOUT INTERFERENCE OF BACKWARD LINK

Tx        Rx        Tx

TRANSMITTING NODE #0     RECEIVING NODE #1     TRANSMITTING NODE #2

(B) SISO MESH NETWORK WITH INTERFERENCE OF BACKWARD LINK

Tx        Rx        Tx

TRANSMITTING NODE #0     RECEIVING NODE #1     TRANSMITTING NODE #2

(C) MIMO MESH NETWORK IN WHICH FB MULTIPLEXING IS PERFORMED BY ZF ALGORITHM

Tx        Rx        Tx

TRANSMITTING NODE #0     RECEIVING NODE #1     TRANSMITTING NODE #2

$w^t = [1\ 0]^T$                         $w^t = [1\ 0]^T$

(D) MIMO MESH NETWORK IN WHICH FB MULTIPLEXING IS PERFORMED BY SIC/DPC ALGORITHM

Tx        Rx        Tx

TRANSMITTING NODE #0     RECEIVING NODE #1     TRANSMITTING NODE #2

$w^t =$ THE FIRST EIGENMODE

## FIG.9

## FIG.10

**FIG.11**

**FIG.12**

# FIG.13

→ DESIRED SIGNAL      ⋯→ INTERFERENCE SIGNAL

(a) SISO MESH NETWORK (SINGLE CHANNEL)

(b) SISO MESH NETWORK (DUAL CHANNEL)

(c) SMART ANTENNA MESH NETWORK

(d) LINK BY LINK MIMO MESH NETWORK

(e) MIMO MESH NETWORK OF THE PRESENT INVENTION USING ZF ALGORITHM

(f) MIMO MESH NETWORK OF THE PRESENT INVENTION USING SIC/DPC ALGORITHM

# FIG.14

SINGLE CHANNEL

## SCENARIO (a)

| Tx No. / Rx No. | 1 | 3 | 5 | 7 |
|---|---|---|---|---|
| 2 | d | d | 3d | 5d |
| 4 | 3d | d | d | 3d |
| 6 | 5d | 3d | d | d |
| 8 | 7d | 5d | 3d | d |

DUAL CHANNEL

## SCENARIO (b)

| CHANNEL No. | | A | B | A | B |
|---|---|---|---|---|---|
| CHANNEL No. | Tx No. / Rx No. | 1 | 3 | 5 | 7 |
| A | 2 | d | | 3d | |
| B | 4 | | d | | 3d |
| A | 6 | 5d | | d | |
| B | 8 | | 5d | | d |

## SCENARIO (c)

| Tx No. / Rx No. | 1 | 3 | 5 | 7 |
|---|---|---|---|---|
| 2 | d | | 3d | 5d |
| 4 | 3d | d | | 3d |
| 6 | 5d | 3d | d | |
| 8 | 7d | 5d | 3d | d |

## SCENARIO (d)

| CHANNEL No. | | A | B | A | B |
|---|---|---|---|---|---|
| CHANNEL No. | Tx No. / Rx No. | 1 | 3 | 5 | 7 |
| A | 2 | d / d / d | | 3d / 3d / 3d | |
| B | 4 | | d / d / d | | 3d / 3d / 3d |
| A | 6 | 5d / 5d / 5d | | d / d / d | |
| B | 8 | | 5d / 5d / 5d | | d / d / d |

Tx: TRANSMITTING NODE
Rx: RECEIVING NODE

## SCENARIOS (e) AND (f)

| Tx No. / Rx No. | 1 | 3 | 5 | 7 |
|---|---|---|---|---|
| 2 | d | d | 3d | 5d |
| 4 | 3d | d | d | 3d |
| 6 | 5d | 3d | d | d |
| 8 | 7d | 5d | 3d | d |

d :DESIRED SIGNAL OF FORWARD LINK

d :DESIRED SIGNAL OF BACKWARD LINK

FIG.15

## FIG.16

## FIG.17

$K^F$ DESIRED (STREAM) SIGNALS IN FORWARD LINK

$K^B$ DESIRED (STREAM) SIGNALS IN BACKWARD LINK

MULTIPLE INTERFERENCE SIGNALS

MULTIPLE INTERFERENCE SIGNALS

## FIG.18

$K^F$ DESIRED (STREAM) SIGNALS IN FORWARD LINK

$K^B$ DESIRED (STREAM) SIGNALS IN BACKWARD LINK

MULTIPLE INTERFERENCE SIGNALS

MULTIPLE INTERFERENCE SIGNALS

WEIGHT ORTHOGONAL TO INTERFERENCE SIGNAL

# FIG.19

<table>
<tr><td colspan="2"><strong>INTERNATIONAL SEARCH REPORT</strong></td><td>International application No.<br>PCT/JP2007/072998</td></tr>
</table>

| A. CLASSIFICATION OF SUBJECT MATTER |
|---|
| *H04J15/00*(2006.01)i, *H04B7/04*(2006.01)i, *H04B7/10*(2006.01)i, *H04B7/26* (2006.01)i, *H04L12/28*(2006.01)i |

According to International Patent Classification (IPC) or to both national classification and IPC

| B. FIELDS SEARCHED |
|---|
| Minimum documentation searched (classification system followed by classification symbols)<br>H04J15/00, H04B7/04, H04B7/10, H04B7/26, H04L12/28 |

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
IEEE

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2001-128234 A  (TRW Inc.),<br>11 May, 2001 (11.05.01),<br>Full text; all drawings<br>& JP 3502601 B2       & US 6845087 B1<br>& EP 1085682 A2 | 1<br>2-25 |
| Y<br>A | Masashi NODA, Tanza Kan, Daoguen Jun, Fumie ONO, Kei SAKAGUCHI, Kiyomichi ARAKI, "Jitsu Denpan Data o Mochiita Multi-user MIMO System no Tokusei Hyoka", IEICE Technical Report, 12 October, 2006 (12.10.06), Vol.106, No.305, pages 43 to 48, RCS2006-140 | 1<br>2-25 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>17 December, 2007 (17.12.07) | Date of mailing of the international search report<br>15 January, 2008 (15.01.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/072998

C (Continuation).    DOCUMENTS CONSIDERED TO BE RELEVANT

| Category* | Citation of document, with indication, where appropriate, of the relevant passages | Relevant to claim No. |
|---|---|---|
| P,X | Kei SAKAGUCHI, Takeo FUJII, Fumie ONO, Kenta UMEBAYASHI, "Cognitive MIMO Mesh Network: MIMO Gijutsu o Mochiita Kukan Shuhasu Kyoyo no Tameno Kiso Kento", IEICE Technical Report, Vol.106, No.395, 22 November, 2006 (22.11.06), pages 11 to 18, SR2006-43 | 1-6 |
| P,X | Sakaguchi, Kei Ono, Fumie, Multiple Access Interference Cancellation and Link Multiplexing for MIMO Mesh Network, in: Computer Communications and Networks, 2007. ICCCN 2007. Proceedings of 16th International Conference on, 2007.08.16, On page(s): 1028-1033 | 1-25 |
| A | JP 2002-320256 A  (KDDI Research & Development Laboratories, Inc.), 31 October, 2002 (31.10.02), Fig. 6; Par. Nos. [0019] to [0027] & JP 3883040 B2 | 1-25 |
| A | JP 2002-111571 A  (Nippon Telegraph And Telephone Corp.), 12 April, 2002 (12.04.02), Fig. 11 & JP 3596452 B2 | 1-25 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I.F. Akyildiz ; X. Wang.** A survey on wireless mesh networks. *IEEE Commu. Mag.,* 2005, vol. 43 (9), 523-530
- **K. Yamamoto ; S. Yoshida.** Tradeoff between area spectral efficiency and end-to-end throughput in rate-adaptive multihop radio networks. *IEICE Trans. Commu.,* 2005, vol. E88-B (9), 3532-3540
- **J. Mitra III ; G.Q. Maguire JR.** Cognitive radio: making software radios more personal. *IEEE Personal Commu.,* August 1999, 13-18
- **S. Haykin.** Cognitive radio: brain-empowered wireless communications. *IEEE J. Slect. Areas. Commun.,* 2005, vol. 23 (2), 201-220
- **M. Noda ; G.K. Tran ; N.D. Dao ; F. Ono ; K. Sakaguchi ; K. Araki.** Performance analysis of multi-user MIMO system by using indoor wideband MIMO channel measurement data. *IEICE Tech. Rep.,* October 2006, vol. RCS2006-

- **G.J. Foschini.** Layered space-time architecture for wireless communication in a fading environment when using multi-element antennas. *Bell Labs Tech. J.,* 1996, vol. 1 (2), 41-59
- **M. Costa.** Writing on dirty paper. *IEEE Trans. Inf. Theory,* 1983, vol. 29 (3), 439-441
- **R.D. Wesel ; J.M. Cioffi.** Achievable rates for Tomlinson-Harashima precoding. *IEEE Trans. Infor. Theory,* March 1998, vol. 44 (2), 824-830
- **U. Erez ; S.T. Brink.** A Close-to-Capacity Dirty Paper Coding Scheme. *IEEE Trans. Infor. Theory,* October 2005, vol. 51 (10), 3417-3432
- **I.E. Telatar.** Capacity of multi-antenna Gaussain channels. *Euro. Trans. Telecommun.,* 1999, vol. 1 (6), 585-595
- **A. Paulraj ; R. Nabar ; D. Gore.** Introduction to Space-Time Wireless Communications. Cambridge University Press, 2003